(19) Europäisches Patentamt / European Patent Office / Office européen des brevets

(11) **EP 4 686 199 A1**

(12) **EUROPEAN PATENT APPLICATION**
published in accordance with Art. 153(4) EPC

(43) Date of publication:
**28.01.2026 Bulletin 2026/05**

(21) Application number: **23928046.4**

(22) Date of filing: **22.03.2023**

(51) International Patent Classification (IPC):
**H04N 19/12** (2014.01)     **H04N 19/117** (2014.01)

(52) Cooperative Patent Classification (CPC):
**H04N 19/117; H04N 19/12**

(86) International application number:
**PCT/CN2023/083171**

(87) International publication number:
**WO 2024/192733 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Luhang**
**Dongguan, Guangdong 523860 (CN)**

(74) Representative: **RGTH**
**Patentanwälte PartGmbB**
**Neuer Wall 10**
**20354 Hamburg (DE)**

(54) **VIDEO CODING METHOD AND APPARATUS, VIDEO DECODING METHOD AND APPARATUS, DEVICES, SYSTEM, AND STORAGE MEDIUM**

(57)     The present application provides a video coding method and apparatus, a video decoding method and apparatus, devices, a system, and a storage medium. The method comprises: when predicting the current block, determining a reference area and an interpolation filter of the current block, and determining a prediction block of the current block on the basis of the reference area and the interpolation filter; determining a prediction mode corresponding to the prediction block, so as to determine, on the basis of the prediction mode, a transformation kernel corresponding to the current block; and using the transformation kernel to perform inverse transformation on a transformation coefficient of the current block to obtain a residual block of the current block, and obtaining a reconstruction value of the current block on the basis of the residual block and the prediction block of the current block. According to the present application, if the current block is predicted by using an interpolation filtering prediction method, a transformation kernel corresponding to the current block is determined by determining a conventional prediction mode corresponding to the prediction block, thereby improving the determination accuracy of the transformation kernel, and improving the video coding and decoding effects of the current block.

Determine a reference region of a current block and an interpolation filter of the current block, and determine a prediction block of the current block based on the reference region and the interpolation filter — S101

Determine an intra prediction mode corresponding to the prediction block, and determine a transform kernel corresponding to the current block based on the intra prediction mode corresponding to the prediction block — S102

Perform inverse transform on transform coefficients of the current block based on the transform kernel corresponding to the current block, to obtain a residual block of the current block, and obtain a reconstructed block of the current block based on the prediction block of the current block and the residual block of the current block — S103

FIG. 10

**Description**

**TECHNICAL FIELD**

The present disclosure relates to the field of video encoding and decoding technology, and in particular to, a video encoding method and apparatus, a video decoding method and apparatus, a device, a system and a storage medium.

**BACKGROUND**

Digital video technology may be applied to a variety of video apparatuses, such as digital televisions, smartphones, computers, electronic readers, or video players. With the development of video technology, the amount of data included in video data is large. In order to facilitate transmission of the video data, the video apparatuses implement video compression technology to enable more efficient transmission or storage of the video data.

There is temporal or spatial redundancy in the video, and the redundancy in the video may be eliminate or reduce through prediction to improve compression efficiency. In order to improve prediction effect, the present disclosure provides an interpolation filtering prediction method.

**SUMMARY**

Embodiments of the present disclosure provide a video encoding method and apparatus, a video decoding method and apparatus, a device, a system, and a storage medium, which may improve prediction effect of a current block and improve coding performance.

In a first aspect, the present disclosure provides a video decoding method, which is applied to a decoder and includes:

determining a reference region of a current block and an interpolation filter of the current block, and determining a prediction block of the current block based on the reference region and the interpolation filter;

determining an intra prediction mode corresponding to the prediction block, and determining a transform kernel corresponding to the current block based on the intra prediction mode corresponding to the prediction block; and

performing inverse transform on transform coefficients of the current block based on the transform kernel corresponding to the current block to obtain a residual block of the current block, and obtaining a reconstructed block of the current block based on the prediction block of the current block and the residual block of the current block.

In a second aspect, the embodiments of the present disclosure provide a video encoding method, which is applied to an encoder and includes:

determining a reference region of a current block and an interpolation filter of the current block, and determining a prediction block of the current block based on the reference region and the interpolation filter;

determining an intra prediction mode corresponding to the prediction block, and determining a transform kernel corresponding to the current block based on the intra prediction mode corresponding to the prediction block; and

transforming a residual block of the current block based on the transform kernel corresponding to the current block to obtain transform coefficients of the current block, and performing encoding based on the deformation coefficients of the current block to obtain a bitstream.

In a third aspect, the present disclosure provides a video decoding apparatus, configured to perform the method in the first aspect or various implementations thereof. Specifically, the apparatus includes functional units configured to perform the method in the first aspect or various implementations thereof.

In a fourth aspect, the present disclosure provides a video encoding apparatus, configured to perform the method in the second aspect or various implementations thereof. Specifically, the apparatus includes functional units configured to perform the method in the second aspect or various implementations thereof.

In a fifth aspect, a video decoder is provided, which includes a processor and a memory. The memory is configured to store a computer program, and the processor is configured to call and run the computer program stored in the memory, to perform the method in the first aspect or various implementations thereof.

In a sixth aspect, a video encoder is provided, which includes a processor and a memory. The memory is configured to store a computer program, and the processor is configured to call and run the computer program stored in the memory, to perform the method in the second aspect or various implementations thereof.

In a seventh aspect, a video coding system is provided, which includes a video encoder and a video decoder. The video decoder is configured to perform the method in the first aspect or various implementations thereof, and the video encoder is configured to perform the method in the second aspect or various implementations thereof.

In an eighth aspect, a chip is provided, which is configured to implement the method in any one of the first aspect and the second aspect or various implementations thereof. Specifically, the chip includes a processor. The processor is configured to call and run a computer program from a memory, to cause a device equipped with the chip to perform the method according to any one of the first aspect and the second aspect or various implementations thereof.

In a ninth aspect, a computer-readable storage medium is provided, which is configured to store a computer program. The computer program causes a computer to perform the method according to any one of the first aspect and the second aspect or various implementations thereof.

In a tenth aspect, a computer program product is provided, which includes computer program instructions. The computer program instructions cause a computer to perform the method in any one of the first aspect and the second aspect or various implementations thereof.

In an eleventh aspect, a computer program is provided. The computer program, when executed on a computer, causes the computer to perform the method in any one of the first aspect and the second aspect or various implementations thereof.

Based on the above technical solutions, the present disclosure provides an interpolation filtering prediction method. When the current block is predicted, the reference region of the current block and the interpolation filter of the current block are first determined, and the prediction block of the current block is determined based on the reference region and the interpolation filter. Then, the prediction mode corresponding to the prediction block is determined, and the transform kernel corresponding to the current block is determined based on the prediction mode. The inverse transform is performed on the transform coefficients of the current block using the transform kernel to obtain the residual block of the current block, and reconstructed values of the current block are obtained based on the residual block of the current block and the prediction block of the current block. That is, in the embodiments of the present disclosure, in response to the current block being predicted using the interpolation filtering prediction method, the traditional prediction mode corresponding to the prediction block is determined, and the transform kernel corresponding to the current block is determined, so that the determined transform kernel is more in line with characteristics of the current block, which improves accuracy of determining the transform kernel. In a case where the reconstructed values of the current block are determined using the accurately determined transform kernel, accuracy of determining the reconstructed values may be improved, and accuracy of decoding the current block may be further improved. In addition, in the embodiments of the present disclosure, in a case where the transform kernel of the current block is determined using the traditional prediction mode corresponding to the prediction block, there is no need to indicate the transform kernel separately, which saves codewords and further improves the video coding effect.

## BRIEF DESCRIPTION OF THE DRAWINGS

FIG. 1 is a schematic block diagram of a video coding system involved in embodiments of the present disclosure.

FIG. 2 is a schematic block diagram of a video encoder involved in embodiments of the present disclosure.

FIG. 3 is a schematic block diagram of a video decoder involved in embodiments of the present disclosure.

FIG. 4A is a schematic diagram of intra prediction.

FIG. 4B is a schematic diagram of intra prediction.

FIGS. 5A-5I are schematic diagrams of intra prediction.

FIG. 6 is a schematic diagram of intra prediction modes.

FIG. 7 is a schematic diagram of intra prediction modes.

FIG. 8 is a schematic diagram of intra prediction modes.

FIG. 9 is a schematic diagram of a principle of a convolutional cross component model (CCCM).

FIG. 10 is a schematic flowchart of a video decoding method provided in embodiments of the present disclosure.

FIG. 11 is a schematic diagram of a position of a current block in a current picture.

FIG. 12 is a schematic diagram of reconstructed regions.

FIGS. 13A to 13C are schematic diagrams of several reference regions.

FIGS. 14A to 14G are schematic diagrams of shapes of several interpolation filters.

FIG. 15 is a schematic diagram of shapes of several interpolation filters involved in embodiments of the present disclosure.

FIG. 16 is a schematic diagram of shapes of several interpolation filters involved in embodiments of the present disclosure.

FIG. 17 is a schematic diagram of shapes of several interpolation filters involved in embodiments of the present disclosure.

FIG. 18A is a schematic diagram of shapes of several interpolation filter involved in embodiments of the present disclosure.

FIG. 18B is a schematic diagram of shapes of several interpolation filters involved in embodiments of the present disclosure.

FIG. 19 is a schematic diagram of shapes of several interpolation filters involved in embodiments of the present disclosure.

FIG. 20 is a schematic diagram of a first reconstructed region.

FIG. 21 is a schematic diagram illustrating movement of interpolation filters of different shapes within different types of reference regions.

FIG. 22 is a schematic diagram illustrating interpolation prediction on a current block using an interpolation filter.

FIG. 23 is a schematic diagram of an intra prediction mode.

FIG. 24 is a schematic diagram illustrating determination of a horizontal gradient and a vertical gradient.

FIG. 25 is a histogram of gradient magnitude values.

FIG. 26 is a schematic flowchart of a prediction method provided in an embodiment of the present disclosure.

FIG. 27 is a schematic flowchart illustrating determination of a prediction mode involved in embodiments of the present disclosure.

FIG. 28 is a schematic block diagram of a video decoding apparatus provided in embodiments of the present disclosure.

FIG. 29 is a schematic block diagram of a video encoding apparatus provided in embodiments of the present disclosure.

FIG. 30 is a schematic block diagram of an electronic device provided in embodiments of the present disclosure.

FIG. 31 is a schematic block diagram of a video coding system provided in embodiments of the present disclosure.

## DETAILED DESCRIPTION

The present disclosure may be applied to fields such as picture coding, video coding, hardware video coding, dedicated circuit video coding, and real-time video coding. For example, solutions of the present disclosure may be with reference to audio video coding standards (AVSs), such as H.264/audio video coding (AVC) standard, H.265/high efficiency video coding (HEVC) standard, and H.266/versatile video coding (VVC) standard. Alternatively, the solutions of the present disclosure may be operated in conjunction with other dedicated or industrial standards, and the standards include ITU-TH.261, ISO/IECMPEG-1Visual, ITU-TH.262 or ISO/IECMPEG-2Visual, ITU-TH.263, ISO/IECMPEG-4Visual, ITU-TH.264 (also referred to as ISO/IECMPEG-4AVC), which includes scalable video coding (SVC) and multi-view video coding (MVC) extensions. It should be understood that, the technology of the present disclosure is not limited to any particular coding standard or technology.

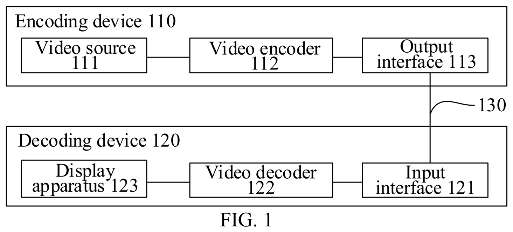

For ease of understanding, a video coding system involved in embodiments of the present disclosure is first described with reference to FIG. 1.

FIG. 1 is a schematic block diagram of a video coding system involved in the embodiments of the present disclosure. It should be noted that FIG. 1 is only an example, and the video coding system of the embodiments of the present disclosure include but is not limited to that illustrated in FIG. 1. As illustrated in FIG. 1, the video coding system 100 includes an encoding device 110 and a decoding device 120. The encoding device is configured to encode (which may be understood as compress) video data to generate a bitstream, and transmit the bitstream to the decoding device. The decoding device decodes the bitstream generated by the encoding device to obtain decoded video data.

The encoding device 110 of the embodiments of the present disclosure may be understood as a device with a video encoding function, and the decoding device 120 may be understood as a device with a video decoding function. That is, in the embodiments of the present disclosure, the encoding device 110 and the decoding device 120 include a wider range of apparatuses, such as a smartphone, a desktop computer, a mobile computing apparatus, a notebook (e.g., a laptop) computer, a tablet computer, a set-top box, a television, a camera, a display apparatus, a digital media player, a video game console, and an in-vehicle computer.

In some embodiments, the encoding device 110 may transmit the encoded video data (e.g., a bitstream) to the decoding device 120 via a channel 130. The channel 130 may include one or more media and/or apparatuses capable of transmitting encoded video data from the encoding device 110 to the decoding device 120.

In an instance, the channel 130 includes one or more communication media that enable the encoding device 110 to transmit encoded video data directly to the decoding device 120 in real-time. In this instance, the encoding device 110 may modulate the encoded video data based on a communication standard and transmit modulated video data to the decoding device 120. The communication media include wireless communication media, such as a radio frequency spectrum. Optionally, the communication media may further include wired communication media, such as one or more physical transmission lines.

In another instance, the channel 130 includes a storage medium, which may store the video data encoded by the encoding device 110. The storage medium includes a variety of locally accessible data storage media, such as an optical disk, a DVD, a flash memory. In this instance, the decoding device 120 may obtain the encoded video data from the storage medium.

In yet another instance, the channel 130 may include a storage server, which may store the video data encoded by the encoding device 110. In this instance, the decoding device 120 may download the stored encoded video data from the storage server. Optionally, the storage server may store the encoded video data and transmit the encoded video data to the decoding device 120, such as a web server (e.g., for a website), or a file transfer protocol (FTP) server.

In some embodiments, the encoding device 110 includes a video encoder 112 and an output interface 113. The output interface 113 may include a modulator/demodulator (a modem) and/or a transmitter.

In some embodiments, the encoding device 110 may further include a video source 111 in addition to the video encoder 112 and the input interface 113.

The video source 111 may include at least one of a video collecting apparatus (e.g., a video camera), a video archive, a video input interface, or a computer graphic system. The video input interface is used to receive video data from a video content provider, and the computer graphic system is used to generate video data.

The video encoder 112 encodes the video data from the video source 111 to generate a bitstream. The video data may include one or more pictures or sequences of pictures. The bitstream includes encoding information of the pictures or the sequences of pictures in the form of a bitstream. The encoding information may include encoded picture data and associated data. The associated data may include a sequence parameter set (which is abbreviated as SPS), a picture parameter set (which is abbreviated as PPS) and other syntax structures. The SPS may include parameters applied to one or more sequences. The PPS may include parameters applied to one or more pictures. A syntax structure is a set of zero or more syntax elements arranged in a specified order in the bitstream.

The video encoder 112 transmits the encoded video data directly to the decoding device 120 via the output interface 113. The encoded video data may also be stored in the storage medium or the storage server for subsequent reading by the decoding device 120.

In some embodiments, the decoding device 120 includes an input interface 121 and a video decoder 122.

In some embodiments, the decoding device 120 may include a display apparatus 123 in addition to the input interface 121 and the video decoder 122.

The input interface 121 includes a receiver and/or a modem. The input interface 121 may receive the encoded video data via the channel 130.

The video decoder 122 is configured to decode the encoded video data to obtain decoded video data, and transmit the decoded video data to the display apparatus 123.

The display apparatus 123 displays the decoded video data. The display apparatus 123 may be integrated with or external to the decoding device 120. The display apparatus 123 may include various display apparatuses, such as a liquid crystal display (LCD), a plasma display, an organic light emitting diode (OLED) display, or other types of display apparatuses.

In addition, FIG. 1 is only an instance, and the technical solution of the embodiments of the present disclosure is not limited to FIG. 1. For example, the technology of the present disclosure may also be applied to unilateral video encoding or unilateral video decoding.

A video encoding framework involved in the embodiments of the present disclosure will be described below.

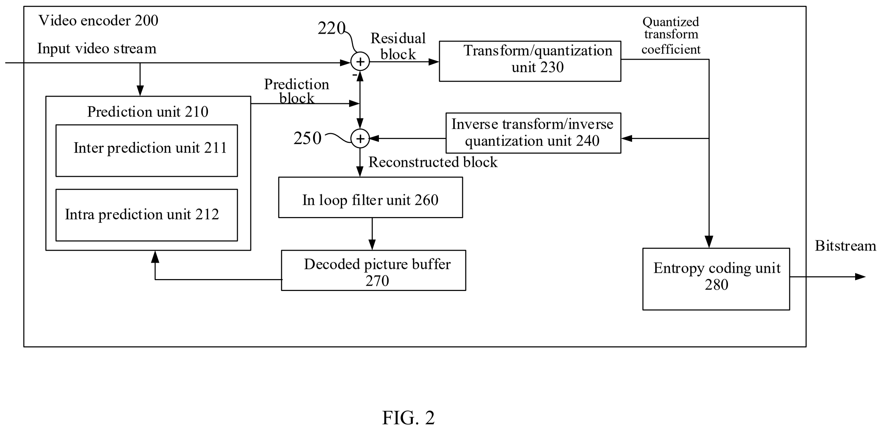

FIG. 2 is a schematic block diagram of a video encoder involved in the embodiments of the present disclosure. It should be understood that the video encoder 200 may be configured to perform lossy compression on a picture, or may be configured to perform lossless compression on a picture. The lossless compression may be visually lossless compression or mathematically lossless compression.

The video encoder 200 may be applied to picture data in a luma-chroma (YCbCr, YUV) format. For example, a YUV ratio may be 4:2:0, 4:2:2 or 4:4:4, where Y represents luma, Cb (U) represents blue chroma, Cr (V) represents red chroma, and U and V represent chroma for describing color and saturation. For example, in a color format, 4:2:0 represents that there are 4 luma components and 2 chroma components (YYYYCbCr) for every 4 samples. 4:2:2 represents that there are 4 luma components and 4 chroma components (YYYYCbCrCbCr) for every 4 samples. 4:4:4 represents full sample display (YYYYCbCrCbCrCbCrCbCr).

For example, the video encoder 200 reads video data, and for each picture in the video data, partitions one picture into several coding tree units (CTUs). In some examples, a CTB may be referred to as a "tree block", "largest coding unit (LCU)" or "coding tree block (CTB)". Each CTU may be associated with sample blocks of equal size within the picture. Each sample may correspond to one luma (luminance) sample and two chroma (chrominance) samples. Thus, each CTU may be associated with one luma sample block and two chroma sample blocks. A size of one CTU is, for example, 128×128, 64×64, or 32×32. One CTU may be further partitioned into several coding units (CUs) for encoding. The CU may be a rectangular block or a square block. The CU may be further partitioned into prediction units (PUs) and transform units (TUs), enabling separation of encoding, prediction and transform and more flexible processing. In an example, The CTU is partitioned into CUs in a quadtree manner, and the CU is partitioned into TUs and PUs in the quadtree manner.

The video encoder and the video decoder may support various PU sizes. It is assumed that a size of a specific CU is 2N×2N, the video encoder and the video decoder may support a PU size of 2N×2N or N×N for intra prediction, and support symmetric PUs of 2N×2N, 2N×N, N×2N, N×N or similar sizes for inter prediction. The video encoder and the video decoder may further support asymmetric PUs of 2N×nU, 2N×nD, nL×2N, and nR×2N for inter prediction.

In some embodiments, as illustrated in FIG. 2, the video encoder 200 may include: a prediction unit 210, a residual unit 220, a transform/quantization unit 230, an inverse transform/quantization unit 240, a reconstructed unit 250, an in-loop filtering unit 260, a decoded picture buffer 270 and an entropy encoding unit 280. It should be noted that the video encoder 200 may include more, fewer or different functional components.

Optionally, in the present disclosure, a current block may be referred to as a current coding unit (CU), a current prediction unit (PU), or the like. A prediction block may also be referred to as a prediction picture block or a picture prediction block. A reconstructed picture block may also be referred to as a reconstructed block or a picture reconstructed picture block.

In some embodiments, the prediction unit 210 includes an inter prediction unit 211 and an intra prediction unit 212. Since there is a strong correlation between neighboring samples in a frame of a video, an intra prediction method is used in the video coding technology to eliminate spatial redundancy between the neighboring samples. Since there is a strong similarity between neighboring frames in the video, an inter prediction method is used in the video coding technology to eliminate temporal redundancy between the neighboring frames, thereby improving encoding efficiency.

The inter prediction unit 211 may be used for inter prediction, which may include motion estimation and motion compensation. The inter prediction may refer to picture information of different frames. In the inter prediction, the motion information is used to find a reference block from a reference frame, and a prediction block is generated based on the reference block to eliminate temporal redundancy. Frames used for the inter prediction may include a P frame and/or a B frame. The P frame refers to a forward prediction frame, and the B frame refers to a bi-prediction frame. The inter prediction uses the motion information to find the reference block from the reference frame, and generates the prediction block based on the reference block. The motion information includes a reference frame list where the reference frame is located, a reference frame index, and a motion vector. The motion vector may be an integer sample or a fractional sample. In response to the motion vector being the fractional sample, it is necessary to use interpolation filtering in the reference frame to obtain a block of the required fractional sample. Here, the block of the integer sample or fractional sample in the reference frame, which is found according to the motion vector, is called the reference block. The reference block is used as a prediction block directly in some technologies, while a prediction block is generated by processing the reference block in some technologies. The prediction block being generated by processing the reference block may also be understood as using the reference block as a prediction block and then processing the prediction block to generate a new prediction block.

The intra prediction unit 212 predicts sample information of a current coding picture block by referring merely to information of a same picture, thereby eliminating spatial redundancy. A frame used for intra prediction may be an I frame.

There are several prediction modes for intra prediction. Taking H series of international digital video coding standards as an example, H.264/AVC standard has 8 angle prediction modes and 1 non-angle prediction mode, and H.265/HEVC standard is expanded to 33 angle prediction modes and 2 non-angle prediction modes. The intra prediction modes used in HEVC include a planar mode, a direct current (DC) mode and 33 angle modes, totaling 35 prediction modes. The intra modes used in VVC are a planar mode, a DC mode, and 65 angle modes, totaling 67 prediction modes.

It should be noted that, with the addition of angle modes, the intra prediction becomes more accurate and more in line with the requirements of the evolution of high-definition and ultra-high-definition digital videos.

The residual unit 220 may generate a residual block of a CU based on a sample block of the CU and a prediction block of a PU of the CU. For example, the residual unit 220 may generate a residual block of the CU, so that each sample of the residual block has a value equal to a difference between a sample of the sample block of the CU and a corresponding sample of the prediction block of the PU of the CU.

The transform/quantization unit 230 may quantize transform coefficients. The transform/quantization unit 230 may quantize transform coefficients associated with a TU of the CU based on a quantization parameter (QP) value associated with the CU. The video encoder 200 may adjust a quantization degree applied to the transform coefficients associated with the CU by adjusting the QP value associated with the CU.

The inverse transform/quantization unit 240 may apply inverse quantization and inverse transform to quantized transform coefficients, to reconstruct a residual block from the quantized transform coefficients.

The reconstructed unit 250 may add a sample from the reconstructed residual block to a corresponding sample of one or more prediction blocks generated by the prediction unit 210, to generate a reconstructed picture block associated with the TU. By reconstructing the sample block of each TU of a CU in this method, the video encoder 200 may reconstruct the sample block of the CU.

The in-loop filtering unit 260 is used to process the inverse transformed and inverse quantized samples to compensate for distortion information, thereby providing a better reference for subsequent encoding of samples. For example, a deblocking filter operation may be performed to reduce blocking effect of sample blocks associated with the CU.

In some embodiments, the in-loop filtering unit 260 includes a deblocking filtering unit and a sample adaptive offset/adaptive loop filtering (SAO/ALF) unit. The deblocking filtering unit is used for removing square effect, and the SAO/ALF unit is used for removing ringing effect.

The decoded picture buffer 270 may store the reconstructed sample block. The inter prediction unit 211 may use a reference picture including the reconstructed sample block to perform inter prediction on a PU of another picture. In addition, the intra prediction unit 212 may use the reconstructed sample block in the decoded picture buffer 270 to perform the intra prediction on other PUs in a same picture as the CU.

The entropy encoding unit 280 may receive quantized transform coefficients from the transform/quantization unit 230. The entropy encoding unit 280 may perform one or more entropy encoding operations on the quantized transform coefficients to generate entropy-encoded data.

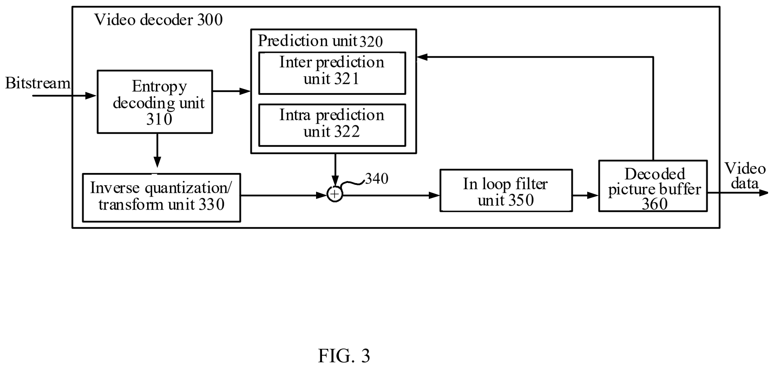

FIG. 3 is a schematic block diagram of a video decoder involved in the embodiments of the present disclosure.

As illustrated in FIG. 3, the video decoder 300 includes an entropy decoding unit 310, a prediction unit 320, an inverse quantization/transform unit 330, a reconstructed unit 340, an in-loop filtering unit 350, and a decoded picture buffer 360. It should be noted that the video decoder 300 may include more, fewer or different functional components.

The video decoder 300 may receive a bitstream. The entropy decoding unit 310 may parse the bitstream to extract syntax elements from the bitstream. As a portion of parsing the bitstream, the entropy decoding unit 310 may parse the entropy-encoded syntax elements in the bitstream. The prediction unit 320, the inverse quantization/transform unit 330, the reconstructed unit 340, and the in-loop filtering unit 350 may decode video data according to the syntax elements extracted from the bitstream to generate decoded video data.

In some embodiments, the prediction unit 320 includes an intra prediction unit 322 and an inter prediction unit 321.

The intra prediction unit 322 may perform intra prediction to generate a prediction block of a PU. The intra prediction unit 322 may use an intra prediction mode to generate the prediction block of the PU based on sample blocks of spatially neighboring PUs. The intra prediction unit 322 may further determine the intra prediction mode for the PU according to one or more syntax elements parsed from the bitstream.

The inter prediction unit 321 may construct a first reference picture list (list 0) and a second reference picture list (list 1) according to syntax elements parsed from the bitstream. Furthermore, in response to the PU being encoded using inter prediction, the entropy decoding unit 310 may parse motion information of the PU. The inter prediction unit 321 may determine one or more reference blocks of the PU according to the motion information of the PU. The inter prediction unit 321 may generate a prediction block of the PU based on one or more reference blocks of the PU.

The inverse quantization/transform unit 330 may inverse quantize (i.e., dequantize) transform coefficients associated with a TU. The inverse quantization/transform unit 330 may use QP values associated with the CU of the TU to determine the quantization degree.

After inverse quantization is performed on the transform coefficients, the inverse quantization/transform unit 330 may apply one or more inverse transforms to the inverse quantized transform coefficients, to generate a residual block associated with the TU.

The reconstructed unit 340 uses the residual block associated with the TU of the CU and a prediction block of the PU of the CU to reconstruct a sample block of the CU. For example, the reconstructed unit 340 may add a sample of the residual block to a corresponding sample of the prediction block to reconstruct the sample block of the CU, thereby obtaining a reconstructed picture block.

The in-loop filtering unit 350 may perform a deblocking filtering operation to reduce blocking effect of the sample blocks associated with the CU.

The video decoder 300 may store the reconstructed picture of the CU in the decoded picture buffer 360. The video decoder 300 may use the reconstructed picture in the decoded picture buffer 360 as a reference picture for subsequent prediction, or transmit the reconstructed picture to a display apparatus for presentation.

The basic process of video coding is as follows. At an encoding side, a picture is partitioned into blocks, and for a current block, the prediction unit 210 generates a prediction block of the current block using intra prediction or inter prediction. The residual unit 220 may calculate a residual block based on the prediction block and an original block of the current block, i.e., a difference between the prediction block and the original block of the current block. The residual block may also be referred to as residual information. Information that is not sensitive to the human eye in the residual block can be removed through processes of being transformed, quantized and the like by the transform/quantization unit 230 to eliminate visual redundancy. Optionally, the residual block that has not been transformed and quantized by the transform/quantization unit 230 may be referred to as a time-domain residual block, and the time-domain residual block after being transformed and quantized by the transform/quantization unit 230 may be referred to as a frequency residual block or a frequency-domain residual block. After receiving the quantized transform coefficients output by the transform/quantization unit 230, the entropy coding unit 280 may perform entropy coding on the quantized transform coefficients to output a bitstream. For example, the entropy coding unit 280 may eliminate character redundancy according to a target context model and probability information of a binary bitstream.

At a decoding side, the entropy decoding unit 310 may parse the bitstream to obtain prediction information, a quantization coefficient matrix, etc., of the current block, and the prediction unit 320 uses intra prediction or inter prediction for the current block based on the prediction information to generate a prediction block of the current block. The inverse quantization/transform unit 330 performs inverse quantization and inverse transform on the quantization coefficient matrix obtained from the bitstream, to obtain a residual block. The reconstructed unit 340 adds the prediction block and the residual block, to obtain a reconstructed block. Reconstructed blocks constitute a reconstructed picture. The in-loop filtering unit 350 performs in-loop filtering on the reconstructed picture based on a picture or a block, to obtain a decoded picture. The encoding side also needs to perform operations similar to those of the decoding side to obtain the decoded picture. The decoded picture may also be referred to as a reconstructed picture, and the reconstructed picture may be used as a reference frame of the inter prediction for subsequent pictures.

It should be noted that the block partition information, as well as mode information or parameter information for prediction, transform, quantization, entropy coding, in-loop filtering, etc. determined by the encoding side are carried in the bitstream if necessary. The decoding side determines the same block partition information, mode information or parameter information for prediction, transform, quantization, entropy coding, in-loop filtering, etc., as that of the encoding side by parsing the bitstream and performing analysis based on the existing information, thereby ensuring that the decoded picture obtained by the encoding side is the same as the decoded picture obtained by the decoding side.

The above is the basic process of the video encoder and the video decoder under the block-based hybrid coding framework. With the evolution of technology, some modules or steps of the framework or process may be optimized. The present disclosure is applicable to the basic process of the video encoder and the video decoder under the block-based hybrid encoding framework, but is not limited to the framework and procedure.

In the embodiments of the present disclosure, the current block may be a current coding unit (CU) or a current prediction unit (PU), or the like. Due to a need for parallel processing, the picture may be partitioned into slices, and the slices in the same picture may be processed in parallel. That is, there is no data dependency between them. "Frame" is a commonly used term, which may be generally understood to mean that one frame is one picture. In the present disclosure, the frame may also be replaced with a picture, a slice, or the like.

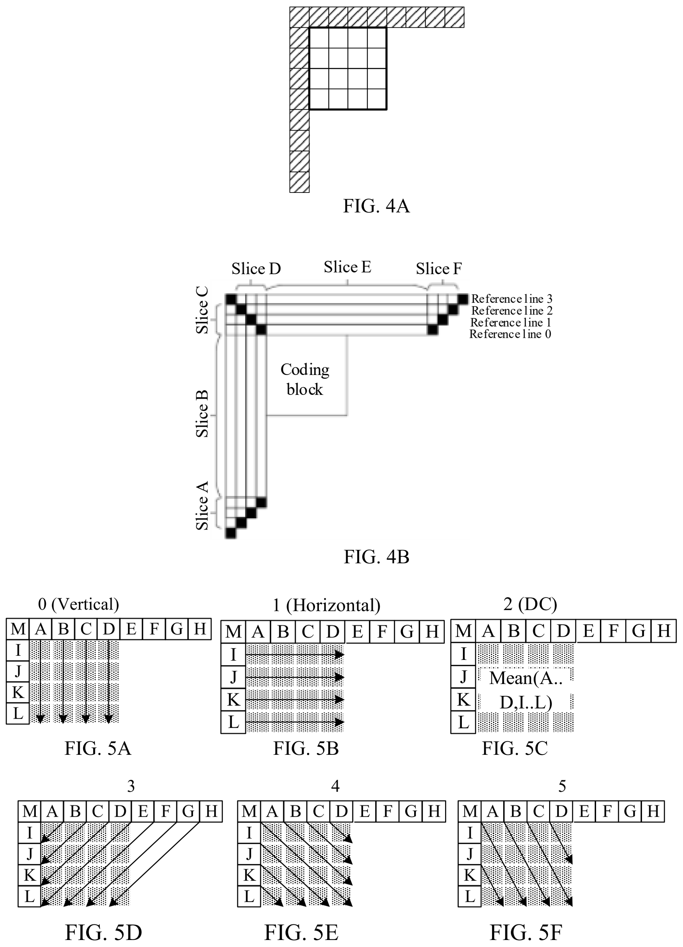

In the intra prediction, a current coding block is generally predicted with the help of a respective angle mode and non-angle mode, to obtain the prediction block. An optimal prediction mode of the current coding unit is selected based on rate-distortion information calculated according to the prediction block and the original block, and the prediction mode is transmitted to the decoding side through the bitstream. The decoding side parses the prediction mode, predicts the predicted picture of the current decoding block and superimposes residual samples that are transmitted through the bitstream, to obtain the reconstructed picture. In the intra prediction method, the current block is predicted using the reconstructed samples that have been coded around the current block as reference samples. FIG. 4A is a schematic diagram of intra prediction. As illustrated in FIG. 4A, a size of the current block is $4\times4$, and a left row samples of the current block and a top column samples of the current block are reference samples of the current block. In the intra prediction, the current block is predicted using the reference samples. The reference samples may all be available. That is, all reference samples have been coded. Alternatively, some reference samples may be unavailable. For example, in response to the current block being at a leftmost portion of the entire picture, a reference sample at the left of the current block is unavailable. Alternatively, in a case where the current block is coded, a bottom-left portion of the current block has not been coded. Therefore, a reference sample at the bottom-left portion is unavailable. In a case where the reference sample is unavailable, padding may be performed using available reference samples or certain values or methods, or no padding may be performed.

FIG. 4B is a schematic diagram of intra prediction. As illustrated in FIG. 4B, in a multiple reference line intra prediction (MRL) method, more reference samples may be used to improve coding efficiency. For example, 4 reference rows/columns are used as reference samples of the current block.

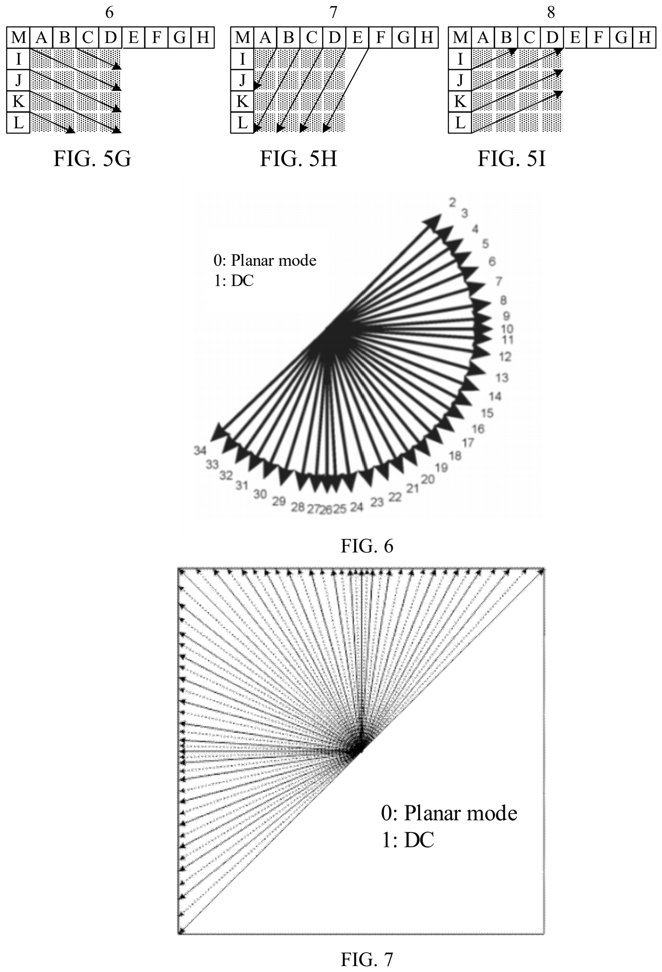

Furthermore, there are multiple prediction modes for the intra prediction. FIGS. 5A-5I are schematic diagrams of intra prediction. As illustrated in FIGS. 5A-5I, intra prediction for a $4\times4$ block in H.264 may mainly include 9 modes. Here, in mode 0 illustrated in FIG. 5A, top samples of the current block are vertically copied to the current block as prediction values. In mode 1 illustrated in FIG. 5B, left reference samples of the current block are horizontally copied to the current block as prediction values. In mode 2 illustrated in FIG. 5C, DC uses an average value of 8 points A~D and I~L as prediction values of all points. In modes 3~8 illustrated in FIGS. 5D-5I, reference samples are copied to corresponding positions of the current block at a certain angle. Because some positions of the current block cannot exactly correspond to the reference samples, it may be necessary to use a weighted average value of the reference samples, or interpolated fractional samples of the reference samples.

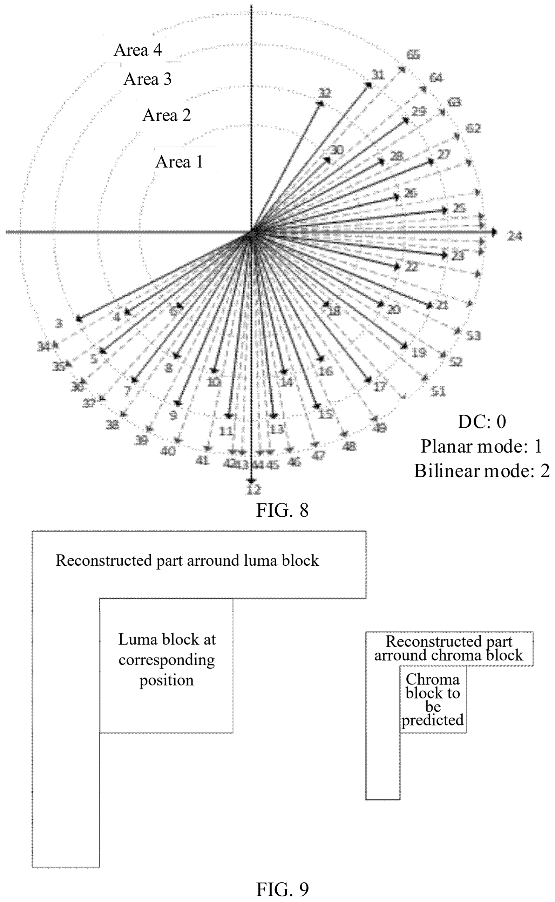

In addition, there are a plane mode, a planar mode and other modes. With the evolution of technology, and expansion of blocks, there are more and more angle prediction modes. FIG. 6 is a schematic diagram of intra prediction modes. As illustrated in FIG. 6, the intra prediction modes used in HEVC include the planar mode, the DC mode, and 33 angle modes, totaling 35 prediction modes. FIG. 7 is a schematic diagram of intra prediction modes. As illustrated in FIG. 7, the intra modes used in VVC include the planar mode, the DC mode, and 65 angle modes, totaling 67 prediction modes. FIG. 8 is a schematic diagram of intra prediction modes. As illustrated in FIG. 8, the intra prediction modes used in VS3 include the DC mode, the plane mode, a bilinear mode, a PCM mode, and 62 angle modes, totaling 66 prediction modes.

There are further some technologies to improve the prediction, such as improving the fractional sample interpolation of reference samples, filtering the predicted samples. For example, a multiple intra prediction filter (MIPF) in AVS3 uses different filters for different block sizes to generate prediction values. For samples at different positions in the same block, samples closer to the reference sample use one filter to generate prediction values, and samples farther from the reference sample use another filter to generate prediction values. The technology of filtering the predicted samples, such as an intra prediction filter (IPF) in AVS3, may use reference samples to filter the prediction values.

In some embodiments, in current video coding, an adaptive loop filter (ALF) technology is used in the in-loop filtering unit. For example, the ALF technology is used for filtering the reconstructed picture, to obtain a final decoded picture.

The ALF technology will be described below.

The ALF is one filter in the in-loop filter. The ALF is designed based on a principle of Wiener filter and is a filter designed to minimize an error between a target sample and an input sample. In the in-loop filter, the target sample represent the original picture and the input sample represent the reconstructed picture.

Before performing filtering using the ALF, the filter coefficients are first determined.

Exemplarily, the filter coefficients of the interpolation filter may be obtained by constructing a Wiener-Hopf equation as shown in formula (1) and solving the Wiener-Hopf equation.

$$\begin{bmatrix} \sum_{||\mathcal{R}||} t[r+p_0]t[r+p_0] & \cdots & \sum_{||\mathcal{R}||} t[r+p_{N-1}]t[r+p_0] \\ \vdots & \ddots & \vdots \\ \sum_{||\mathcal{R}||} t[r+p_0]t[r+p_{N-1}] & \cdots & \sum_{||\mathcal{R}||} t[r+p_{N-1}]t[r+p_{N-1}] \end{bmatrix} \begin{bmatrix} c_0 \\ \vdots \\ c_{N-1} \end{bmatrix} = \begin{bmatrix} \sum_{||\mathcal{R}||} o[r]t[r+p_0] \\ \vdots \\ \sum_{||\mathcal{R}||} o[r]t[r+p_{N-1}] \end{bmatrix} \quad (1)$$

Here, R represents a range of a current 2D picture. For example, in response to the input of the filter being a reconstructed picture, R represents a reconstructed region around the current block in the reconstructed picture. r is a position of a sample within R. Exemplarily, coordinates of a sample at the position r may be expressed as (x, y). o[r] is an original sample value of the sample at the position r, t[r] is a sample value to be filtered at the position r. Exemplarily, in response to the input of the filter being a reconstructed picture, t[r] is also called a reconstructed value of the sample at the position r in the reconstructed picture. $c = [c_0, c_1, ... , c_{N-1}]^T$ represents filter coefficients of an adaptive filter, and $\{p_0, p_1, ... , p_{N-1}\}$ represents relative position differences between N positions corresponding to the position r and the position r.

In the formula (1), except the filter coefficients of the adaptive filter $c = [c_0, c_1, ... , C_{N-1}]^T$, other data are known. Therefore, the filter coefficients of the filter may be obtained by solving the formula (1).

In an example, the filter coefficients of the filter may be obtained by solving the Wiener-Hopf equation through Cholesky decomposition of an autocorrelation coefficient matrix.

After the filter coefficients are determined based on the formula (1), a sample to be filtered is filtered through the following formula (2) to obtain a filtered sample:

$$t[r]' = \sum_{n=0}^{N-1} c_n \times t[r + p_n] \quad (2)$$

Here, t[r]' is a sample value after filtering at a position r, $p_n$ is a relative position difference between an n-th position among the N positions corresponding to the position r and the position r, and $t[r + p_n]$ represents a sample value to be filtered at a position $r + p_n$.

A convolutional cross component model (which is abbreviated as CCCM) is a process of predicting chroma samples through reconstructed samples of a luma component. Its advantage is that coefficients of the CCCM filter may be obtained from the decoder side using the reconstructed samples, so as to eliminate overhead of storing filter coefficients of the filter such as ALF in the bitstream. As illustrated in FIG. 9, the coefficients of the CCCM are obtained by calculating reconstructed samples around a current chroma block to be predicted and reconstructed samples around a luma block at a position corresponding to the chroma block.

The embodiments of the present disclosure provide the interpolation filtering prediction method. In a case where the current block is predicted, the reference region of the current block and the interpolation filter of the current block are first determined, and the prediction block of the current block is determined based on the reference region and the interpolation filter. For example, the reference region is filtered using the interpolation filter, and the filter coefficients of the filter are calculated. Interpolation filtering prediction is performed on the current block using the interpolation filter based on the determined filter coefficients, to obtain the prediction block of the current block. Then, the prediction mode corresponding to the prediction block is determined, and the transform kernel corresponding to the current block is determined based on the prediction mode. Inverse transform is performed on the transform coefficients of the current block using the transform kernel (or referred to as transform core), to obtain the residual block of the current block. The reconstructed values of the current block are obtained based on the residual block of the current block and the prediction block of the current block. That is, in the embodiments of the present disclosure, in response to the current block being predicted using the interpolation filtering prediction method, the traditional prediction mode corresponding to the prediction block is determined, and the transform kernel corresponding to the current block is determined. In this way, the determined transform kernel is more in line with characteristics of the current block, which improves accuracy of determining the transform kernel. In a case where the reconstructed values of the current block are determined using the accurately determined transform kernel, accuracy of determining the reconstructed values may be improved, and accuracy of decoding the current block may be further improved. In addition, in the embodiments of the present disclosure, in a case where the transform kernel of the current block is determined using the traditional prediction mode corresponding to the prediction block, there is no need to indicate the transform kernel separately, which saves codewords and further improves video coding effect.

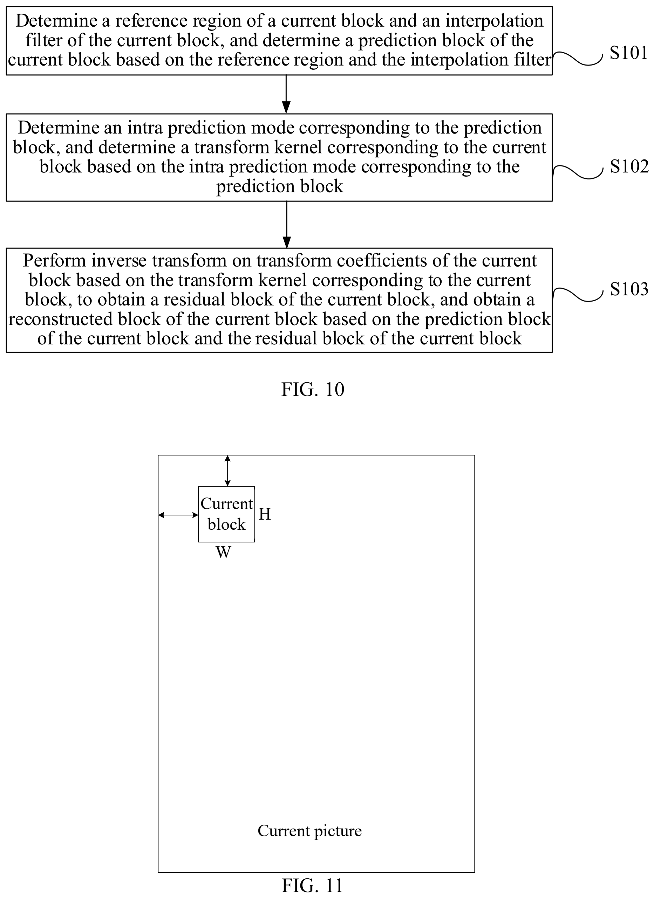

With reference to FIG. 10, a video decoding method provided in embodiments of the present disclosure will be described by taking a decoding side as an example.

FIG. 10 is a schematic flowchart of a video decoding method provided in the embodiments of the present disclosure. The embodiments of the present disclosure are applied to video decoders illustrated in FIGS. 1 and 3. As illustrated in FIG. 10, the method of the embodiments of the present disclosure includes following steps.

In S101, a reference region of a current block and an interpolation filter of the current block are determined, and a prediction block of the current block is determined based on the reference region and the interpolation filter.

In a case of decoding the current block, the decoding side decodes a bitstream to obtain quantization coefficients of the current block, performs inverse quantization on the quantization coefficients to obtain transform coefficients of the current block, and performs inverse transform on the transform coefficients to obtain residual values of the current block. Then, the decoding side determines a prediction mode of the current block, determines prediction values of the current block based on the prediction mode, and obtains reconstructed values of the current block based on the prediction values of the current block and the residual values of the current block.

In some embodiments, the current block also is a block to be predicted.

In the embodiments of the present disclosure, the decoding side first determines the prediction mode of the current block.

In some embodiments, manners in which the decoding side determines the prediction mode of the current block at least include following manners.

In manner 1, an encoding side determines the prediction mode of the current block. For example, a candidate prediction mode with a minimum cost is determined as the prediction mode of the current block from candidate prediction modes consisting of traditional prediction modes and interpolation filtering prediction modes illustrated in FIGS. 6 or 7. Then, the encoding side adds indication information of the prediction mode of the current block into a bitstream. In this way, the decoding side obtains the indication information of the prediction mode of the current block by decoding the bitstream, determines the prediction mode of the current block based on the indication information, and then predicts the current block using the intra prediction mode to obtain the prediction values of the current block.

For example, in response to a terminal device determining that the prediction mode of the current block is a traditional prediction mode, an index of the prediction mode of the current block is used as the indication information of the prediction mode and is signalled into the bitstream. The decoding side obtains the index of the prediction mode by decoding the bitstream, and determines the prediction mode of the current block from the traditional prediction modes illustrated in FIGS. 6 or 7 based on the index.

In manner 2, the encoding side constructs an intra prediction mode candidate list, and selects the intra prediction mode of the current block from the intra prediction mode candidate list. It should be noted that the intra prediction mode candidate list includes the interpolation filtering prediction mode. Then, the encoding side signals a sequence number (or an index number) of the intra prediction mode of the current block in the intra prediction mode candidate list into the bitstream. In this way, the decoding side determines the sequence number of the intra prediction mode of the current block in the intra prediction mode candidate list by decoding the bitstream, and constructs the intra prediction mode candidate list based on the same manner as the encoding side (it should be noted that the constructed intra prediction mode candidate list includes the interpolation filtering prediction mode). Further, the decoding side determines the intra prediction mode of the current block from the constructed intra prediction mode candidate list based on the sequence number of the intra prediction mode of the current block in the intra prediction mode candidate list. Finally, the current block is predicted using the determined intra prediction mode of the current block, to obtain the prediction values of the current block.

In manner 3, the encoding side constructs an intra prediction mode candidate list (including the interpolation filtering prediction mode), and selects the intra prediction mode of the current block from the intra prediction mode candidate list. For example, a cost of each candidate prediction mode in the intra prediction mode candidate list on a template of the current block is determined, and the intra prediction mode of the current block is determined based on the costs. Correspondingly, the decoding side constructs the intra prediction mode candidate list in the same manner as the encoding side. The constructed intra prediction mode candidate list also includes the interpolation filtering prediction mode. The decoding side determines the cost of each candidate prediction mode in the intra prediction mode candidate list on the template of the current block, and determines the intra prediction mode of the current block based on the costs. Finally, the current block is predicted using the determined intra prediction mode of the current block, to obtain the prediction values of the current block.

In manner 4, the encoding side and the decoding side predict the current block using the interpolation filtering prediction mode by default.

In addition to determining whether the current block is predicted using the interpolation filtering prediction mode through the manners 1 to 4, the decoding side may determine whether the current block is predicted using the interpolation filtering prediction mode through following manner 5.

In manner 5, the decoding side decodes the bitstream to obtain third information. The third information is used for indicating whether the current block is predicted using the interpolation filtering prediction mode. In response to the decoding side determining, based on the third information, that the current block is predicted using the interpolation filtering prediction mode, the reference region of the current block and the interpolation filter of the current block are determined.

In manner 5, in response to the encoding side determining that the current block is predicted using the interpolation filtering prediction mode, the third information is signalled into the bitstream. In this way, the decoding side obtains the third information by decoding the bitstream, and determines whether the current block is predicted using the interpolation filtering prediction mode based on the third information. In response to the third information indicating that the current block is predicted using the interpolation filtering prediction mode, the decoding side predicts the current block using the interpolation filtering prediction mode, to obtain the prediction block of the current block. In response to the third information indicating that the current block is not predicted using the interpolation filtering prediction mode, the decoding side skips the step of predicting the current block using the interpolation filtering prediction mode. Further, the decoding side determines the prediction mode of the current block, and predicts the current block using the determined prediction mode to obtain the prediction block of the current block.

The specific form of the third information is not limited in the embodiments of the present disclosure, which may be any indication information that may indicate whether the current block is predicted using the interpolation filtering prediction mode.

In an example, the third information may be represented as intra_eip_flag. In this way, it may be determined whether the current block is predicted using the interpolation filtering prediction mode through different values of intra_eip_flag. For example, in a case where intra_eip_flag=0, it indicates that the current block is not predicted using the interpolation filtering prediction mode. In a case where intra_eip_flag=1, it indicates that the current block is predicted using the interpolation filtering prediction mode. In this way, the encoding side signals the preset flag intra_eip_flag into the bitstream, and the decoding side determines the prediction mode of the current block through the decoded value of the preset flag intra_eip_flag. For example, in a case where the preset flag intra_eip _flag=1, it indicates that the prediction mode of the current block is the interpolation filtering prediction mode, and then the decoding side predicts the current block using the interpolation filtering prediction mode.

In some embodiments, in order to improve accuracy of prediction of the interpolation filtering prediction mode, the interpolation filtering prediction mode is used for some blocks that meet a requirement, while the interpolation filtering prediction mode is not used for some blocks that do not meet the requirement. Based on this, before decoding the bitstream to obtain the third information, the decoding side needs to determine whether a position of the current block in a current picture meets a preset position requirement and whether a size of the current block meets a preset block size. In response to determining that the position of the current block in the current picture meets the preset position requirement and the size of the current block meets the preset block size, the decoding side decodes the bitstream to obtain the third information.

The preset position requirement and the prediction block size are not limited in the embodiments of the present disclosure, which will be determined specially based on actual requirements.

In an example, as illustrated in FIG. 11, it is assumed that a position of a top-left corner of the current picture is (0, 0), and a position of a top-left corner of the current block is (x, y). The preset position requirement is that an x value of the current block is greater than or equal to a first preset value XX, and a y value of the current block is greater than or equal to a second preset value YY.

The specific value of the first preset value and the specific value of the second preset value are not limited in the embodiments of the present disclosure.

Exemplarily, the first preset value and the second preset value are the same.

Exemplarily, the first preset value and the second preset value are both 13. That is, in a case where a distance from a top edge of the current block to a top edge of the current picture is greater than or equal to 13 sample rows, and a distance from a left edge of the current block to a left edge of the current picture is greater than or equal to 13 sample columns, it indicates that the position of the current block in the current picture meets the preset position requirement.

In an example, with continued reference to FIG. 11, it is assumed that a width of the current block is W and a height of the current block is H, the preset block size requirement is that the width W of the current block is less than or equal to a third preset value A, and the height H of the current block is less than or equal to a fourth preset value B.

The specific values of the third preset value and the fourth preset value are not limited in the embodiments of the present disclosure.

Exemplarily, the third preset value and the fourth preset value are the same.

Exemplarily, the third preset value and the fourth preset value are both 32. That is, in a case where the width of the current block and the height of the current block are both less than or equal to 32, it indicates that the current block meets the preset block size requirement.

In the embodiments of the present disclosure, before determining whether the current block is predicted using the interpolation filtering prediction mode, the decoding side first determines whether the position of the current block in the current picture meets the preset position requirement, and determines whether the size of the current block meets the preset block size requirement. In response to the position of the current block in the current picture meeting the preset position requirement, and the size of the current block meeting the preset block size requirement, the bitstream is decoded to obtain the third information, and it is determined whether the current block is predicted using the interpolation filtering prediction mode based on the third information. For example, as illustrated in FIG. 11, in response to the distance from the top edge of the current block to the top edge of the current picture being greater than or equal to 13 sample rows, the distance from the left edge of the current block to the left edge of the current picture being greater than or equal to 13 sample columns, and the width of the current block and the height of the current block both being less than or equal to 32, the decoding side decodes the bitstream to obtain the third information.

In some embodiments, the first preset value, the second preset value, the third preset value and the fourth preset value are default values.

In some embodiments, the first preset value, the second preset value, the third preset value and the fourth preset value are values decoded from the bitstream by the decoding side.

In some embodiments, in response to the position of the current block in the current picture failing to meet the preset position requirement, and/or the size of the current block failing to meet the preset block size requirement, it is determined that the current block is not predicted using the interpolation filtering prediction mode.

In some embodiments, before determining whether the position of the current block in the current picture meets the preset position requirement and determining whether the size of the current block meets the preset block size, the decoding side further includes decoding the bitstream to obtain fourth information. The fourth information is used for indicating whether a current sequence is allowed to be predicted using the interpolation filtering prediction mode. In response to the fourth information indicating that the current sequence is allowed to be predicted using the interpolation filtering prediction mode, the decoding side determines whether the position of the current block in the current picture meets the preset position requirement and determines whether the size of the current block meets the preset block size.

In the embodiments of the present disclosure, it is indicated whether the current sequence is allowed to be predicted using the interpolation filtering prediction mode through high-level syntax element(s), such as the fourth information at a sequence level. In response to the fourth information indicating that the current sequence is allowed to be predicted using the interpolation filtering prediction mode, the decoding side determines whether the position of the current block in the current picture meets the preset position requirement, and determines whether the size of the current block meets the preset block size. Then, in response to determining that the position of the current block in the current picture meets the preset position requirement, and determining that the size of the current block meets the preset block size requirement, the decoding side decodes the third information to determine whether the current block is predicted using the interpolation filtering prediction mode.

In some embodiments, in response to the fourth information indicating that the current sequence is not allowed to be predicted using the interpolation filtering prediction mode, the decoding side skips the steps of determining whether the position of the current block in the current picture meets the preset position requirement, and determining whether the size of the current block meets the preset block size requirement, and skips the step of decoding the third information.

The specific form of the fourth information is not limited in the embodiments of the present disclosure, which may be any indication information that may indicate whether the current sequence is allowed to be predicted using the interpolation filtering prediction mode.

In an example, the fourth information may be represented as sps_eip_enabled_flag. In this way, it may be determined whether the current sequence is allowed to be predicted using the interpolation filtering prediction mode through different values of sps_eip_enabled_flag. For example, in a case where sps_eip_enabled_flag=0, it indicates that the current sequence is not allowed to be predicted using the interpolation filtering prediction mode. In a case where sps_eip_enabled_flag=1, it indicates that the current sequence is allowed to be predicted using the interpolation filtering prediction mode.

Exemplarily, the fourth information is carried in a sequence parameter set (SPS). For example, it is shown in Table 1.

Table 1

| seq_parameter_set_rbsp( ) { | Descriptor |
|---|---|
| ... ... | |
| **sps_eip_enabled_flag** | u(1) |
| ... ... | |
| } | |

Here, sps_eip_enabled_flag represents the fourth information. The sps_eip_enabled_flag is carried in seq_parameter_set_rbsp( ). For example, in a case where sps_eip_enabled_flag=0, it represents that the current sequence is not allowed to be predicted using the interpolation filtering prediction mode. In a case where sps_eip_enabled_flag=1, it represents that the current sequence is allowed to be predicted using the interpolation filtering prediction mode.

In some embodiments, the embodiments of the present disclosure may further include a general constraints information (GCI) flag, which is used for indicating whether to use the interpolation filtering prediction technology. Exemplarily, gci_no_eip_constraint_flag is used for indicating whether the interpolation filtering prediction technology is enabled for the current video. Exemplarily, as shown in Table 2, gci_no_eip_constraint_flag is carried in the general constraints information general_constraints_info( ).

Table 2

| general _constraints_info( ) { | Descriptor |
|---|---|
| **gci_present_flag** | u(1) |
| if( gci_present_flag ) { | |
| ... ... | |
| **gci_ no_eip_constraint_**flag | u(1) |
| ... ... | |

(continued)

| } | |
|---|---|

As shown in Table 2, in response to gci_no_eip_constraint_flag=1, it represents that the interpolation filtering prediction technology is not enabled for the current video. That is, the interpolation filter intra prediction technology at a sequence level must be restricted to be 0 in all pictures, which represents that all sequences in the current video are not allowed to use the interpolation filter intra prediction technology. In response to gci_no_eip_constraint_flag=0, it represents that the interpolation filtering prediction technology is enabled for the current video. That is, the interpolation filter intra prediction technology at the sequence level is not restricted to be 0 in all pictures.

It may be seen from the above that in response to syntax elements in the embodiments of the present disclosure including high-level syntax elements gci_no_eip_constraint_flag and sps_eip_enabled_flag, and block-level intra_eip_flag. The decoding side first decodes the high-level syntax elements. That is, the decoding side first decodes gci_no_eip_constraint_flag; in response to gci_no_eip_constraint_flag=0, continues to decode sps_eip_enabled_flag; and in response to sps_eip_enabled_flag=1, parses block-level syntax elements.

Exemplarily, block-level syntax elements are shown in Table 3.

Table 3

| if( sps_eip_enabled_flag&& cbWidth <= SIZE_A && cbHeight <= SIZE_B && x0>=XX && y0>=YY ) { |
|---|
| intra_eip_flag |
| } |

In Table 3, cbWidth and cbHeight are the width of the current block and height of the current block, respectively, SIZE_A may be understood as the third preset value, SIZE_B may be understood as the fourth preset value, XX may be understood as the first preset value, YY may be understood as the second preset value, and x0 and y0 represent a coordinate difference between the top-left corner of the current block and the top-left corner of the current picture.

It may be seen from Table 3 that, in response to the fourth information at the sequence level sps_eip_enabled_flag = 1, that is, it indicates that in a case where the current sequence is allowed to use the interpolation filtering prediction mode, it is determined whether the position of the current block in the current picture meets the preset position requirement, and whether the size of the current block meets the preset block size requirement. In response to determining the position of the current block in the current picture meeting the preset position requirement and the size of the current block meeting the preset block size requirement, the third information intra_eip_flag is decoded. It is determined whether the current block is predicted using the interpolation filtering prediction mode based on the decoded third information intra_eip_flag.

The specific process of determining whether the current block is predicted using the interpolation filtering prediction mode is described above.

In the embodiments of the present disclosure, in response to the decoding side determining that the current block is predicted using the interpolation filtering prediction mode, the interpolation filtering prediction mode is used for predicting the current block, to obtain the prediction values of the current block.

The process of predicting the current block by the decoding side using the interpolation filtering prediction mode will be described below.

In a case where the decoding side determines that the current block is predicted using the interpolation filtering prediction mode, the decoding side first determines the reference region of the current block and the interpolation filter of the current block.

The specific process in which the decoding side determines the reference region of the current block will be described below.

In the embodiments of the present disclosure, the reference region of the current block is a part or all of reconstructed regions around the current block.

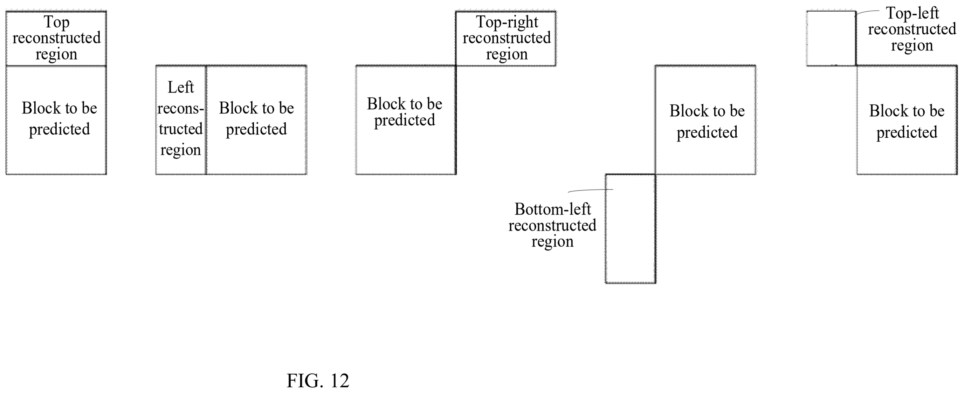

Exemplarily, as illustrated in FIG. 12, reconstructed regions around the current block may include: a top reconstructed region of the current block, a left reconstructed region of the current block, a top-right reconstructed region of the current block, a bottom-left reconstructed region of the current block, and a top-left reconstructed region of the current block. A block to be predicted in FIG. 12 is the current block.

The specific shape and the specific size of the reference region of the current block are not limited in the embodiments of the present disclosure.

In an example, the reference region of the current block includes any one of the top reconstructed region of the current block, the left reconstructed region of the current block, the top-right reconstructed region of the current block, the bottom-left reconstructed region of the current block, and the top-left reconstructed region of the current block. For example, the reference region of the current block is the top reconstructed region of the current block, or the reference region of the current block is the left reconstructed region of the current block.

In an example, the reference region of the current block includes any two of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block and the left reconstructed region of the current block. For another example, the reference region of the current block includes the top reconstructed region of the current block and the bottom-left reconstructed region of the current block.

In an example, the reference region of the current block includes any three of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, and the top-left reconstructed region of the current block. For another example, the reference block of the current block includes the left reconstructed region of the current block, the top-left reconstructed region of the current block, and the bottom-left reconstructed region of the current block.

In an example, the reference region of the current block includes any four of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, the top-left reconstructed region of the current block, and the left reconstructed region of the current block. For another example, the reference block of the current block includes the left reconstructed region of the current block, the top-left reconstructed region of the current block, the bottom-left reconstructed region of the current block, and the top reconstructed region of the current block.

In an example, the reference region of the current block includes five reconstructed regions, which are the top reconstructed region of the current block, the left reconstructed region of the current block, the top-right reconstructed region of the current block, the bottom-left reconstructed region of the current block, and the top-left reconstructed region of the current block.

In the embodiments of the present disclosure, the specific manners in which the decoding side determines the reference region of the current block include but are not limited to following manners.

In manner 1, the reference region of the current block is a default region. For example, the encoding side and the decoding side default to the reference region of the current block including at least one of the top reconstructed region of the current block, the left reconstructed region of the current block, the top-right reconstructed region of the current block, the bottom-left reconstructed region of the current block, or the top-left reconstructed region of the current block.

In manner 2, the decoding side decodes the bitstream to obtain first information, where the first information is used for indicating a type of the reference region of the current block; and the decoding side determines the reference region of the current block from preset P reference regions based on the type of the reference region, where P is a positive integer greater than 1.

In this implementation, the encoding side determines the reference region of the current block from the preset P reference regions. For example, the encoding side determines coding costs corresponding to the P reference regions, and determines a reference region with a minimum encoding cost as the reference region of the current block. Then, a type of the determined reference region with the minimum encoding cost is indicated to the decoding side through the first information. In this way, the decoding side obtains the first information by decoding the bitstream, and determines the reference region of the current block from the preset P reference regions based on the type of the reference region indicated by the first information.

It should be noted that types of the preset P reference regions or shapes of the preset P reference regions are different from each other.

The specific number of the P reference regions and the specific shapes of the P reference regions are not limited in the embodiments of the present disclosure.

In an example, the P reference regions include at least one of a first reference region, a second reference region, or a third reference region.

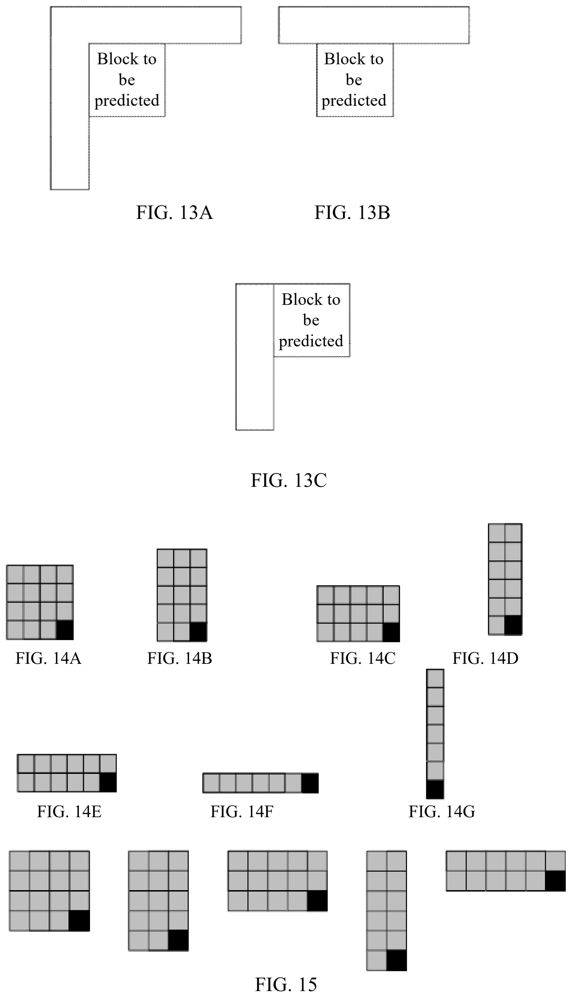

As illustrated in FIG. 13A, the first reference region includes the top reconstructed region of the current block, the top-right reconstructed region of the current block, the left reconstructed region of the current block, the top-left reconstructed region of the current block, and the top-left reconstructed region of the current block. As illustrated in FIG. 13B, the second reference region includes the top reconstructed region of the current block, the top-right reconstructed region of the current block, and the top-left reconstructed region of the current block. As illustrated in FIG. 13C, the third reference region includes the left reconstructed region of the current block, the top-left reconstructed region of the current block, and the top-left reconstructed region of the current block. Blocks to be predicted in FIGS. 13A to 13C are current blocks.

The specific form of the first information is not limited in the embodiments of the present disclosure, as long as it is any indication information that may indicate the type of the reference region of the current block.

In an example, eip_ref_type is used for representing the first information. For example, values of eip_ref_type are used for indicating different types of reference regions, respectively.

Exemplarily, as shown in Table 4, correspondences between the three reference regions illustrated in FIGS. 13A and 13B and values of eip_ref_type are as follows.

Table 4

| Value of eip ref type | Reference region |
|---|---|
| 0 | First reference region: top, top-right, left, bottom-left, top-Left |
| 1 | Second reference region: top, top-right, top-left |
| 2 | Third reference region: left, bottom-left, top-left |

Based on the Table 4, the decoding side decodes the bitstream to obtain the first information eip_ref_type, and determines the reference region of the current block based on the value of the first information eip_ref_type. For example, in response to eip_ref_type=0, the reference region of the current block is determined to be the first reference region (as illustrated in FIG. 13A), and the first reference region includes the top reconstructed region of the current block, the top-right reconstructed region of the current block, the left reconstructed region of the current block, the top-left reconstructed region of the current block, and the top-left reconstructed region of the current block. In response to eip_ref_type=1, the reference region of the current block is determined to be the second reference region (as illustrated in FIG. 13B), and the second reference region includes the top reconstructed region of the current block, the top-right reconstructed region of the current block, and the top-left reconstructed region of the current block. In response to eip_ref_type=2, the reference region of the current block is determined to be the third reference region (as illustrated in FIG. 13C), and the third reference region includes the top reconstructed region of the current block, the top-right reconstructed region of the current block, and the top-left reconstructed region of the current block.

It should be noted that the above description is made by taking an example in which the P reference regions are three reference regions illustrated in FIGS. 13A to 13C. The P reference regions in the embodiments of the present disclosure include other reference regions in addition to the three reference regions, which are not limited in the embodiments of the present disclosure. The correspondences between the reference regions and the values of eip_ref_type shown in Table 4 may be adaptively adjusted based on the number of the reference regions.

In some embodiments, the decoding side may obtain the first information by decoding the bitstream using a decoding manner of a truncated binary code.

Exemplarily, correspondences between truncated binary codes, the values of eip_ref_type and the types of the reference regions are shown in Table 5.

Table 5

| Truncated binary code | Value of eip_ref_type | Reference region |
|---|---|---|
| 0 | 0 | First reference region: top, top-right, left, bottom-left, top-left |
| 10 | 1 | Second reference region: top, top-right, top-left |
| 11 | 2 | Third reference region: left, bottom-left, top-left |

In the embodiments of the present disclosure, the decoding side may decode codewords of the truncated binary code using an equal probability decoding manner or a context model decoding manner.

In addition to using the above manner 1 or manner 2, the decoding side may determine the reference region of the current block using following manner 3.

In manner 3, the reference region of the current block is determined from the preset P reference regions based on a shape of the current block.

In manner 3, different reference regions are used for predicting current blocks with different shapes to improve accuracy of prediction.

For example, in response to the shape of the current block being a square, a reference region of a first type is used.

For another example, in response to the shape of the current block being a rectangle with a width greater than a height, a reference region of a second type is used.

For yet another example, in response to the shape of the current block being a rectangle with a width less than a height, a reference region of a third type is used.

That is, in the embodiments of the present disclosure, the correspondences between the P reference regions and the shapes of the current block are preset. In this way, the decoding side may determine the reference region of the current block from the P reference regions based on the shape of the current block and through the correspondences between the P reference regions and the shapes of the current block.

The process in which the decoding side determines the interpolation filter of the current block will be described below.

In the embodiments of the present disclosure, there is no limitation on the specific shape of the interpolation filter.

Exemplarily, interpolation filters provided in the embodiments of the present disclosure include, but are not limited to: a square interpolation filter, and an interpolation filter with a height less than a width.

For example, the square interpolation filter includes but is not limited to a $4 \times 4$ interpolation filter illustrated in FIG. 14A.

For another example, interpolation filters with a height greater than a width include but are not limited to a $5 \times 3$ interpolation filter illustrated in FIG. 14B, a $6 \times 2$ interpolation filter illustrated in FIG. 14D, and a $7 \times 1$ interpolation filter illustrated in FIG. 14G.

For yet another example, interpolation filters with a height less than a width include but are not limited to a $3 \times 5$ interpolation filter illustrated in FIG. 14C, a $2 \times 6$ interpolation filter illustrated in FIG. 14E, and a $1 \times 7$ interpolation filter illustrated in FIG. 14F.

It should be noted that, in the above filters, positions with dark gray represent a current position to be predicted, and positions with light gray represent an input position of the interpolation filter, that is, positions: $\{p_0, p_1, \ldots, p_{N-1}\}$.

In the embodiments of the present disclosure, the specific manners in which the decoding side determines the interpolation filter of the current block include but are not limited to following manners.

In manner 1, the interpolation filter of the current block is a default interpolation filter. For example, the encoding side and the decoding side default to the interpolation filter of the current block being any one of the interpolation filters in FIGS. 14A to 14G. For example, the default interpolation filter is a $4 \times 4$ interpolation filter.

In manner 2, the decoding side decodes the bitstream to obtain second information, where the second information is used for indicating a shape of the interpolation filter of the current block. The interpolation filter of the current block is determined from the preset Q interpolation filters based on the shape of the interpolation filter of the current block, where Q is a positive integer greater than 1.

In this implementation, the encoding side determines the interpolation filter of the current block from the preset Q interpolation filters. For example, the encoding side determines coding costs corresponding to the Q interpolation filters, and determines an interpolation filter with a minimum encoding cost as the interpolation filter of the current block. Then, a shape of the determined interpolation filter with the minimum encoding cost is indicated to the decoding side through the second information. In this way, the decoding side obtains the second information by decoding the bitstream, and determines the interpolation filter of the current block from the preset Q interpolation filters based on the shape of the interpolation filter indicated by the second information.

It should be noted that shapes of the preset Q interpolation filters are different from each other.

The specific number and specific shapes of the Q interpolation filters are not limited in the embodiments of the present disclosure in detail. For example, the Q interpolation filters include at least one of a first interpolation filter, a second interpolation filter, or a third interpolation filter. The first interpolation filter is a square interpolation filter, the second interpolation filter is a rectangular interpolation filter with a width greater than a height, and the third interpolation filter is a rectangular interpolation filter with a height greater than a width.

In an example, the Q interpolation filters include multiple interpolation filters in FIGS. 14A to 14H.

The specific form of the second information is not limited in the embodiments of the present disclosure, as long as it is any indication information that may indicate the shape of the interpolation filter of the current block.

In an example, eip_filter_type is used for representing the second information. For example, values of eip_filter_type are used for indicating different shapes of interpolation filters, respectively.

Exemplarily, in response to the Q interpolation filters being five interpolation filters illustrated in FIG. 15, correspondences between the five interpolation filters and the values of eip_filter_type are shown in Table 6.

Table 6

| Value of eip filter type | Shape of interpolation filter |
|---|---|
| 0 | $4 \times 4$ |
| 1 | $3 \times 5$ |

(continued)

| Value of eip filter type | Shape of interpolation filter |
|---|---|
| 2 | 5×3 |
| 3 | 2×6 |
| 4 | 6×2 |

Based on Table 5, the decoding side decodes the bitstream to obtain the second information eip_filter_type, and determines the interpolation filter of the current block based on the value of the second information eip_filter_type. For example, in response to eip_filter_type=0, the shape of the interpolation filter of the current block is determined to be 4×4. In response to eip_filter_type=1, the shape of the interpolation filter of the current block is determined to be 3×5. In response to eip_filter_type=2, the shape of the interpolation filter of the current block is determined to be 5×3. In response to eip_filter_type=3, the shape of the interpolation filter of the current block is determined to be 2×6. In response to eip_filter_type=4, the shape of the interpolation filter of the current block is determined to be 6×2.

In some embodiments, the decoding side may obtain the first information by decoding the bitstream using a decoding manner of a truncated binary code.

Exemplarily, in response to the preset Q interpolation filters including the five interpolation filters illustrated in FIG. 15, correspondences between truncated binary codes, the values of eip_filter_ type, and the shapes of the interpolation filter are shown in Table 7.

Table 7

| Truncated binary code | Value of eip_filter_type | Shape of interpolation filter |
|---|---|---|
| 00 | 0 | 4×4 |
| 01 | 1 | 3×5 |
| 10 | 2 | 5×3 |
| 110 | 3 | 2×6 |
| 111 | 4 | 6×2 |

In this case, the five shapes of interpolation filters shown in Table 7 and the three types of reconstructed regions shown in Table 5 result in a total of fifteen combinations of interpolation filters and reconstructed regions.

In some embodiments, the decoding side may obtain the second information eip_filter_type by decoding the bitstream, and determine the interpolation filter of the current block based on the shape of the interpolation filter indicated by the second information eip_filter_type in the Table 7. Similarly, the bitstream is decoded to obtain the first information, and the reference region of the current block is determined based on the value of the first information eip_ref_type in the Table 5.

In an example, the syntax elements in the embodiments of the present disclosure are shown in Table 8.

Table 8

| coding_unit( x0, y0, cbWidth, cbHeight, cqtDepth, treeType, modeType ) { | Descriptor |
|---|---|
| ... ... | |
| if( CuPredMode[ chType ][ x0 ][ y0 ] == MODE_INTRA ‖<br>        CuPredMode[ chType ][ x0 ][ y0 ] == MODE_PLT ) { | |
| if( treeType == SINGLE_TREE ‖ treeType == DUAL_TREE_LUMA ) { | |
| ...... // other intra coding tools | |
| if( sps_eip_enabled_flag&& cbWidth <= **SIZE_A** && cbHeight <= **SIZE_B** &&<br>        x0>=XX && 0>=**YY** ) { | |
| **intra_eip_flag** | ae(v) |
| } | |
| if( intra_eip_flag ){ | |

(continued)

| | |
|---|---|
| **eip_ref_type[** x0 ][ y0 ] | ae(v) |
| **eip_filter_type[** x0 ][ y0 ] | ae(v) |
| } | |
| else { | |
| ...... // other intra coding tools | |
| } | |
| } | |
| } | |
| } | |

As shown in Table 8, the decoding side decodes the bitstream to obtain the fourth information at the sequence level sps_eip_enabled_flag first. The fourth information sps_eip_enabled_flag indicates whether the current sequence is allowed to be predicted using the interpolation filtering prediction mode. Then, the decoding side determines whether the position of the current block in the current picture meets the preset position requirement, and determines whether the size of the current block meets the preset block size requirement. In response to determining that the position of the current block in the current picture meets the preset position requirement and the size of the current block meets the preset block size requirement, the third information intra_eip_flag is decoded. The third information intra_eip_flag indicates whether the current block is predicted using the interpolation filtering prediction mode. In response to the third information intra_eip_flag=1 ( which indicates that the current block is predicted using the interpolation filtering prediction mode), the bitstream is decoded to obtain the first information eip_ref_type and the second information eip_filter_type. The first information eip_ref_type indicates the type of the reference region of the current block. In this way, the decoding side may obtain the reference region of the current block by looking up the table based on the value of the first information eip _ref_type. The second information eip_filter_type indicates the shape of the interpolation filter of the current block, and based on the value of the second information eip_filter_type, the interpolation filter of the current block is obtained by looking up the table.

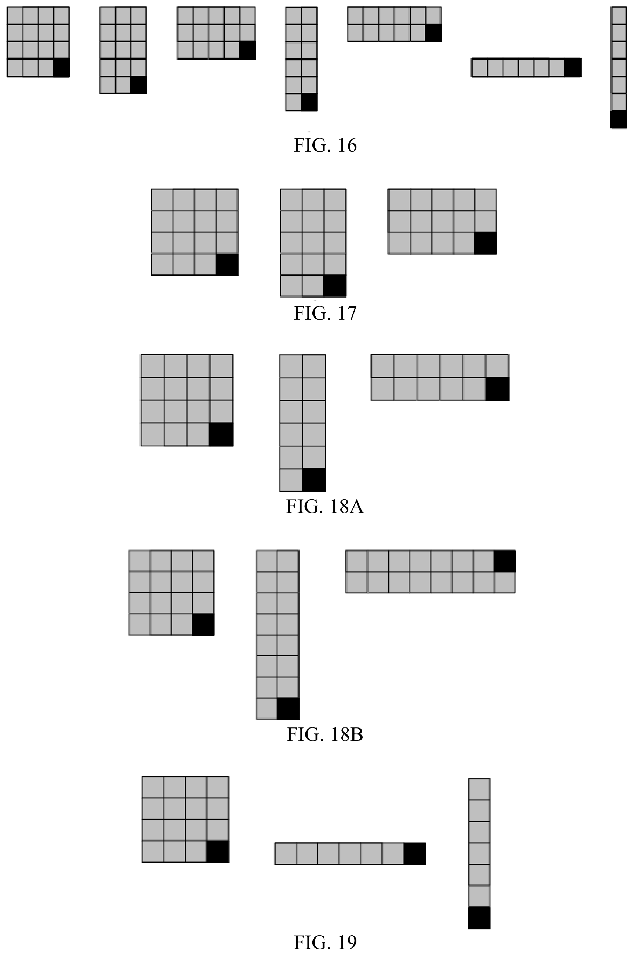

In some embodiments, in a case where the embodiments of the present disclosure include seven interpolation filters as illustrated in FIG. 16, correspondences between the truncated binary codes, the values of eip_filter_type and the shapes of the interpolation filter are shown in Table 9.

Table 9

| Truncated binary code | Value of eip_filter_type | Shape of interpolation filter |
|---|---|---|
| 00 | 0 | 4×4 |
| 010 | 1 | 3×5 |
| 011 | 2 | 5×3 |
| 100 | 3 | 2×6 |
| 101 | 4 | 6×2 |
| 110 | 5 | 1×7 |
| 111 | 6 | 7×1 |

In this case, seven shapes of interpolation filters shown in Table 9 and the three types of reconstructed regions shown in Table 5 result in a total of twenty-one combinations of interpolation filters and reconstructed regions.

Similarly, the decoding side may obtain the reference region of the current block and the interpolation filter of the current block by decoding the syntax shown in Table 8 and by looking up Table 5 and Table 8.

In some embodiments, in a case where the embodiments of the present disclosure include three interpolation filters as illustrated in FIG. 17, correspondences between the truncated binary codes, the values of eip_filter_type, and the shapes of the interpolation filter are shown in Table 10.

Table 10

| Truncated binary code | Value of eip_filter_type | Shape of interpolation filter |
|---|---|---|
| 0 | 0 | 4×4 |
| 10 | 1 | 3×5 |
| 11 | 2 | 5×3 |

In this case, three shapes of the interpolation filter shown in Table 10 and the three types of reconstructed regions shown in Table 5 result in a total of nine combinations of interpolation filters and reconstructed regions.

Similarly, the decoding side may obtain the reference region of the current block and the interpolation filter of the current block by decoding the syntax shown in Table 8 and by looking up Table 5 and Table 10.

In some embodiments, in a case where the embodiments of the present disclosure include three interpolation filters as illustrated in FIG. 18A, correspondences between the truncated binary codes, the values of eip_filter_type, and the shapes of the interpolation filter are shown in Table 11.

Table 11

| Truncated binary code | Value of eip_filter_type | Shape of interpolation filter |
|---|---|---|
| 0 | 0 | 4×4 |
| 10 | 1 | 2×6 |
| 11 | 2 | 6×2 |

In this case, three shapes of the interpolation filter shown in Table 11 and the three types of reconstructed regions shown in Table 5 result in a total of nine combinations of interpolation filters and reconstructed regions.

Similarly, the decoding side may obtain the reference region of the current block and the interpolation filter of the current block by decoding the syntax shown in Table 8 and by looking up Table 5 and Table 11.

In some embodiments, in a case where the embodiments of the present disclosure include three interpolation filters as illustrated in FIG. 18B, the correspondences between the truncated binary code, the value of eip_filter_type, and the shape of the interpolation filter is respectively shown in Table 12.

Table 12

| Truncated binary code | Value of eip filter type | Shape of interpolation filter |
|---|---|---|
| 0 | 0 | 4×4 |
| 10 | 1 | 2×8 |
| 11 | 2 | 8×2 |

In this case, three shapes of the interpolation filter shown in Table 12 and the three types of reconstructed regions shown in Table 5 result in a total of nine combinations of interpolation filters and reconstructed regions.

Similarly, the decoding side may obtain the reference region of the current block and the interpolation filter of the current block by decoding the syntax shown in Table 8 and by looking up Table 5 and Table 11.

Generally, using a filter with more taps on the same number of samples may obtain better interpolation effect. Compared with 2×6 and 6×2 interpolation filters illustrated in FIG. 18A, the number of taps of the filter is increased in FIG. 18B. For example, the 2×6 and 6×2 interpolation filters are expanded to 2×8 and 8×2 interpolation filters. In fact, the 2×8 and 8×2 filters and a 4×4 filter are filters that use fifteen samples as inputs and have one output, and their complexities are similar. Therefore, the interpolation filters illustrated in FIG. 18B increases the interpolation effect without increasing the complexity.

In some embodiments, in a case where the embodiments of the present disclosure include three interpolation filters as illustrated in FIG. 19, correspondences between the truncated binary codes, the values of eip_filter_type, and the shapes of the interpolation filter are shown in Table 13.

Table 13

| Truncated binary code | Value of eipfilter_type | Shape of interpolation filter |
|---|---|---|
| 0 | 0 | 4×4 |
| 10 | 1 | 1×7 |
| 11 | 2 | 7×1 |

In this case, three shapes of the interpolation filter shown in Table 13 and the three types of reconstructed regions shown in Table 5 result in a total of nine combinations of interpolation filters and reconstructed regions.

Similarly, the decoding side may obtain the reference region of the current block and the interpolation filter of the current block by decoding the syntax shown in Table 8 and by looking up Table 5 and Table 13.

In addition to using the manner 1 or manner 2, the decoding side may use following manner 3 to determine the interpolation filter of the current block.

In manner 3, the interpolation filter of the current block is determined from the preset Q interpolation filters based on the shape of the current block.

In manner 3, different interpolation filters are used for predicting current blocks of different shapes to improve accuracy of prediction.

For example, in response to the shape of the current block being a square, an interpolation filter of a first shape is used.

For another example, in response to the shape of the current block being a rectangle with a width greater than a height, an interpolation filter of a second shape is used.

For yet another example, in response to the shape of the current block being a rectangle with a width less than a height, an interpolation filter of a third shape is used.

That is, in the embodiments of the present disclosure, the correspondences between the Q interpolation filters and the shapes of the current block are preset. In this way, the decoding side may determine the interpolation filter of the current block from the Q interpolation filters based on the shape of the current block through the correspondences between the Q interpolation filters and the shapes of the current block.

In the embodiments of the present disclosure, after determining the reference region of the current block and the interpolation filter of the current block based on the above steps, the decoding side determines the prediction block of the current block based on the reference region and the interpolation filter.

The process of determining the prediction block of the current block by the decoding side based on the reference region and interpolation filter of the current block will be described below.

In the embodiments of the present disclosure, after determining the reference region of the current block and the interpolation filter of the current block, the decoding side performs filtering on the reference region using the interpolation filter to determine filter coefficients of the interpolation filter, and performs interpolation filtering on the current block based on the determined filter coefficients to obtain the prediction block of the current block.

The specific manner in which the decoding side determines the prediction block of the current block based on the reference region of the current block and the interpolation filter of the current block is not limited in the embodiments of the present disclosure.

In some embodiments, determining the prediction block of the current block based on the reference region of the current block and the interpolation filter of the current block in S101 includes following steps.

In S101-A1 filter coefficients of the interpolation filter are determined based on the reference region.

In S101-A2, interpolation filtering prediction is performed on the current block using the interpolation filter based on the filter coefficients, to obtain the prediction block of the current block.

The manners of determining the filter coefficients of the interpolation filter in S101-A1 include at least following manners.

In manner 1, the determined interpolation filter is used for sliding within the reference region of the current block, to construct a Wiener-Hopf equation. Then, the Wiener-Hopf equation is solved to obtain the filter coefficients of the interpolation filter.

In the process of sliding the interpolation filter within the reference region of the current block, N positions corresponding to each position within the reference region are determined based on the shape of the interpolation filter. For example, for a position r within the reference region, N positions corresponding to the position r are determined within the reference region based on the shape of the interpolation filter. Sample reconstructed values of the N positions are inputs of the interpolation filter. Phase position differences between the N positions and the position r are $\{p_0, p_1 ... , p_{N-1}\}$, and $p_N$ is a two-dimensional representation. Here, $\{c_0, c_1, ... , c_{N-1}\}$ is interpolation filter coefficients at positions $\{p_0, p_1, ..., p_{N-1}\}$.

In an example, the interpolation filter is slid within the reference region of the current block, and the constructed Wiener-Hopf equation is shown in formula (3):

$$\begin{bmatrix} \sum_{\|\mathcal{R}\|} t[r+p_0]t[r+p_0] & \cdots & \sum_{\|\mathcal{R}\|} t[r+p_{N-1}]t[r+p_0] \\ \vdots & \ddots & \vdots \\ \sum_{\|\mathcal{R}\|} t[r+p_0]t[r+p_{N-1}] & \cdots & \sum_{\|\mathcal{R}\|} t[r+p_{N-1}]t[r+p_{N-1}] \end{bmatrix} \begin{bmatrix} c_0 \\ \vdots \\ c_{N-1} \end{bmatrix} = \begin{bmatrix} \sum_{\|\mathcal{R}\|} t[r]t[r+p_0] \\ \vdots \\ \sum_{\|\mathcal{R}\|} t[r]t[r+p_{N-1}] \end{bmatrix} \qquad (3)$$

Here, R is the reference region of the current block, $t[r+p_n]$ is a sample reconstructed value of a sample at a position $r+p_n$ within the reference region, and $t[r]$ is a sample reconstructed value of a sample at the position r within the reference region.

Since the reference region of the current block is the reconstructed region, except for the interpolation filter coefficients $\begin{bmatrix} c_0 \\ \vdots \\ c_{N-1} \end{bmatrix}$, all other parameters in the above formula (3) are known. Therefore, the filter coefficients of the interpolation filter of the current block may be determined by solving the above formula (3).

In an example, the decoding side may solve the Wiener-Hopf equation shown in the formula (3) through Cholesky decomposition of an autocorrelation coefficient matrix, to obtain the filter coefficients of the filter.

After determining the filter coefficients of the interpolation filter based on the above formula (3), the decoding side performs interpolation filtering prediction on the current block using the interpolation filter based on the filter coefficients, to obtain the prediction block of the current block.

Exemplarily, the decoding side obtains the prediction block of the current block based on following formula (4):

$$pred_{ri} = \sum_{n=0}^{N-1} c_n \times t[ri + p_n] \qquad (4)$$

Here, $p_n$ is a relative position difference between an n-th position in N positions corresponding to a position ri in the current block and the position ri, and $c_n$ is an n-th filter coefficient in the filter coefficients. $t[ri+p_n]$ is a sample value at the position $ri+p_n$. In response to the position $ri+p_n$ being in the current block, $t[ri+p_n]$ is a prediction value of the sample at the position $ri+p_n$. In response to the position $ri+p_n$ being in the reconstructed region around the current block, $t[ri+p_n]$ is a reconstructed value of the sample at the position $ri+p_n$. $pred_{ri}$ is a prediction value of the sample at the position ri in the current block. Based on the formula (4), the decoding side may determine a prediction value of each point in the current block, and then obtain the prediction block of the current block.

In manner 2, S101-A1 includes following steps S101-A11 to S101-A14.

In S101-A11, a first reconstructed region around the current block is determined.

In S101-A12, a sample average reconstructed value is determined based on reconstructed values of the first reconstructed region.

In S101-A13, reconstructed values of the samples within the reference region are de-averaged based on the sample average reconstructed value.

In S101-A14, de-averaged sample values of the samples within the reference region are taken as inputs of the interpolation filter, and the interpolation filter within the reference region is slid to obtain the filter coefficients of the interpolation filter.

In manner 2, the reference region is de-averaged, and the filter coefficients of the interpolation filter are determined based on the de-averaged reference region. The amount of data of the de-averaged reference region is small. In this way, in a case where the filter coefficients are determined based on the de-averaged reference region, efficiency of determining the filter coefficients may be improved.

Specifically, the decoding side first determines the first reconstructed region, where the first reconstructed region may be any part of the reconstructed region around the current block.

In the embodiments of the present disclosure, manners in which the decoding side determines the first reconstructed region around the current block include at least following manners.

In manner 1, the decoding side determines a reconstructed region around the current block as the first reconstructed region by default.

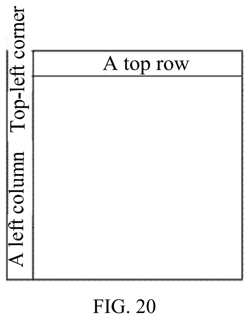

For example, as illustrated in FIG. 20, the decoding side determines a region consisting of a top row sample of the current block, a left column sample of the current block, and a top-left corner sample of the current block as the first reconstructed region by default.

In manner 2, the first reconstructed region is determined based on the shape of the current block.

For example, in response to the shape of the current block being a square, a top row reconstructed sample region of the current block and a left column reconstructed sample region of the current block are determined as the first reconstructed region.

For another example, in response to the shape of the current block being a rectangle with a width greater than a height, a top row reconstructed sample region of the current block is determined as the first reconstructed region.

For yet another example, in response to the shape of the current block being a rectangle with a height greater than a width, a left column reconstructed sample region of the current block is determined as the first reconstructed region.

It should be noted that, the manners of determining the first reconstructed region based on the shape of the current block include but are not limited to the above examples.

After determining the first reconstructed region, the decoding side determines a sample average reconstructed value m based on the reconstructed values of the first reconstructed region.

In an implementation, an average value of the reconstructed values of the first reconstructed region is determined as the sample average reconstructed value m.

In an example, in response to the first reconstructed region being as illustrated in FIG. 20, the sample average reconstructed value m may be calculated through a method shown in Table 14.

Table 14

| | |
|---|---|
| Sum = 0, numSamples = 0; | |
| for(int i = 0; i < blockWidth; i++) | |
| { | |
| Sum += aboveBuffer[i]; | Accumulate the above reconstructed values |
| numSamples++; | increase the number of samples by 1 |
| } | |
| for(int i = 0; i < blockHeight; i++) | |
| { | |
| Sum += leftBuffer[i]; | Accumulate the left reconstructed values |
| numSamples++; | increase the number of samples by 1 |
| } | |
| m = (sum + numSamples / 2) / numSamples | Calculate the average m |

In an example, in response to the first reconstructed region being a top row and/or a left column of the current block, an average of the reconstructed values of the top row and/or the left column may be determined as the sample average reconstructed value m. In this case, the sample average reconstructed value m may be calculated through the method shown in Table 15.

Table 15

| | |
|---|---|
| Sum = 0, shift = 0; | |
| if (blockWidth >= blockHeight) | |
| { | |
| for(int i = 0; i < blockWidth; i++) | |
| { | |
| Sum += aboveBuffer[i]; | Accumulate the above reconstructed values |
| } | |
| shift += log2(blockWidth) | Update shift value |
| } | |
| if (blockHeight >= blockWidth) | |
| { | |
| for(int i = 0; i < blockHeight; i++) | |
| { | |
| Sum += leftBuffer[i]; | Accumulate the left reconstructed values |
| } | |
| shift += log2(blockHeight) | Update shift value |

(continued)

| | |
|---|---|
| } | |
| offset = 1 << (shift - 1) | |
| m = (sum + offset) >> shift | Calculate the average m |

As shown in Table 15, in response to the first reconstructed region being the top row and/or the left column of the current block, shift calculation may be used instead of division to quickly calculate the sample average reconstructed value m.

In addition to determining the average value of the reconstructed values of the first reconstructed region as the sample average reconstructed value m, the decoding side may determine the sample average reconstructed value m in following manners.

In another manner, a weighted average value of the reconstructed values of the first reconstructed region is determined as the sample average reconstructed value m.

The decoding side may also determine the sample average reconstructed value m using other manners.

After determining the sample average reconstructed value, the decoding side de-averages the reconstructed values of the samples within the reference region based on the sample average reconstructed value.

For example, for each sample within the reference region, the reconstructed value of the sample is divided by the sample average reconstructed value and then rounded to the integer, to obtain the de-averaged sample value of the sample within the reference region.

For another example, the decoding side subtracts the sample average reconstructed value from the reconstructed value of the sample within the reference region, to obtain the de-averaged sample value of the sample within the reference region. For example, for each sample within the reference region, the sample average reconstructed value is subtracted from the reconstructed value of the sample, to obtain the de-averaged sample value of the sample within the reference region.

The specific manner in which the decoding side de-averages the reconstructed values of the samples within the reference region based on the sample average reconstructed value is not limited in the embodiments of the present disclosure.

Based on the above method, after de-averaging the reconstructed values of the samples within the reference region to obtain the de-averaged sample values of the samples within the reference region, the decoding side performs the above step S101-A14. That is, the de-averaged sample values of the samples within the reference region are taken as the inputs of the interpolation filter, and the interpolation filter is slid within the reference region to obtain the filter coefficients of the interpolation filter.

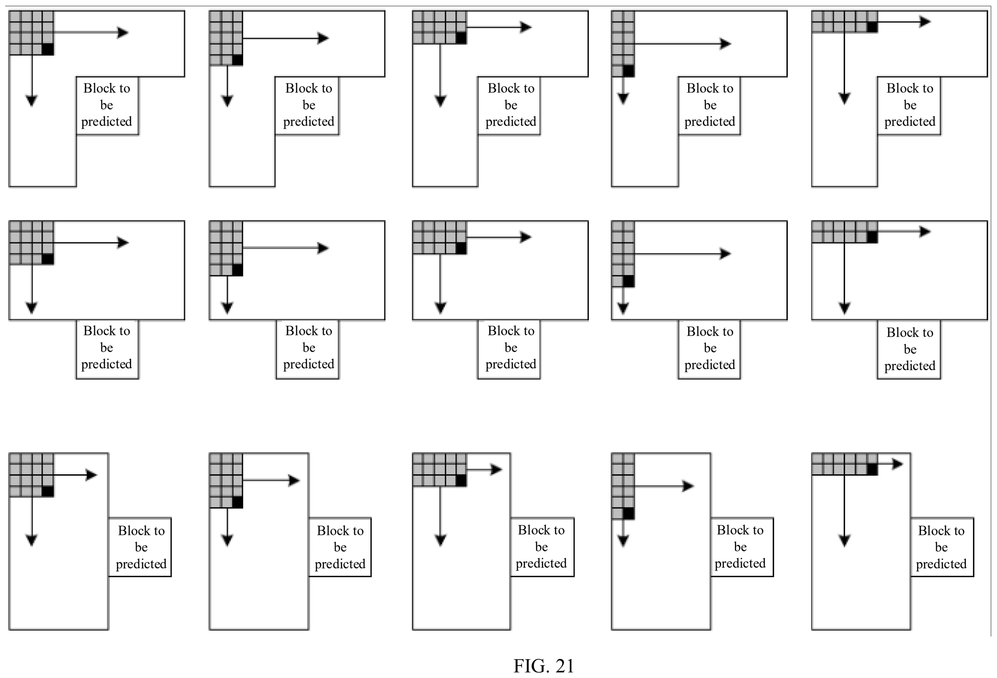

Exemplarily, as illustrated in FIG. 21, in response to the interpolation filter of the current block being an interpolation filter with five different shapes and the reference region of the current block being a reference region with three different types, the interpolation filter of the current block is slid on the de-averaged reference region of the current block, to obtain the filter coefficients of the interpolation filter. The interpolation filter may slide row by row in a horizontal direction or column by column in a vertical direction on the de-averaged reference region. The block to be predicted in FIG. 21 is the current block.

As illustrated in FIG. 21, in the process of sliding the interpolation filter within the reference region of the current block, N positions corresponding to each position of the reference region are first determined based on the shape of the interpolation filter. For example, for a position r within the reference region, N positions corresponding to the position r are determined within the reference region based on the shape of the interpolation filter, where sample reconstructed values of the N positions are the inputs of the interpolation filter. Phase position differences between the N positions and position r are $\{p_0, p_1, \ldots, p_{N-1}\}$, and $p_N$ is a two-dimensional representation. Here, $\{c_0, c_1, \ldots, c_{N-1}\}$ is interpolation filter coefficients at positions $\{p_0, p_1, \ldots, p_{N-1}\}$.

In an example, the interpolation filter is slid within the reference region of the current block, and the constructed Wiener-Hopf equation is shown in formula (5):

$$
\begin{bmatrix}
\sum_{\|\mathcal{R}\|}(t[r+p_0]-m)(t[r+p_0]-m) & \cdots & \sum_{\|\mathcal{R}\|}(t[r+p_{N-1}]-m)(t[r+p_0]-m) \\
\vdots & \ddots & \vdots \\
\sum_{\|\mathcal{R}\|}(t[r+p_0]-m)(t[r+p_{N-1}]-m) & \cdots & \sum_{\|\mathcal{R}\|}(t[r+p_{N-1}]-m)(t[r+p_{N-1}]-m)
\end{bmatrix}
\begin{bmatrix}
c_0 \\
\vdots \\
c_{N-1}
\end{bmatrix}
=
$$
$$
\begin{bmatrix}
\sum_{\|\mathcal{R}\|}(t[r]-m)(t[r+p_0]-m) \\
\vdots \\
\sum_{\|\mathcal{R}\|}(t[r]-m)(t[r+p_{N-1}]-m)
\end{bmatrix}
\quad (5)
$$

Here, R is the reference region of the current block, $t[r + p_n]$ - m is a de-averaged sample reconstructed value of a sample at position $r + p_n$ within the reference region, and $t[r]$ - m is a de-averaged sample reconstructed value of the sample at position r within the reference region.

Since the reference region of the current block is the reconstructed region, except for the interpolation filter coefficients $\begin{bmatrix} c_0 \\ \vdots \\ c_{N-1} \end{bmatrix}$, all other parameters in the above formula (5) are known. Therefore, the filter coefficients of the interpolation filter of the current block may be determined by solving the above formula (5).

In an example, the decoding side may solve the Wiener-Hopf equation shown in the formula (5) through Cholesky decomposition of an autocorrelation coefficient matrix, to obtain the filter coefficients of the filter.

After determining the filter coefficients of the interpolation filter based on the above formula (5), the decoding side performs the above steps S101-A2. That is, the interpolation filtering prediction is performed on the current block using the interpolation filter based on the filter coefficients, to obtain the prediction block of the current block.

In the formula (5), the de-averaged reference region is used to determine the filter coefficients. Therefore, in a case where the prediction value of the current block is determined based on the filter coefficients, influence of the sample average reconstructed value m needs to be considered.

In a possible implementation, after the interpolation filter coefficients determined by the formula (5) are substituted into the formula (4) to obtain the prediction value of each point in the current block, the sample average reconstructed value m is added to the prediction value of each point to obtain a final prediction value of each point in the current block, thereby obtaining the prediction block of the current block.

In another possible implementation, S101-A2 includes following steps.

In S101-A21, sample values of N positions corresponding to an r-th point in the current point are determined based on a shape of the interpolation filter, where r is a positive integer.

In S101-A22, the sample values of the N positions are de-averaged based on the sample average reconstructed value, to obtain de-averaged sample values of the N positions.

In S101-A23, a prediction value of the r-th point is obtained based on the de-averaged sample values and the filter coefficients.

In S101-A24, the prediction block of the current block is obtained based on the prediction values of points of the current block.

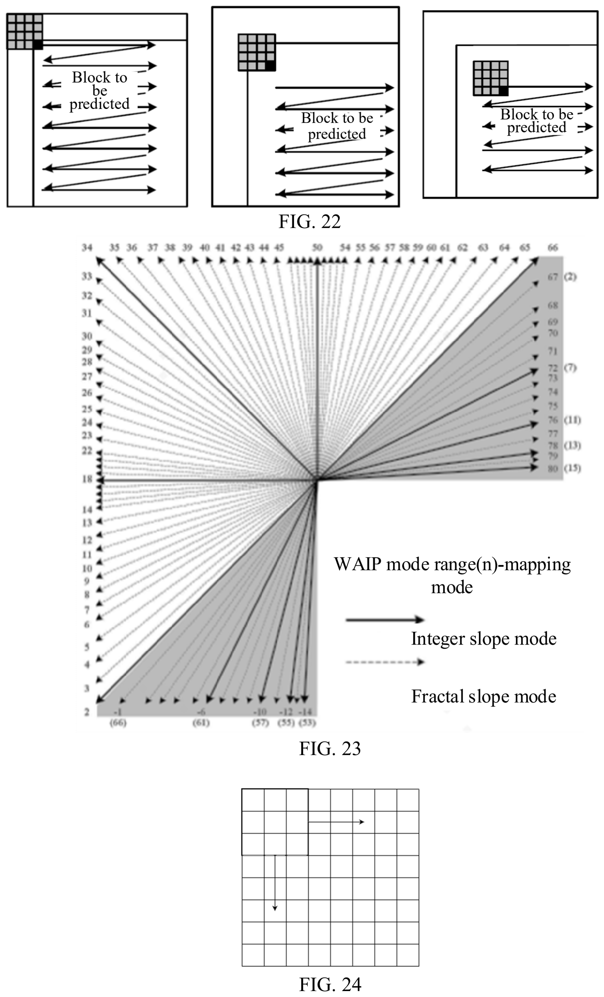

As illustrated in FIG. 22, it is assumed that the shape of the interpolation filter of the current block is 4×4, the decoding side performs interpolation prediction on each position in the current block using an interpolation filter with known filter coefficients. Specifically, the sample values of the N positions corresponding to the r-th point in the current block are first determined based on the shape of the interpolation filter of the current block. For example, as illustrated in FIG. 22, in the 4×4 interpolation filter, a dark position is a position of the r-th point to be processed, and fifteen light positions are the N positions corresponding to the r-th point. The block to be predicted in FIG. 22 is the current block.

Then, the sample values of the N positions corresponding to the r-th point are determined. For example, in response to any position among the N positions being located in a reconstructed region around the current block, a reconstructed value of the position is determined as a sample value of the position. In response to the position in the N positions being within the current block, a prediction value of the position is determined as the sample value of the position.

Since the filter coefficients are determined based on the de-averaged reference region, the decoding side de-averages the sample values of the N positions corresponding to the r-th point based on the sample average reconstructed value, to obtain the averaged sample values of the N positions corresponding to the r-th point. For example, the sample average reconstructed value is subtracted from each of the sample values of the N positions corresponding to the r-th point, to obtain the de-averaged sample values of the N positions of the r-th point.

Then, the prediction value of the r-th point is obtained based on the de-averaged sample values of N positions and the filter coefficients.

The specific manner of obtaining the prediction value of the r-th point based on the de-averaged sample values of N positions and the filter coefficients is not limited in the embodiments of the present disclosure.

In an implementation, the decoding side substitutes the de-averaged sample values of the N positions corresponding to the r-th point and the filter coefficients into the formula (4). In this case, $t[ri + p_n]$ in the formula (4) is the de-averaged sample value of the sample at the position $ri + p_n$. After determining the prediction value of the r-th point based on the formula (4), the sample average reconstructed value m is added to the prediction value, to obtain the final prediction value of the r-th point.

In another implementation, S101-A23 includes following steps.

In S101-A231, a second reconstructed region around the current block is determined, and a maximum reconstructed value of the second reconstructed region and a minimum reconstructed value of the second reconstructed region are determined.

In S101-A232, a first prediction value is obtained based on the de-averaged sample values of the N positions, the filter coefficients and the sample average reconstructed value.

In S101-A233, the prediction value of the r-th point is determined based on the first prediction value, the maximum reconstructed value and the minimum reconstructed value.

In this implementation, the decoding side limits the prediction value of the current block to a range. Specifically, a second reconstructed region is determined, and a maximum reconstructed value max of samples and a minimum reconstructed value min of the samples in the second reconstructed region are determined.

The specific manner of determining the second reconstructed region around the current block is not limited in the embodiments of the present disclosure.

In an example, the second reconstructed region of the current block is consistent with the reference region of the current block.

In an example, the second reconstructed region of the current block is consistent with the first reconstructed region of the current block.

In an example, a top reconstructed region of the current block, a left reconstructed region of the current block, a top-right reconstructed region of the current block, a top-left reconstructed region of the current block and a bottom-left reconstructed region of the current block are determined as the second reconstructed region. For example, a 13-top-row reconstructed region of the current block, a 13-left-column reconstructed region of the current block, a 13-top-right-row reconstructed region of the current block, a 13-top-left-row and 13-top-left-column reconstructed region of the current block and a 13-bottom-left-column reconstructed region of the current block are determined as the second reconstructed region.

It should be noted that there is no order of precedence for S101-A231 and S101-A232 in the specific implementation process. For example, S101-A231 may be performed before S101-A232, or after S101-A232, or synchronously with S101-A232.

The specific manner in which the decoding side obtains the first prediction value based on the de-averaged sample values of N positions, the filter coefficients and the sample average reconstructed value is not limited in the embodiments of the present disclosure.

For example, the de-averaged sample values of the N positions corresponding to the r-th point are multiplied by the filter coefficients respectively, to obtain a second prediction value of the r-th point. The second prediction value and the sample average reconstructed value are added, to obtain the first prediction value of the r-th point.

Exemplarily, the decoding side obtains the first prediction value of the r-th point based on the following formula (6):

$$pred_r = m + \sum((t_{r+p_n} - m) \times c_n) \quad (6)$$

Here, $(t_{r+p_n} - m)$ is a de-averaged sample value of a sample at the position $r + p_n$, $pred_r$ is the first prediction value of the r-th point, and $\sum((t_{r+p_n} - m) \times c_n)$ is the second prediction value of the r-th point.

For another example, after obtaining the prediction value of the r-th point based on the formula (6), the decoding side performs prediction on the prediction value to obtain the first prediction value of the r-th point.

After determining the first prediction value of the r-th point in the current block based on the above steps, the decoding side determines the prediction value of the r-th point based on the first prediction value, the maximum reconstructed value and the minimum reconstructed value.

For example, in response to the first prediction value being greater than the minimum reconstructed value and less than the maximum reconstructed value, the first prediction value is determined as the prediction value of the r-th point.

For another example, in response to the first prediction value being less than or equal to the minimum reconstructed value, the minimum reconstructed value is determined as the prediction value of the r-th point.

For yet another example, in response to the first prediction value being greater than or equal to the maximum reconstructed value, the maximum reconstructed value is determined as the prediction value of the r-th point.

In an example, the decoding side determines the prediction value of the r-th point using the following formula (7):

$$pred_r = Clip(min, max, (m + \sum((t_{r+p_n} - m) \times c_n))) \quad (7)$$

Here, Clip represents that the first prediction value of the r-th point $(m + \sum((t_{r+p_n} - m) \times c_n))$ is limited between the maximum reconstructed value max and the minimum reconstructed value min.

The above description is made by taking the determination of the prediction value of the r-th point in the current block as an example, the decoding side may refer to the above method to determine the prediction value of each point in the current block, and then the prediction value of each point in the current block constitutes the prediction block of the current block.

After performing interpolation filtering prediction on the current block based on the above steps to obtain the prediction block of the current block, the decoding side performs following steps.

In S102, an intra prediction mode corresponding to the prediction block is determined, and a transform kernel corresponding to the current block is determined based on the intra prediction mode corresponding to the prediction block.

It may be seen from the above that in a case of decoding the current block, the decoding side decodes a bitstream to obtain quantization coefficients of the current block, performs inverse quantization on the quantization coefficients to obtain the transform coefficients of the current block, and performs inverse transform on the transform coefficients of the current block to obtain a residual block (or residual values) of the current block. At the same time, the prediction mode of the current block is determined, the current block is predicted using the prediction mode to obtain the prediction block of the current block, and the prediction block and the residual block are added to obtain a reconstructed block of the current block.

In a case where inverse transform is performed on the transform coefficients of the current block, it is necessary to determine the transform kernel, and the inverse transform is performed on the transform coefficients of the current block based on the transform kernel to obtain the residual value of the current block. Currently, the decoding side predicts the current block using a traditional intra prediction mode. The decoding side may determine the transform kernel used for the current block based on correspondences between traditional intra prediction modes and transform kernels. However, in the embodiments of the present disclosure, in a case where the current block is predicted, the interpolation filtering prediction mode is used instead of the traditional intra prediction mode. Therefore, it is not possible to directly determine the transform kernel corresponding to the current block based on the interpolation filtering prediction mode.

In order to solve the technical problem, in the embodiments of the present disclosure, after the prediction block of the current block is determined using the interpolation filtering prediction mode, the traditional intra prediction mode corresponding to the prediction block is determined, and the transform kernel corresponding to the current block is determined based on the traditional intra prediction mode.

The specific process in which the decoding side determines the intra prediction mode corresponding to the prediction block will be described below.

In an example, as illustrated in FIG. 7, currently, traditional intra prediction modes included in VVC are:

a PLANAR mode: an index of the intra prediction mode being 0,
a DC mode: an index of the intra prediction mode being 1, and
an angle mode: indices of the intra prediction mode being 2 to 66.

In an example, as illustrated in FIG. 23, directions of arrows in the figure are directions predicted by the angle mode present in the VVC, and the indices of the prediction modes used during decoding are 2 to 66. In a case where the current block is a non-square block, some angle directions will be replaced with wide angles, such as -1 to -14 and 67 to 80 in FIG. 23.

In some embodiments, the intra prediction mode corresponding to the prediction block is a default intra prediction mode. That is, in response to the current block being predicted using the interpolation filtering prediction mode and obtaining the prediction block, one of the traditional intra prediction modes is determined as the intra prediction mode corresponding to the prediction block by default.

In some embodiments, the decoding side determines the intra prediction mode corresponding to the prediction block through following steps.

In S102-A1, angle values of the M points in the prediction block are determined, where M is a positive integer.

In S102-A2, the intra prediction mode corresponding to the prediction block is determined based on the angle values of the M points.

In the embodiments of the present disclosure, the intra prediction mode corresponding to the prediction block is determined by counting the intra prediction modes corresponding to the angle values of M points in the prediction block.

The specific position and the specific number of the M points used for determining the angle values in the prediction block are not limited in the embodiments of the present disclosure. For example, the M points may be one point in the prediction block, or may be multiple points in the prediction block.

For example, in response to the M points being one point, the decoding side determines an angle value of the point in the prediction block (e.g., a center point of the prediction block), determines the intra prediction mode corresponding to the point based on the angle value of the point, and determines the intra prediction mode as the intra prediction mode corresponding to the prediction block.

For another example, in response to the M points being multiple points, the decoding side determines angle values of the multiple points, determines the intra prediction mode corresponding to each of the multiple points based on the angle values of the multiple points, and determines an intra prediction mode with a maximum number of occurrences among the multiple points as the intra prediction mode corresponding to the prediction block.

In some embodiments, in a case where the angle values of the M points in the prediction block are determined in a manner of sliding window, selection of the M points is related to a shape of the sliding window and a size of the sliding window. For example, each of the M points is a central point within the sliding window in a case where the sliding window slides in the prediction block.

In the embodiments of the present disclosure, the method for determining an angle value of each of the M points is the same. For ease of description, a method of determining an angle value of an i-th point among the M points is taken as an example for illustration.

The specific manner of determining the angle value of the point is not limited in the embodiments of the present disclosure.

In some embodiments, S102-A1 includes steps S102-A11 and S102-A12.

S102-A11, a horizontal gradient of an i-th point among the M points and a vertical gradient of the i-th point are determined, where i is a positive integer less than or equal to M.

S102-A12, an angle value of the i-th point is determined based on the horizontal gradient of the i-th point and the vertical gradient of the i-th point.

In the embodiments, for each point of the M points, for example, the i-th point, the decoding side first determines the horizontal gradient of the i-th point and the vertical gradient of the i-th point, and determines the angle value of the i-th point based on the horizontal gradient and the vertical gradient.

The specific manner of determining the horizontal gradient of the i-th point and the vertical gradient of the i-th point is not limited in the embodiments of the present disclosure.

In an example, the horizontal gradient value of the i-th point is determined based on prediction values of points around the i-th point in the prediction block and a change in the prediction value of the i-th point in the horizontal direction, and the vertical gradient value of the i-th point is determined based on the prediction values of points around the i-th point in the prediction block and a change in the prediction value of the i-th point in the vertical direction.

In another example, the decoding side determines prediction values of points within a sliding window centered at the i-th point in the prediction block; and obtains the horizontal gradient of the i-th point and vertical gradient of the i-th point based on the prediction values of the points within the sliding window, and a horizontal gradient operator and a vertical gradient operator.

In the example, a sliding window is first determined. For example, as illustrated in FIG. 24, a sliding window of size $3 \times 3$ is determined, and the sliding window is slid in the prediction block. Each time the sliding window is slid, a horizontal gradient of a center point of the sliding window and a vertical gradient of the center point of the sliding window are determined. For example, the center point of the current sliding window is used as the i-th point. The prediction value of each point in the current sliding window is first obtained. For example, prediction values of $3 \times 3 = 9$ points may be obtained. Then, the horizontal gradient of the i-th point and vertical gradient of the i-th point are determined based on the prediction values of the nine points and a preset horizontal gradient operator and a preset vertical gradient operator.

For example, a product of the prediction values of the points within the sliding window and the horizontal gradient operator is determined as the horizontal gradient of the i-th point $G_x$; and a product of the prediction values of the points within the sliding window and the vertical gradient operator is determined as the vertical gradient of the i-th point.

For another example, the prediction values of the points within the sliding window are multiplied by the horizontal gradient operator and then subjected to a preset operation with a preset value, to obtain the horizontal gradient of the i-th point $G_x$. The prediction values of the points within the sliding window are multiplied by the vertical gradient operator and then subjected to a preset operation with a preset value, to obtain the vertical gradient of the i-th point.

The specific values of the horizontal gradient operator and the vertical gradient operator are not limited in the embodiments of the present disclosure.

For example, the horizontal gradient operator and the vertical gradient operator are:

$$M_x = \begin{bmatrix} -1 & 0 & 1 \\ -2 & 0 & 2 \\ -1 & 0 & 1 \end{bmatrix}, M_y = \begin{bmatrix} -1 & -2 & -1 \\ 0 & 0 & 0 \\ 1 & 2 & 1 \end{bmatrix}.$$

After determining the horizontal gradient of the i-th point and the vertical gradient of the i-th point based on the above steps, the decoding side determines the angle value of the i-th point based on the horizontal gradient of the i-th point and the vertical gradient of the i-th point.

For example, an arctangent value of a ratio of the vertical gradient of the i-th point to the horizontal gradient of the i-th point is determined as the angle value of the i-th point. For example, it is shown in formula (8):

$$O = \operatorname{atan}\left(\frac{G_y}{G_x}\right) \quad (8)$$

Here, $G_x$ is the horizontal gradient of the i-th point, $G_y$ is the vertical gradient of the i-th point, O is the angle value of the i-th point, and atan () is an inverse tangent function.

In addition to using the formula (8), the decoding side may determine the angle value of the i-th point using other manners. For example, the decoding side adjusts the angle value determined through the formula (8), to obtain the angle value of the i-th point.

The decoding side determines the angle value of each of the M points using the above method, and performs S102-A2 to determine the intra prediction mode corresponding to the prediction block based on the angle values of the M points.

The specific manner of determining the intra prediction mode corresponding to the prediction block based on the angle values of the M points is not limited in the embodiments of the present disclosure.

In some embodiments, the decoding side selects angle value 1 with a maximum number of occurrences from the angle values of the M points, matches the angle value 1 with prediction angles of the traditional intra prediction modes to obtain an intra prediction mode corresponding to the angle value 1, and determines the intra prediction mode corresponding to the angle value 1 as the intra prediction mode corresponding to the prediction block.

In some embodiments, S102-A2 includes following steps S102-A21 and S102-A22.

In S102-A21, intra prediction modes corresponding to the M points are determined based on the angle values of the M points.

In S102-A22, the intra prediction mode corresponding to the prediction block is determined based on the intra prediction modes corresponding to the M points.

In this implementation, the decoding side determines the intra prediction mode corresponding to each point based on the angle value of each point of the M points. For example, the angle value of each point of the M points is matched with the prediction angles of the traditional intra prediction mode, to obtain the intra prediction mode corresponding to the angle value of the point. In this way, the intra prediction mode corresponding to each of the M points may be obtained.

Then, the intra prediction mode corresponding to the prediction block is determined based on the intra prediction mode corresponding to each of the M points.

In a possible implementation, an intra prediction mode with a maximum number of occurrences in the intra prediction modes corresponding to the M points is determined as the intra prediction mode corresponding to the prediction block.

In another possible implementation, S102-A22 includes following steps.

In S102-A221, gradient magnitude values corresponding to the M points are determined based on horizontal gradients of the M points and the vertical gradients of the M points; and

In S102-A222, the intra prediction mode corresponding to the prediction block is determined based on the intra prediction modes corresponding to the M points and gradient magnitude values corresponding to the M points.

In this implementation, the decoding side determines the gradient magnitude value corresponding to each of the M points based on the horizontal gradient and the vertical gradient of each of the M points determined above, respectively.

In the embodiments of the present disclosure, the specific manner in which the decoding side determines the gradient magnitude value corresponding to each of the M points is the same. For ease of description, an example is given in which the gradient magnitude value corresponding to the i-th point among the M points is determined.

The specific manner in which the decoding side determines the gradient magnitude value corresponding to the i-th point based on the horizontal gradient of the i-th point and the vertical gradient of the i-th point is not limited in the embodiments of the present disclosure.

For example, the decoding side multiplies the horizontal gradient of the i-th point and the vertical gradient of the i-th point, to obtain a gradient magnitude value corresponding to the i-th point.

For another example, the decoding side adds an absolute value of the horizontal gradient of the i-th point and an absolute value of the vertical gradient of the i-th point, to obtain a gradient magnitude value corresponding to the i-th point.

Exemplarily, the decoding side determines the gradient magnitude value corresponding to the i-th point based on the following formula (9):

$$G = |G_x| + |G_y| \quad (9)$$

Here, G is the gradient magnitude value corresponding to the i-th point, $G_x$ is the horizontal gradient of the i-th point, and $G_y$ is the vertical gradient of the i-th point.

The decoding side may determine a gradient magnitude value corresponding to each of the M points based on the above steps. Then, the decoding side performs S102-A222, and determines the intra prediction mode corresponding to the prediction block based on the intra prediction modes corresponding to the M points and gradient magnitude values corresponding to the M points.

In an example, an intra prediction mode corresponding to a point with a maximum gradient magnitude value among the M points is determined as the intra prediction mode corresponding to the prediction block.

In another example, a gradient magnitude value corresponding to any point among the M points is accumulated for an intra prediction mode corresponding to the point, to obtain accumulated gradient magnitude values of the intra prediction modes corresponding to the M points. An intra prediction mode with a maximum accumulated gradient magnitude value among the intra prediction modes corresponding to the M points is determined as the intra prediction mode corresponding to the prediction block.

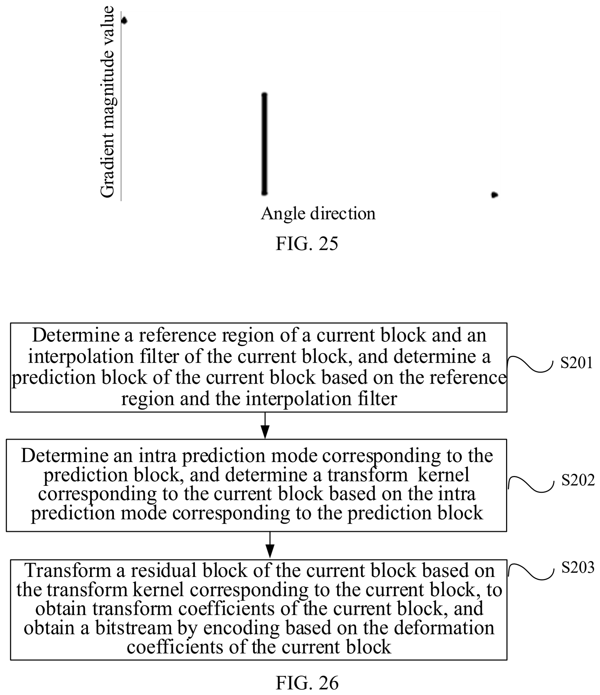

For example, as illustrated in FIG. 25, the gradient magnitude value corresponding to each of the M points is accumulated in the corresponding intra prediction mode. For example, the intra prediction modes corresponding to point 1 and point 2 among the M points are both intra prediction mode 1, and then the gradient magnitude values corresponding to point 1 and point 2 are accumulated into the gradient magnitude value corresponding to the intra prediction mode 1. By analogy, the gradient magnitude value histogram illustrated in FIG. 25 may be obtained. In this way, an intra prediction mode with a maximum accumulated gradient magnitude value in the gradient magnitude value histogram may be determined as the intra prediction mode corresponding to the prediction block. For example, an intra prediction mode corresponding to the dark accumulated gradient magnitude value in FIG. 25 is determined as the intra prediction mode corresponding to the prediction block.

In some embodiments, in response to the gradient magnitude values corresponding to the M points all being 0, a first intra prediction mode is determined as the intra prediction mode corresponding to the prediction block. That is, in response to the gradient magnitude values corresponding to all the points among the M points all being 0, it means that a horizontal gradient of each of the M points and a vertical gradient of each of the M points are 0. In this case, a preset first intra prediction mode may be determined as the intra prediction mode corresponding to the prediction block.

The type of the first intra prediction mode is not limited in the embodiments of the present disclosure.

Exemplarily, the first intra prediction mode is the PLANAR mode.

After determining the intra prediction mode corresponding to the prediction block based on the above steps, the decoding side determines the transform kernel corresponding to the current block based on the intra prediction mode corresponding to the prediction block.

The specific manner in which the decoding side determines the transform kernel corresponding to the current block based on the intra prediction mode corresponding to the prediction block is not limited in the embodiments of the present disclosure.

In some embodiments, the decoding side looks up a picture block whose intra prediction mode is the same as the intra prediction mode corresponding to the prediction block in decoded picture blocks around the prediction block based on the intra prediction mode corresponding to the prediction block, and determines the transform kernel corresponding to the picture block as the transform kernel corresponding to the current block.

In some embodiments, determining the transform kernel corresponding to the current block based on the intra prediction mode corresponding to the prediction block in S102 includes following steps.

In S102-B1, correspondences between intra prediction modes and the transform kernel groups are obtained, where a transform kernel group includes at least one type of transform kernels.

In S102-B2, a first transform kernel group corresponding to the intra prediction mode of the prediction block is looked up in the correspondences.

In S102-B3, the transform kernel corresponding to the current block is determined from the first transform kernel group.

In the embodiments of the present disclosure, there are correspondences between the intra prediction modes and the transform kernel groups. Based on this, after determining the intra prediction mode corresponding to the prediction block, the decoding side obtains the correspondences between the preset intra prediction modes and the transform kernel groups.

In an example, the correspondences between the intra prediction modes and the transform kernel groups are shown in Table 16.

Table 16

| Traditional intra prediction mode | Planar mode | DC mode | Angle directions -14~-1 67~80, 2 and 66 | Angle directions 3 and 65 | Angle directions 4 and 64 | Angle directions 5 and 63 | Angle directions 6 and 62 | Angle directions 7 and 61 | Angle directions 8 and 60 |
|---|---|---|---|---|---|---|---|---|---|
| Transform kernel group | 0 | 1 | 2 | 3 | 4 | 5 | 6 | 7 | 8 |
| Angle directions 9 and 59 | Angle directions 10 and 58 | Angle directions 11 and 57 | Angle directions 12 and 56 | Angle directions 13 and 55 | Angle directions 14 and 54 | Angle directions 15 and 53 | Angle directions 16 and 52 | Angle directions 17 and 51 | Angle directions 18 and 50 |
| 9 | 10 | 11 | 12 | 13 | 14 | 15 | 16 | 17 | 18 |
| Angle directions 19 and 49 | Angle directions 20 and 48 | Angle directions 21 and 47 | Angle directions 22 and 46 | Angle directions 23 and 45 | Angle directions 24 and 44 | Angle directions 25 and 43 | Angle directions 26 and 42 | Angle directions 27 and 41 | Angle directions 28 and 40 |
| 19 | 20 | 21 | 22 | 23 | 24 | 25 | 26 | 27 | 28 |
| Angle directions 29 and 39 | Angle directions 30 and 38 | Angle directions 31 and 37 | Angle directions 32 and 36 | Angle directions 33 and 35 | Angle direction 34 | | | | |
| 29 | 30 | 31 | 32 | 33 | 34 | | | | |

It should be noted that the Table 16 only shows part of correspondences between the intra prediction modes and the transform kernel groups involved in the embodiments of the present disclosure. The correspondences between the intra prediction modes and the transform kernel groups in the embodiments of the present disclosure include but are not limited to those shown in Table 15.

Here, each transform kernel group includes at least one type of transform kernels.

After obtaining the correspondences between the intra prediction modes and the transform kernel groups as shown in Table 16, the decoding side looks up the transform kernel group corresponding to the intra prediction mode corresponding to the prediction block in the correspondences between the intra prediction modes and the transform kernel groups based on the intra prediction mode corresponding to the prediction block, and records the transform kernel group as the first transform kernel group. For example, the intra prediction mode corresponding to the prediction block is an angular prediction mode in the angle direction 64. By looking at Table 16, it may be obtained that the transform kernel group corresponding to the angular prediction mode in the angle direction 64 is 4. In this way, the decoding side determines the transform kernel corresponding to the current block from the at least one type of transform kernels included in the transform kernel group 4.

For example, in response to the first transform kernel group including one transform kernel, the transform kernel is determined as the transform kernel corresponding to the current block.

For another example, in response to the first transform kernel group including transform kernels of multiple types, the decoding side determines a transform kernel type corresponding to the current block, and then determines a transform kernel corresponding to the transform kernel type in the first transform kernel group as the transform kernel corresponding to the current block.

The methods in which the decoding side determines the transform kernel type corresponding to the current block include but are not limited to the following.

In an example, the transform kernel type corresponding to the current block is a default type. In this way, the decoding side determines the default type as the transform kernel type corresponding to the current block.

In another example, the encoding side signals the transform kernel type corresponding to the current block into the bitstream. In this way, the decoding side obtains the transform kernel type corresponding to the current block by decoding the bitstream.

It may be seen from the above that in the embodiments of the present disclosure, the decoding side determines the prediction block of the current block using the interpolation filtering prediction mode, determines the traditional intra prediction mode corresponding to the prediction block, and determines the transform kernel corresponding to the current block based on the traditional intra prediction mode corresponding to the prediction block. That is, in the embodiments of the present disclosure, the traditional intra prediction mode derived based on the interpolation filtering prediction is used for selection of transform kernel groups of non-separable primary transform (NSPT) and low frequency non-separable secondary transform (LFNST). In this way, the determined transform kernel is more in line with characteristics of the current block, which improves accuracy of determining the transform kernel. In a case where the reconstructed values of the current block are determined using the accurately determined transform kernel, accuracy of determining the reconstructed values may be improved, and accuracy of decoding the current block may be improved. In addition, in the embodiments of the present disclosure, in a case where the transform kernel of the current block is determined using the traditional prediction mode corresponding to the prediction block, there is no need to indicate the transform kernel separately, which saves codewords and further improves the video coding effect.

After determining the transform kernel corresponding to the current block based on the above steps, the decoding side performs the following step S103.

In S103, inverse transform is performed on the transform coefficients of the current block based on the transform kernel corresponding to the current block, to obtain a residual block of the current block, and a reconstructed block of the current block is obtained based on the prediction block of the current block and the residual block of the current block.

In the embodiments of the present disclosure, the decoding side determines the prediction block of the current block and the transform kernel corresponding to the current block based on the above steps. In this way, the decoding side may decode the bitstream to obtain quantization coefficients of the current block, performs inverse quantization on the quantization coefficients to obtain the transform coefficients of the current block, and performs inverse transform on the transform coefficients of the current block using the transform kernel corresponding to the current block determined above to obtain the residual block (or the residual values) of the current block. Finally, the decoding side adds the prediction block of the current block and the residual block of the current block to obtain the reconstructed block of the current block.

In some embodiments, the current block is a luma block or a chroma block. That is, in the embodiments of the present disclosure, the interpolation filtering prediction mode provided in the embodiments of the present disclosure may be used for predicting both the luma block and the chroma block.

In some embodiments, in response to the current block being the luma block, the prediction mode of the current block is the interpolation filtering prediction mode, and in a case where the chroma block corresponding to the current block uses a direct mode (DM), the PLANAR mode or the intra prediction mode corresponding to the prediction block is determined as the prediction mode of the chroma block.

In this embodiment, the luma block (or a luma component) may be predicted using the interpolation filtering prediction mode provided in the embodiments of the present disclosure. The chroma block (or a chroma component) is predicted using other intra prediction mode.

Specifically, after performing prediction decoding on the current block (i.e., the luma block) using the interpolation filtering prediction mode, the decoding side starts to perform prediction decoding on the chroma block corresponding to the current block (i.e., the luma block). In a case where the prediction decoding is performed on the chroma block, a prediction mode used by the chroma block is first determined. For example, the prediction mode of the chroma block is obtained by decoding the bitstream. In an example, in response to determining that the chroma block uses the DM, the decoding side derives the intra prediction mode of the chroma block based on the intra prediction mode of the luma block.

In an example, in response to the current block (i.e., the luma block) using the interpolation filtering prediction mode and the chroma block using the DM mode, the PLANAR mode is determined as the intra prediction mode of the chroma block, and the chroma block is predicted to obtain prediction values of the chroma block.

In another example, in response to the current block (i.e., the luma block) using the interpolation filtering prediction mode and the chroma block using the DM mode, the determined intra prediction mode corresponding to the prediction block of the current block is determined as the intra prediction mode of the chroma block, and the chroma block is predicted to obtain the prediction values of the chroma block.

In the video decoding method provided in the embodiments of the present disclosure, in a case where the current block is predicted, the reference region of the current block and the interpolation filter of the current block are first determined, and the prediction block of the current block is determined based on the reference region and the interpolation filter. For example, the reference region is filtered using the interpolation filter, and the filter coefficients of the filter are calculated. Interpolation filtering prediction is performed on the current block based on the interpolation filter with the determined filter coefficients, to obtain the prediction block of the current block. Then, the prediction mode corresponding to the prediction block is determined, and the transform kernel corresponding to the current block is determined based on the prediction mode, inverse transform is performed on the transform coefficients of the current block using the transform kernel, to obtain the residual block of the current block, and the reconstructed value of the current block is obtained based on the residual block of the current block and the prediction block of the current block. That is, in the embodiments of the present disclosure, in response to the current block being predicted using an interpolation filtering prediction method, the traditional prediction mode corresponding to the prediction block is determined, and the transform kernel corresponding to the current block is determined, so that the determined transform kernel is more in line with the characteristics of the current block, which improves the accuracy of determining the transform kernel. In a case where the reconstructed values of the current block are determined using the accurately determined transform kernel, the accuracy of determining the reconstructed value may be improved, and the accuracy of decoding the current block may be further improved. In addition, in the embodiments of the present disclosure, in a case where the transform kernel of the current block is determined using the traditional prediction mode corresponding to the prediction block, there is no need to indicate the transform kernel separately, which saves codewords and further improves the video coding effect.

The prediction method in the present disclosure is described above by taking the decoding side as an example, and it will be described below by taking the encoding side as an example.

FIG. 26 is a flowchart of a prediction method provided in the embodiments of the present disclosure, and the embodiments of the present disclosure are applied to the video encoders illustrated in FIGS. 1 and 2. As illustrated in FIG. 23, the method of the embodiments of the present disclosure includes following steps.

In S201, a reference region of a current block and an interpolation filter of the current block are determined, and a prediction block of the current block is determined based on the reference region and the interpolation filter.

In a case of encoding the current block, the encoding side first determines the prediction mode of the current block, and predicts the current block using the prediction mode to obtain the prediction block (or prediction values) of the current block. The encoding side subtracts the prediction block of the current block from the current block to obtain a residual block (or residual values) of the current block. Then, the encoding side transforms the residual block of the current block to obtain transform coefficients, quantizes the transform coefficients to obtain quantization coefficients, and encodes the quantization coefficients to obtain a bitstream.

In the embodiments of the present disclosure, the encoding side first determines the prediction mode of the current block.

In some embodiments, manners in which the encoding side determines the prediction mode of the current block at least include following manners.

In manner 1, the encoding side determines a candidate prediction mode with a minimum cost as the prediction mode of the current block from multiple candidate prediction modes consisting of the traditional prediction modes illustrated in FIGS. 6 or 7 and the interpolation filtering prediction mode. Then, the encoding side adds indication information of the prediction mode of the current block into the bitstream. In this way, the decoding side obtains the indication information of the prediction mode of the current block by decoding the bitstream, and determines the prediction mode of the current block based on the indication information.

In manner 2, the encoding side constructs an intra prediction mode candidate list, and selects the intra prediction mode of the current block from the intra prediction mode candidate list. It should be noted that the intra prediction mode candidate list includes the interpolation filtering prediction mode. The encoding side signals a sequence number (or an index number) of the intra prediction mode of the current block in the intra prediction mode candidate list into the bitstream.

In manner 3, the encoding side constructs an intra prediction mode candidate list including the interpolation filtering prediction mode, and selects the intra prediction mode of the current block from the intra prediction mode candidate list. For example, a cost of each candidate prediction mode in the intra prediction mode candidate list on the template of the current block is determined, and the intra prediction mode of the current block is determined based on the costs. Correspondingly, the decoding side constructs an intra prediction mode candidate list in the same manner as the encoding side, where the constructed intra prediction mode candidate list also includes the interpolation filtering prediction mode. The decoding side then determines a cost of each candidate prediction mode in the intra prediction mode candidate list on the template of the current block, and determines the intra prediction mode of the current block based on the costs. Finally, the current block is predicted using the determined intra prediction mode of the current block to obtain the prediction values of the current block.

It may be seen from the above methods that in a case of determining the prediction mode of the current block, the encoding side first determines the multiple candidate prediction modes, and determines the prediction mode of the current block from the multiple candidate prediction modes, where the multiple candidate prediction modes include the interpolation filtering prediction mode.

The specific manner of determining the prediction mode of the current block from the multiple candidate prediction modes may be that the encoding side determines any candidate prediction mode from the multiple candidate prediction modes as the prediction mode of the current block. That is, the encoding side predicts the current block using the multiple candidate prediction modes, and determines the cost corresponding to each candidate prediction mode, where the cost may be rate-distortion optimization (RDO) or sum of absolute transformed difference (SATD), or the like. The encoding side then determines the candidate prediction mode with the minimum cost as the prediction mode of the current block.

The encoding side determines the prediction mode of the current block based on the above method. In response to the prediction mode of the current block being the interpolation filtering prediction mode, it performs the above step S201.

In some embodiments, before determining the prediction mode of the current block from the multiple candidate prediction modes, the encoding side further needs to determine whether a position of the current block in a current picture meets a preset position requirement and whether a size of the current block meets a preset block size requirement.

The preset position and the prediction block size are not limited in the embodiments of the present disclosure, which will be determined based on actual requirements.

In an example, as illustrated in FIG. 11, it is assumed that a position of a top-left corner of the current picture is (0, 0), and a position of a top-left corner of the current block is (x, y). The preset position requirement is that an x value of the current block is greater than or equal to a first preset value XX, and a y value of the current block is greater than or equal to a second preset value YY.

The specific values of the first preset value and the second preset value are not limited in the embodiments of the present disclosure.

Exemplarily, the first preset value and the second preset value are the same.

Exemplarily, the first preset value and the second preset value are both 13. That is, in a case where a distance from a top edge of the current block to a top edge of the current picture is greater than or equal to 13 sample rows, and a distance from a left edge of the current block to a left edge of the current picture is greater than or equal to 13 sample columns, it indicates that the position of the current block in the current picture meets the preset position requirement.

In an example, with continued reference to FIG. 11, it is assumed that a width of the current block is W and a height of the current block is H, the preset block size requirement is that the width W of the current block is less than or equal to a third preset value A, and the height H of the current block is less than or equal to a fourth preset value B.

The specific values of the third preset value and the fourth preset value are not limited in the embodiments of the present disclosure.

Exemplarily, the third preset value and the fourth preset value are the same.

Exemplarily, the third preset value and the fourth preset value are both 32. That is, in a case where the width of the current block and the height of the current block are both less than or equal to 32, it indicates that the current block meets the preset block size requirement.

In the embodiments of the present disclosure, before determining whether the current block is predicted using the interpolation filtering prediction mode, the decoding side first determines whether the position of the current block in the current picture meets the preset position requirement, and determines whether the size of the current block meets the preset block size requirement. In response to the position of the current block in the current picture meeting the preset position requirement, and the size of the current block meeting the preset block size requirement, the prediction mode of the current block is determined from the multiple candidate prediction modes including the interpolation filtering prediction mode. For example, as illustrated in FIG. 11, in response to the distance from the top edge of the current block to the top edge of the current picture being greater than or equal to 13 sample rows, the distance from the left edge of the current block to the left edge of the current picture being greater than or equal to 13 sample columns, and the width of the current block and the height of the current block both being less than or equal to 32, the prediction mode of the current block is determined from the multiple candidate prediction modes including the interpolation filtering prediction mode.

In some embodiments, the first preset value, the second preset value, the third preset value and the fourth preset value are default values.

In some embodiments, in response to the position of the current block in the current picture failing to meet the preset position requirement, and/or the size of the current block failing to meet the preset block size requirement, the encoding side determines that the prediction mode of the current block is not the interpolation filtering prediction mode. In this way, the encoding side determines the prediction mode of the current block from candidate prediction modes that do not include the interpolation filtering prediction mode.

In some embodiments, before determining whether the position of the current block in the current picture meets the preset position requirement and determining whether the size of the current block meets the preset block size, the encoding side determines whether a current sequence is allowed to be predicted using the interpolation filtering prediction mode; and in response to the current sequence being allowed to be predicted using the interpolation filtering prediction mode, determines whether the position of the current block in the current picture meets the preset position requirement, and determines whether the size of the current block meets the preset block size.

In the embodiments of the present disclosure, high-level syntax element(s) are used to indicate whether the current sequence is allowed to be predicted using the interpolation filtering prediction mode. In response to the current sequence being allowed to be predicted using the interpolation filtering prediction mode, the encoding side determines whether the position of the current block in the current picture meets the preset position requirement, and determines whether the size of the current block meets the preset block size. In response to determining that the position of the current block in the current picture meets the preset position requirement and the size of the current block meets the preset block size requirement, the encoding side determines the prediction mode of the current block from the candidate prediction modes that do not include the interpolation filtering prediction mode.

In some embodiments, in response to the encoding side determining that the current sequence is not allowed to be predicted using the interpolation filtering prediction mode, the encoding side skips the above step S201.

In some embodiments, the encoding side signals fourth information into the bitstream, where the fourth information is used for indicating whether the current sequence is allowed to be predicted using the interpolation filtering prediction mode.

The specific form of the fourth information is not limited in the embodiments of the present disclosure, which may be any indication information that may indicate whether the current sequence is allowed to be predicted using the interpolation filtering prediction mode.

In an example, the fourth information may be represented as sps_eip_enabled_flag. In this way, different values of sps_eip_enabled_flag may be used to indicate whether the current sequence is allowed to be predicted using the interpolation filtering prediction mode. For example, in a case where sps_eip_enabled_flag=0, it indicates that the current sequence is not allowed to be predicted using the interpolation filtering prediction mode. In a case where sps_eip_enabled_flag=1, it indicates that the current sequence is allowed to be predicted using the interpolation filtering prediction mode.

Exemplarily, the fourth information is carried in the SPS.

In some embodiments, the embodiments of the present disclosure may further include a GCI flag, which is used for indicating whether to use the interpolation filtering prediction technology. Exemplarily, gci_no_eip_constraint_flag is used for indicating whether the interpolation filtering prediction technology is enabled for the current video. Exemplarily, as shown in Table 2, gci_no_eip_constraint_flag is carried in the general constraints information general_constraints_info( ).

In some embodiments, in response to determining that the current sequence is allowed to be predicted using the interpolation filtering prediction mode, the encoding side signals third information into the bitstream. The third information is used for indicating whether the current block is predicted using the interpolation filtering prediction mode.

The specific form of the third information is not limited in the embodiments of the present disclosure, which may be any indication information that may indicate whether the current block is predicted using the interpolation filtering prediction mode.

In an example, the third information may be represented as intra_eip_flag. In this way, different values of intra_eip_flag may be used to indicate whether the current block is predicted using the interpolation filtering prediction mode. For example, in a case where intra_eip_flag=0, it indicates that the current block is not predicted using the interpolation filtering prediction mode. In a case where intra_eip_flag=1, it indicates that the current block is predicted using the interpolation filtering prediction mode. In this way, the encoding side signals the preset flag intra_eip_flag into the bitstream, and the decoding side determines the prediction mode of the current block through the decoded value of the preset flag intra_eip_flag. For example, in a case where the preset flag intra_eip_flag=1, it indicates that the prediction mode of the current block is the interpolation filtering prediction mode, and then the decoding side predicts the current block using the interpolation filtering prediction mode.

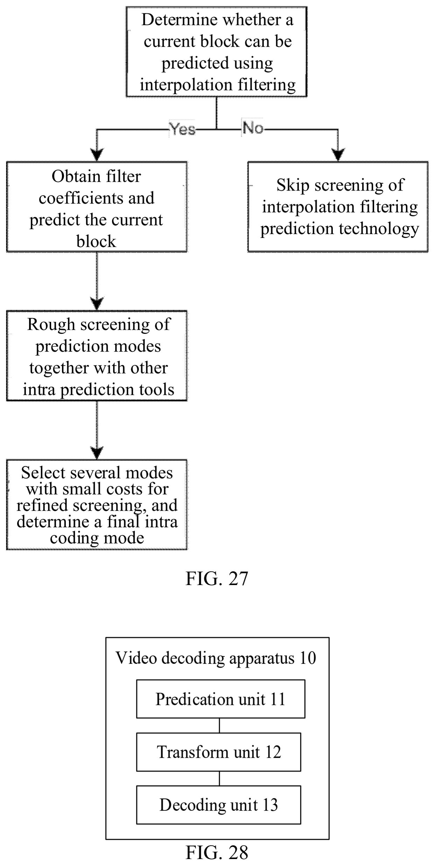

In some embodiments, as illustrated in FIG. 27, in the embodiments of the present disclosure, the process of determining the prediction mode of the current block may include: determining whether the current block is predicted using the interpolation filtering prediction mode first. For example, the fourth information at the sequence level indicates that the current sequence is allowed to use the interpolation filtering prediction mode. In a case where it is determined that the position of the current block in the current picture meets the preset position requirement and that the size of the current block meets the preset block size requirement, it is determined that the current block may be predicted using the interpolation filtering prediction mode. Then, filter coefficients are obtained, and the current block is predicted based on the filter coefficients to obtain the prediction values of the current block. At the same time, prediction modes are roughly screened together with other intra prediction mode tools, several prediction modes with small costs are selected for fine screening, and the final intra prediction mode is determined as the prediction mode of the current block. In response to determining that the current block cannot be predicted using the interpolation filtering prediction mode, the screening of the interpolation filtering prediction mode is skipped.

For example, in the stage of roughly screening the prediction mode of the current block, the encoding side calculates a cost of each candidate intra prediction mode (including the interpolation filtering prediction mode), and a calculation formula of the cost is shown in formula (10).

$$cost = D + \lambda R \qquad (10)$$

Here, R represents bit overhead expected to be spent in encoding the intra prediction mode, $\lambda$ is a Lagrange multiplier, which is related to a quantization parameter used in the current encoding, and D represents a distortion value between the prediction block and an original block in the current prediction mode.

In an example, calculation of the distortion value D is as shown in formula (11):

$$D = min(SAD \times 2, SATD) \qquad (11)$$

Here, sum of absolute difference (SAD) and SATD represent a sum of absolute difference algorithm and a sum of Hadamard transform differences algorithm between the prediction block and the original block respectively.

After determining the cost of each candidate prediction mode, the encoding side selects several candidate prediction modes from the multiple candidate prediction modes for fine screening.

In the prediction modes after rough screening, complete residual transform, quantization, inverse quantization, inverse transform and reconstruction will be further performed, and rate-distortion cost comparison for each mode combination (a prediction mode + a transform mode + a quantization mode) will be performed to determine the final prediction mode, transform mode and quantized residual values. The rate-distortion cost calculation is still D + $\lambda$R, but here D represents a sum of squared error (SSE) between the reconstructed block and the original block, and R represents total bit overhead of a mode identifier, coefficients, or the like, of encoding the current block.

The encoding side determines a candidate prediction mode with the minimum cost in the fine screening process as the prediction mode of the current block.

In response to determining that the prediction mode of the current block is the interpolation filtering prediction mode, the encoding side performs the above step S101.

The process of predicting the current block by the encoding side using the interpolation filtering prediction mode will be described below.

In a case where the encoding side determines that the current block is predicted using the interpolation filtering prediction mode, the encoding side first determines the reference region of the current block and the interpolation filter of the current block.

The specific process in which the encoding side determines the reference region of the current block will be described below.

In the embodiments of the present disclosure, the reference region of the current block is part or all of reconstructed regions around the current block.

Exemplarily, as illustrated in FIG. 12, reconstructed regions around the current block may include: a top reconstructed region of the current block, a left reconstructed region of the current block, a top-right reconstructed region of the current block, a bottom-left reconstructed region of the current block, and a top-left reconstructed region of the current block.

The specific shape and the specific size of the reference region of the current block are not limited in the embodiments of the present disclosure.

In an example, the reference region of the current block includes any one of the top reconstructed region of the current block, the left reconstructed region of the current block, the top-right reconstructed region of the current block, the bottom-left reconstructed region of the current block, and the top-left reconstructed region of the current block. For example, the reference region of the current block is the top reconstructed region of the current block, or the reference region of the current block is the left reconstructed region of the current block.

In an example, the reference region of the current block includes any two of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block and the left reconstructed region of the current block. For another example, the reference region of the current block includes the top reconstructed region of the current block and the bottom-left reconstructed region of the current block.

In an example, the reference region of the current block includes any three of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, and the top-left reconstructed region of the current block. For another example, the reference block of the current block includes the left reconstructed region of the current block, the top-left reconstructed region of the current block, and the bottom-left reconstructed region of the current block.

In an example, the reference region of the current block includes any four of the top reconstructed region of the current block, the left reconstructed region of the current block, the top-right reconstructed region of the current block, the bottom-left reconstructed region of the current block, and the top-left reconstructed region of the current block. For example, the reference region of the current block includes the top reconstructed region of the current block, the top-right reconstructed region of the current block, the top-left reconstructed region of the current block, and the left reconstructed region of the current block. For another example, the reference block of the current block includes the left reconstructed region of the current block, the top-left reconstructed region of the current block, the bottom-left reconstructed region of the current block, and the top reconstructed region of the current block.

In an example, the reference region of the current block includes five reconstructed regions, which are the top reconstructed region of the current block, the left reconstructed region of the current block, the top-right reconstructed region of the current block, the bottom-left reconstructed region of the current block, and the top-left reconstructed region of the current block.

In the embodiments of the present disclosure, the specific manners in which the encoding side determines the reference region of the current block include but are not limited to following manners.

In manner 1, the reference region of the current block is a default region. For example, the encoding side and the decoding side default to the reference region of the current block including at least one of the top reconstructed region of the current block, the left reconstructed region of the current block, the top-right reconstructed region of the current block, the bottom-left reconstructed region of the current block, or the top-left reconstructed region of the current block.

In manner 2, first costs are determined in a case where the current block is predicted based on P reference regions; and a reference region with a minimum first cost among the P reference regions are determined as the reference region of the current block.

In this implementation, the encoding side predicts the current block based on the P reference regions to determine the first cost corresponding to each reference region, and determines the reference region with the minimum first cost among the P reference regions as the reference region of the current block.

In some embodiments, the encoding side signals first information into the bitstream, where the first information indicates a type of the reference region of the current block. That is, in manner 2, the encoding side further indicates the determined type of the reference region of the current block to the decoding side through the first information.

It should be noted that types or shapes of the preset P reference regions are different from each other.

The specific number and the specific shapes of the P reference regions are not limited in the embodiments of the present disclosure in detail.

In an example, the P reference regions include at least one of a first reference region, a second reference region, or a third reference region.

As illustrated in FIG. 13A, the first reference region includes the top reconstructed region of the current block, the top-right reconstructed region of the current block, the left reconstructed region of the current block, the top-left reconstructed region of the current block, and the top-left reconstructed region of the current block. As illustrated in FIG. 13B, the second reference region includes the top reconstructed region of the current block, the top-right reconstructed region of the current block, and the top-left reconstructed region of the current block. As illustrated in FIG. 13C, the third reference region includes the left reconstructed region of the current block, the top-left reconstructed region of the current block, and the top-left reconstructed region of the current block.

The specific form of the first information is not limited in the embodiments of the present disclosure, as long as it is any indication information that may indicate the type of the reference region of the current block.

In an example, eip_ref_type is used for representing the first information. For example, values of eip_ref_type are used for indicating different types of reference regions.

Exemplarily, correspondences between the three reference regions illustrated in FIGS. 13A and 13B and the values of eip_ref_type are shown in Table 4.

Based on the Table 4, the encoding side determines the value of the first information eip_ref_type based on the type of the reference region of the current block. For example, in response to determining that the reference region of the current block is the first reference region, eip_ref_type=0 is determined. In response to determining that the reference region of the current block is the second reference region, eip_ref_type=1 is determined. In response to determining that the reference region of the current block is the third reference region, eip_ref_type=2 is determined.

It should be noted that the above description is made by taking an example in which the P reference regions are the three reference regions illustrated in FIGS. 13A to 13C. The P reference regions in the embodiments of the present disclosure include other reference regions in addition to the three reference regions, which are not limited in the embodiments of the present disclosure. The correspondences between the reference regions and the values of eip_ref_type shown in Table 4 may be adaptively adjusted based on the number of the reference regions.

In some embodiments, the encoding side may signals the first information into the bitstream using an encoding manner of a truncated binary code.

Exemplarily, correspondences between the truncated binary codes, the values of the eip_ref_type value and the types of the reference regions are shown in Table 5.

In the embodiment of the present disclosure, the encoding side may encode codewords of the truncated binary code using an equal probability encoding manner or a context model encoding manner.

In addition to using the manner 1 or manner 2, the encoding side may determine the reference region of the current block using the following manner 3.

In manner 3, the reference region of the current block is determined from the preset P reference regions based on a shape of the current block.

In this manner 3, different reference regions are used for predicting different shapes of current blocks, to improve accuracy of prediction.

For example, in response to the shape of the current block being a square, a reference region of a first type is used.

For another example, in response to the shape of the current block being a rectangle with a width greater than a height, a reference region of a second type is used.

For yet another example, in response to the shape of the current block being a rectangle with a width less than a height, a reference region of a third type is used.

That is, in the embodiments of the present disclosure, the correspondences between the P reference regions and the shapes of the current block are preset. In this way, the encoding side may determine the reference region of the current block from the P reference regions based on the shape of the current block through the correspondences between the P reference regions and the shapes of the current block.

The process in which the encoding side determines the interpolation filter of the current block will be described below.

The specific shape of the interpolation filter is not limited in the embodiments of the present disclosure.

Exemplarily, interpolation filters provided in the embodiments of the present disclosure include, but are not limited to: a square interpolation filter, and an interpolation filter with a height less than a width.

For example, the square interpolation filter includes but is not limited to a $4 \times 4$ interpolation filter illustrated in FIG. 14A.

For another example, interpolation filters with a height greater than a width include but are not limited to a $5 \times 3$ interpolation filter illustrated in FIG. 14B, a $6 \times 2$ interpolation filter illustrated in FIG. 14D, and a $7 \times 1$ interpolation filter illustrated in FIG. 14G.

For yet another example, interpolation filters with a height less than a width include but are not limited to a $3 \times 5$ interpolation filter illustrated in FIG. 14C, a $2 \times 6$ interpolation filter illustrated in FIG. 14E, and a $1 \times 7$ interpolation filter illustrated in FIG. 14F.

It should be noted that, in the above filters, positions with dark gray represent a current position to be predicted, and positions with light gray represent input positions of the interpolation filter, i.e., positions: $\{p_0, p_1, ... , p_{N-1}\}$.

In the embodiments of the present disclosure, the specific manners in which the encoding side determines the interpolation filter of the current block include but are not limited to following manners.

In manner 1, the interpolation filter of the current block is a default interpolation filter. For example, the encoding side and the decoding side default to the interpolation filter of the current block being any one of the interpolation filters in FIGS. 14A to 14G. For example, the default interpolation filter is a $4 \times 4$ interpolation filter.

In manner 2, the encoding side determines the interpolation filter of the current block from the preset Q interpolation filters.

For example, the encoding side randomly selects an interpolation filter from the Q interpolation filters as the interpolation filter of the current block.

For another example, the encoding side determines second costs in a case where the current block is predicted using the Q interpolation filters; and determines an interpolation filter with a minimum second cost from the Q interpolation filters as the interpolation filter of the current block.

In some embodiments, the encoding side signals second information into the bitstream, where the second information is used for indicating a shape of the interpolation filter of the current block.

In this implementation, the encoding side determines the interpolation filter of the current block from the preset Q interpolation filters. For example, the encoding side determines second costs corresponding to the Q interpolation filters respectively, and determines the interpolation filter with the minimum second cost as the interpolation filter of the current block. Then, the shape of the determined interpolation filter with the minimum second cost is indicated to the encoding side through the second information. In this way, the decoding side obtains the second information by decoding the bitstream, and determines the interpolation filter of the current block from the preset Q interpolation filters based on the shape of the interpolation filter indicated by the second information.

It should be noted that the shapes of the preset Q interpolation filters are different from each other.

The specific number and specific shapes of the Q interpolation filters are not limited in the embodiments of the present disclosure in detail. For example, the Q interpolation filters include at least one of a first interpolation filter, a second interpolation filter, or a third interpolation filter. The first interpolation filter is a square interpolation filter, the second interpolation filter is a rectangular interpolation filter with a width greater than a height, and the third interpolation filter is a rectangular interpolation filter with a height greater than a width.

In an example, the Q interpolation filters include multiple interpolation filters in FIGS. 14A to 14H.

The specific form of the second information is not limited in the embodiments of the present disclosure, as long as it is any indication information that may indicate the shape of the interpolation filter of the current block.

In an example, eip_filter_type is used for representing the second information. For example, values of eip_filter_type are used for indicating different shapes of interpolation filters, respectively.

Exemplarily, in response to the Q interpolation filters being five interpolation filters illustrated in FIG. 15, the correspondences between the five interpolation filters and the values of eip_filter_type values are shown in Table 6.

Based on Table 5, the encoding side determines the value of the second information eip_filter_type based on the determined shape of the interpolation filter of the current block. For example, in response to determining that the shape of the interpolation filter of the current block is $4 \times 4$, eip_filter_type=0 is determined. In response to determining that the shape of the interpolation filter of the current block is $3 \times 5$, eip_filter_type=1 is determined. In response to determining that the shape of the interpolation filter of the current block is $5 \times 3$, eip_filter_type=2 is determined. In response to determining that the shape of the interpolation filter of the current block is $2 \times 6$, eip_filter_type=3 is determined. In response to determining that the shape of the interpolation filter of the current block is $6 \times 2$, eip_filter_type=4 is determined.

In some embodiments, the encoding side may signal the second information into the bitstream using an encoding manner of a truncated binary code.

Exemplarily, in response to the preset Q interpolation filters including the five interpolation filters illustrated in FIG. 15, the correspondences between truncated binary codes, the values of eip_filter_type, and the shapes of the interpolation filter are shown in Table 7.

In this case, five shapes of the interpolation filter shown in Table 7 and the three types of reconstructed regions shown in Table 5 result in a total of fifteen combinations of interpolation filters and reconstructed regions.

In some embodiments, in a case where the embodiments of the present disclosure include seven interpolation filters as illustrated in FIG. 16, the correspondences between the truncated binary codes, the values of eip_filter_type and the shapes of the interpolation filter are shown in Table 9.

In this case, seven shapes of the interpolation filter shown in Table 9 and the three types of reconstructed regions shown in Table 5 result in a total of twenty-one combinations of interpolation filters and reconstructed regions.

In some embodiments, in a case where the embodiments of the present disclosure include three interpolation filters as illustrated in FIG. 17, the correspondences between the truncated binary codes, the values of eip_filter_type, and the shapes of the interpolation filter are shown in Table 10.

In this case, three shapes of the interpolation filter shown in Table 10 and the three types of reconstructed regions shown in Table 5 result in a total of nine combinations of interpolation filters and reconstructed regions.

In some embodiments, in a case where the embodiments of the present disclosure include three interpolation filters as illustrated in FIG. 18A, the correspondences between the truncated binary codes, the values of eip_filter _type, and the shapes of the interpolation filter are shown in Table 11.

In this case, three shapes of the interpolation filter shown in Table 11 and the three types of reconstructed regions shown in Table 5 result in a total of nine combinations of interpolation filters and reconstructed regions.

In some embodiments, in a case where the embodiments of the present disclosure include three interpolation filters as illustrated in FIG. 18B, the correspondences between the truncated binary codes, the values of eip_filter _type, and the shapes of the interpolation filter are shown in Table 12.

In this case, three shapes of the interpolation filter shown in Table 12 and the three types of reconstructed regions shown in Table 5 result in a total of nine combinations of interpolation filters and reconstructed regions.

In some embodiments, in a case where the embodiments of the present disclosure include three interpolation filters as illustrated in FIG. 19, the correspondences between the truncated binary codes, the values of eip_filter_type, and the shapes of the interpolation filter are shown in Table 13.

In this case, three shapes of the interpolation filter shown in Table 13 and the three types of reconstructed regions shown in Table 5 result in a total of nine combinations of interpolation filters and reconstructed regions.

In addition to using the manner 1 or manner 2, the encoding side may use the following manner 3 to determine the interpolation filter of the current block.

In manner 3, the interpolation filter of the current block is determined from the preset Q interpolation filters based on the shape of the current block.

In manner 3, different interpolation filters are used for predicting different shapes of current blocks, to improve accuracy of prediction.

For example, in response to the shape of the current block being a square, an interpolation filter of a first shape is used.

For another example, in response to the shape of the current block being a rectangle with a width greater than a height, an interpolation filter of a second shape is used.

For yet another example, in response to the shape of the current block being a rectangle with a width less than a height, an interpolation filter of a third shape is used.

That is, in the embodiments of the present disclosure, the correspondences between the Q interpolation filters and the shapes of the current block are preset. In this way, the encoding side may determine the interpolation filter of the current block from the Q interpolation filters based on the shape of the current block through the correspondences between the Q interpolation filters and the shapes of the current block.

In the embodiments of the present disclosure, after determining the reference region of the current block and the interpolation filter of the current block based on the above steps, the encoding side determines the prediction block of the current block based on the reference region and the interpolation filter.

The process of determining the prediction block of the current block by the encoding side based on the reference region and interpolation filter of the current block will be described below.

In an embodiment of the present disclosure, after determining the reference region of the current block and the interpolation filter of the current block, the encoding side performs filtering on the reference region using the interpolation filter to determine filter coefficients of the interpolation filter, and performs interpolation filtering on the current block based on the determined filter coefficients to obtain the prediction block of the current block.

The specific manner in which the encoding side determines the prediction block of the current block based on the reference region of the current block and the interpolation filter of the current block is not limited in the embodiments of the present disclosure.

In some embodiments, determining the prediction block of the current block based on the reference region of the current block and the interpolation filter of the current block in S201 includes following steps.

In S201-A1, filter coefficients of the interpolation filter are determined based on the reference region.

In S201-A2, interpolation filtering prediction is performed on the current block using the interpolation filter based on the filter coefficients, to obtain the prediction block of the current block.

The manners of determining the filter coefficients of the interpolation filter in the above S201-A1 include at least following manners.

In manner 1, the determined interpolation filter is used for sliding within the reference region of the current block, to construct a Wiener-Hopf equation. Then, the Wiener-Hopf equation is solved to obtain the filter coefficients of the interpolation filter.

In the process of sliding the interpolation filter within the reference region of the current block, N positions corresponding to each position within the reference region are determined based on the shape of the interpolation filter. For example, for a position r within the reference region, N positions corresponding to the position r are determined within the reference region based on the shape of the interpolation filter. Sample reconstructed values of the N positions are inputs of the interpolation filter. Phase position differences between the N positions and the position r are $\{p_0, p_1, ... , p_{N-1}\}$, and $p_N$ is a two-dimensional representation. Here, $\{c_0, c_1, ... , c_{N-1}\}$ is interpolation filter coefficients at positions $\{p_0, p_1, ... , p_{N-1}\}$.

In an example, the interpolation filter is slid within the reference region of the current block, and the constructed Wiener-Hopf equation is shown in the formula (3).

Since the reference region of the current block is the reconstructed region, except for the interpolation filter coefficients, all other parameters in the above formula (3) are known. Therefore, the filter coefficients of the interpolation filter of the current block may be determined by solving the above formula (3).

In an example, the encoding side may solve the Wiener-Hopf equation shown in the formula (3) through Cholesky decomposition of an autocorrelation coefficient matrix, to obtain the filter coefficients of the filter.

After determining the filter coefficients of the interpolation filter based on the above formula (3), the encoding side performs interpolation filtering prediction on the current block using the interpolation filter based on the filter coefficients, to obtain the prediction block of the current block

Exemplarily, the encoding side obtains the prediction block of the current block based on the formula (4).

In manner 2, S201-A1 includes following steps S201-A11 to S201-A14.

In S201-A11, a first reconstructed region around the current block is determined.

In S201-A12, a sample average reconstructed value is determined based on reconstructed values of the first reconstructed region.

In S201-A13, reconstructed values of samples within the reference region are de-averaged based on the sample average reconstructed value.

In S201-A14, de-averaged sample values of the samples within the reference region are taken as inputs of the interpolation filter, and the interpolation filter is slid within the reference region to obtain the filter coefficients of the interpolation filter.

In manner 2, the reference region is de-averaged, and the filter coefficients of the interpolation filter are determined based on the de-averaged reference region. Since the amount of data of the de-averaged reference region is small. In this way, in a case where the filter coefficients are determined based on the de-averaged reference region, efficiency of determining the filter coefficients may be improved.

Specifically, the encoding side first determines a first reconstructed region, where the first reconstructed region may be any part of the reconstructed regions around the current block.

In the embodiments of the present disclosure, manners in which the encoding side determines the first reconstructed region around the current block include at least following manners.

In mode 1, the encoding side determines one reconstructed region around the current block as the first reconstructed region by default.

For example, as illustrated in FIG. 20, the encoding side determines a region consisting of a top row sample of the current block, a left column sample of the current block, and a top-left corner sample of the current block as the first reconstructed region by default.

In manner 2, the first reconstructed region is determined based on the shape of the current block.

For example, in response to the shape of the current block being a square, a top row reconstructed sample region of the current block and a left column reconstructed sample region of the current block are determined as the first reconstructed region.

For another example, in response to the shape of the current block being a rectangle with a width greater than a height, a top row reconstructed sample region of the current block is determined as the first reconstructed region.

For yet another example, in response to the shape of the current block being a rectangle with a height greater than a width, a left column reconstructed sample region of the current block is determined as the first reconstructed region.

It should be noted that the manners of determining the first reconstructed region based on the shape of the current block include but are not limited to the above examples.

After determining the first reconstructed region, the encoding side determines a sample average reconstructed value m based on the reconstructed values of the first reconstructed region.

In an implementation, an average value of the reconstructed values of the first reconstructed region is determined as the sample average reconstructed value m.

In an example, in response to the first reconstructed region being as illustrated in FIG. 20, the sample average reconstructed value m may be calculated through the method shown in Table 13.

In an example, in response to the first reconstructed region being a top row and/or a left column of the current block, an average value of the reconstructed values of the top row and/or the left column may be determined as the sample average reconstructed value m. In this way, the sample average reconstructed value m may be calculated through the method shown in the Table 15.

As shown in the above Table 15, in response to the first reconstructed region being the top row and/or the left column of the current block, shift calculation may be used instead of division to quickly calculate the sample average reconstructed value m.

In addition to determining the average value of the reconstructed values of the first reconstructed region as the sample average reconstructed value m, the encoding side may determine the sample average reconstructed value m in following manner.

In another manner, a weighted average value of the reconstructed values of the first reconstructed region is determined as the sample average reconstructed value m.

The encoding side may also determine the sample average reconstructed value m using other manners.

After determining the sample average reconstructed value, the encoding side de-averages the reconstructed values of the samples within the reference region based on the sample average reconstructed value.

For example, for each sample within the reference region, the reconstructed value of the sample is divided by the above sample average reconstructed value and then rounded to an integer, to obtain the de-averaged sample value of the sample within the reference region.

For another example, the encoding side subtracts the sample average reconstructed value from the reconstructed value of the sample within the reference region, to obtain the de-averaged sample value of the sample within the reference region. For example, for each sample within the reference region, the sample average reconstructed value is subtracted from the reconstructed value of the sample, to obtain the de-averaged sample value of the sample within the reference region.

The specific manner in which the encoding side de-averages the reconstructed values of the samples within the reference region based on the sample average reconstructed value is not limited in the embodiments of the present disclosure.

Based on the above method, after de-averaging the reconstructed values of the samples within the reference region to obtain the de-averaged sample values of the samples within the reference region, the encoding side performs the above step S201-A14. That is, the de-averaged sample values of the samples within the reference region are taken as the inputs of the interpolation filter, and the interpolation filter is slid within the reference region to obtain the filter coefficients of the interpolation filter.

Exemplarily, as illustrated in FIG. 21, in response to the interpolation filter of the current block being an interpolation filter with five different shapes and the reference region of the current block being a reference region with three different types, the interpolation filter of the current block is slid within the de-averaged reference region of the current block to obtain the filter coefficients of the interpolation filter. The interpolation filter may slide row by row in a horizontal direction or column by column in a vertical direction within the de-averaged reference region. The block to be predicted in FIG. 21 is the current block.

As illustrated in FIG. 21, in the process of sliding the interpolation filter within the reference region of the current block, N positions corresponding to each position of the reference region are first determined based on the shape of the interpolation filter. For example, for a position r within the reference region, N positions corresponding to the position r are determined within the reference region based on the shape of the interpolation filter. Sample reconstructed values of the N positions are the inputs of the interpolation filter. Phase position differences between the N positions and the position r are $\{p_0, p_1, \dots, p_{N-1}\}$, and $p_N$ is a two-dimensional representation. Here, $\{c_0, c_1, \dots, c_{N-1}\}$ is interpolation filter coefficients at positions $\{p_0, p_1, \dots, p_{N-1}\}$.

In an example, the interpolation filter is slid within the reference region of the current block, and the constructed Wiener-Hopf equation is shown in the formula (5).

Since the reference region of the current block is the reconstructed region, except for the interpolation filter coefficients, all other parameters in the above formula (5) are known. Therefore, the filter coefficients of the interpolation filter of the current block may be determined by solving the above formula (5).

In an example, the encoding side may solve the Wiener-Hopf equation shown in the formula (5) through Cholesky decomposition of an autocorrelation coefficient matrix, to obtain the filter coefficients of the filter.

After determining the filter coefficients of the interpolation filter based on the formula (5), the encoding side performs the above step S201-A2. That is, the interpolation filtering prediction is performed on the current block using the interpolation filter based on the filter coefficients, to obtain the prediction block of the current block.

In the above formula (5), the de-averaged reference region is used to determine the filter coefficients. Therefore, in a case where the prediction values of the current block are determined based on the filter coefficients, influence of the sample average reconstructed value m needs to be considered.

In a possible implementation, after the interpolation filter coefficients determined through the above formula (5) are substituted into the above formula (4) to obtain the prediction value of each point in the current block, the sample average reconstructed value m is added to the prediction value of each point to obtain a final prediction value of each point in the current block, thereby obtaining the prediction block of the current block.

In another possible implementation, the above S201-A2 includes following steps.

In S201-A21, sample values of N positions corresponding to an r-th point in the current point are determined based on a shape of the interpolation filter, where r is a positive integer.

In S201-A22, the sample values of the N positions are de-averaged based on the sample average reconstructed value, to obtain de-averaged sample values of the N positions.

In S201-A23, a prediction value of the r-th point is obtained based on the de-averaged sample values of the N positions and the filter coefficients.

In S201-A24, the prediction block of the current block is obtained based on the prediction values of points of the current block.

As illustrated in FIG. 22, it is assumed that the shape of the interpolation filter of the current block is 4×4, the encoding side performs interpolation prediction on each position in the current block using an interpolation filter with known filter coefficients. Specifically, the sample values of the N positions corresponding to the r-th point in the current block are determined first based on the shape of the interpolation filter of the current block. For example, as illustrated in FIG. 22, in the $4 \times 4$ interpolation filter, a dark position is a position of the r-th point to be processed, and fifteen light positions are the N positions corresponding to the r-th point.

Then, the sample values of the N positions corresponding to the r-th point are determined. For example, in response to any position among the N positions being located in the reconstructed region around the current block, a reconstructed value of the position is determined as a sample value of the position. In response to any position among the N positions being within the current block, a prediction value of the position is determined as a sample value of the position.

Since the filter coefficients are determined based on the de-averaged reference region, the encoding side de-averages the sample values of the N positions corresponding to the r-th point based on the sample average reconstructed value, to obtain the averaged sample values of the N positions corresponding to the r-th point. For example, the sample average reconstructed value is subtracted from each of the sample values of the N positions corresponding to the r-th point, to obtain the de-averaged sample values of the N positions corresponding to the r-th point.

Then, the prediction value of the r-th point is obtained based on the de-averaged sample values of the N positions and the filter coefficients.

The specific manner of obtaining the prediction value of the r-th point based on the de-averaged sample values of the N positions and the filter coefficients is not limited in the embodiments of the present disclosure.

In an implementation, the encoding side substitutes the de-averaged sample values of the N positions corresponding to the r-th point and the filter coefficients into the above formula (4). In this case, t[ri + $p_n$] in the formula (4) is the de-averaged sample value of the sample at the position ri + $p_n$. After determining the prediction value of the r-th point based on the above formula (4), the sample average reconstructed value m is added to the prediction value, to obtain the final prediction value of the r-th point.

In another implementation, the above S201-A23 includes following steps.

In S201-A231, a second reconstructed region around the current block is determined, and a maximum reconstructed value of the second reconstructed region and a minimum reconstructed value of the second reconstructed region are determined.

In S201-A232, a first prediction value is obtained based on the de-averaged sample values of the N positions, the filter coefficients and the sample average reconstructed value.

In S201-A233, the prediction value of the r-th point is determined based on the first prediction value, the maximum reconstructed value and the minimum reconstructed value.

In this implementation, the encoding side limits the prediction value of the current block to a range. Specifically, a second reconstructed region is determined, and a maximum reconstructed value max of samples and a minimum reconstructed value min of the samples in the second reconstructed region are determined.

The specific manner of determining the second reconstructed region around the current block is not limited in the embodiments of the present disclosure.

In an example, the second reconstructed region of the current block is consistent with the reference region of the current block.

In an example, the second reconstructed region of the current block is consistent with the first reconstructed region of the current block.

In an example, a top reconstructed region of the current block, a left reconstructed region of the current block, a top-right reconstructed region of the current block, a top-left reconstructed region of the current block and a bottom-left reconstructed region of the current block are determined as the second reconstructed region. For example, a 13-top-row reconstructed region of the current block, a 13-left-column reconstructed region of the current block, a 13-top-right-row reconstructed region of the current block, a 13-top-left-row and 13-top-left-column reconstructed region of the current block and a 13-bottom-left-column reconstructed region of the current block are determined as the second reconstructed region.

It should be noted that there is no order of precedence for S201-A231 and S201-A232 in the specific implementation process. For example, S201-A231 may be performed before S201-A232, or after S201-A232, or synchronously with S201-A232.

The specific manner in which the encoding side obtains the first prediction value based on the de-averaged sample values of the N positions, the filter coefficients and the sample average reconstructed value is not limited in the embodiments of the present disclosure.

For example, the de-averaged sample values of the N positions corresponding to the r-th point are multiplied by the filter coefficients respectively, to obtain a second prediction value of the r-th point. The second prediction value and the sample average reconstructed value are added, to obtain the first prediction value of the r-th point.

Exemplarily, the encoding side obtains the first prediction value of the r-th point based on the formula (6).

For another example, after obtaining the prediction value of the r-th point based on the formula (6), the encoding side performs prediction on the prediction value, to obtain the first prediction value of the r-th point.

After determining the first prediction value of the r-th point in the current block based on the above steps, the encoding side determines the prediction value of the r-th point based on the first prediction value, the maximum reconstructed value and the minimum reconstructed value.

For example, in response to the first prediction value being greater than the minimum reconstructed value and less than the maximum reconstructed value, the first prediction value is determined as the prediction value of the r-th point.

For another example, in response to the first prediction value being less than or equal to the minimum reconstructed value, the minimum reconstructed value is determined as the prediction value of the r-th point.

For yet another example, in response to the first prediction value being greater than or equal to the maximum reconstructed value, the maximum reconstructed value is determined as the prediction value of the r-th point.

In an example, the encoding side determines the prediction value of the r-th point using the formula (7).

The above description is made by taking determination of the prediction value of the r-th point in the current block as an example, the encoding side may refer to the above method to determine the prediction value of each point in the current block. The prediction value of each point in the current block constitutes the prediction block of the current block.

After performing interpolation filtering prediction on the current block based on the above steps to obtain the prediction block of the current block, the encoding side performs following steps.

In S202, an intra prediction mode corresponding to the prediction block is determined, and a transform kernel corresponding to the current block is determined based on the intra prediction mode corresponding to the prediction block.

It may be seen from the above that in a case of encoding the current block, the encoding side determines the prediction block of the current block based on the above steps. The prediction block of the current block is subtracted from the current block, to obtain a residual block of the current block. The residual block of the current block is transformed to obtain transform coefficients, quantization is performed on the transform coefficients to obtain quantization coefficients, and the quantization coefficients are encoded to obtain the bitstream.

In a case where residual values of the current block are transformed to obtain the transform coefficients, it is necessary to determine the transform kernel. The residual values of the current block are transformed based on the transform kernel to obtain the transform coefficients. Currently, the encoding side predicts the current block using a traditional intra prediction mode. The encoding side may determine the transform kernel used for the current block based on correspondences between traditional intra prediction modes and transform kernels. However, in the embodiments of the present disclosure, in a case where the current block is predicted, the interpolation filtering prediction mode is used instead of the traditional intra prediction mode. Therefore, it is not possible to directly determine the transform kernel corresponding to the current block.

In order to solve the technical problem, in the embodiments of the present disclosure, after the prediction block of the current block is determined using the interpolation filtering prediction mode, the traditional intra prediction mode corresponding to the prediction block is determined, and the transform kernel corresponding to the current block is determined based on the traditional intra prediction mode.

The specific process in which the encoding side determines the intra prediction mode corresponding to the prediction block will be described below.

In an example, as illustrated in FIG. 7, currently, traditional intra prediction modes included in VVC are:

a PLANAR mode: an index of the intra prediction mode being 0,
a DC mode: an index of the intra prediction mode being 1, and
an angle mode: indices of the intra prediction mode being 2 to 66.

In an example, as illustrated in FIG. 23, directions of arrows in the figure are directions predicted by the angle mode present in the VVC, and the indices of the prediction mode used during encoding are 2 to 66. In a case where the current block is a non-square block, some angle directions will be replaced with wide angles, such as -1 to -14 and 67 to 80 in FIG. 23.

In some embodiments, the intra prediction mode corresponding to the prediction block is a default intra prediction mode. That is, in response to the current block being predicted using the interpolation filtering prediction mode and obtaining the prediction block, one of the traditional intra prediction modes is determined as the intra prediction mode corresponding to the prediction block by default.

In some embodiments, the encoding side determines the intra prediction mode corresponding to the prediction block through following steps.

In S202-A1, angle values of the M points in the prediction block are determined, where M is a positive integer.

In S202-A2, the intra prediction mode corresponding to the prediction block is determined based on the angle values of the M points.

In the embodiments of the present disclosure, the intra prediction mode corresponding to the prediction block is determined by counting the intra prediction modes corresponding to the angle values of M points in the prediction block.

The specific positions and the specific number of the M points for determining the angle values in the prediction block are not limited in the embodiments of the present disclosure. For example, the M points may be one point in the prediction block, or multiple points in the prediction block.

For example, in response to the M points being one point, the encoding side determines an angle value of one point in the prediction block (e.g., a center point of the prediction block), determines the intra prediction mode corresponding to the point based on the angle value of the point, and determines the intra prediction mode as the intra prediction mode corresponding to the prediction block.

For another example, in response to the M points being multiple points, the encoding side determines angle values of the multiple points, determines an intra prediction mode corresponding to each of the multiple points based on the angle values of the multiple points, and determines an intra prediction mode with a maximum number of occurrences among the multiple points as the intra prediction mode corresponding to the prediction block.

In some embodiments, in a case where the angle values of the M points in the prediction block are determined in a manner of sliding window, selection of the M points is related to a shape of the sliding window and a size of the sliding window. For example, each of the M points is a central point of the sliding window in a case where the sliding window slides in the prediction block.

In the embodiments of the present disclosure, the method for determining the angle value of each of the M points is the same. For ease of description, the method of determining an angle value of an i-th point among the M points is taken as an example for illustration.

The specific manner of determining the angle value of the point is not limited in the embodiments of the present disclosure.

In some embodiments, the above S202-A1 includes steps S202-A11 and S202-A12.

In S202-A11, a horizontal gradient of an i-th point among the M points and a vertical gradient of the i-th point are determined, where i is a positive integer less than or equal to M.

In S202-A12, an angle value of the i-th point is determined based on the horizontal gradient of the i-th point and the vertical gradient of the i-th point.

In the embodiments, for each point of the M points, for example, the i-th point, the encoding side first determines the horizontal gradient of the i-th point and the vertical gradient of the i-th point, and determines the angle value of the i-th point based on the horizontal gradient and the vertical gradient.

The specific manner of determining the horizontal gradient of the i-th point and the vertical gradient of the i-th point is not limited in the embodiments of the present disclosure.

In an example, the horizontal gradient value of the i-th point is determined based on prediction values of points around the i-th point in the prediction block and a change in a prediction value of the i-th point in the horizontal direction. The vertical gradient value of the i-th point is determined based on the prediction values of the points around the i-th point in the prediction block and a change in the prediction value of the i-th point in the vertical direction.

In another example, the encoding side determines prediction values of points within a sliding window centered at the i-th point in the prediction block; and obtains the horizontal gradient of the i-th point and vertical gradient of the i-th point based on the prediction values of the points within the sliding window, and a horizontal gradient operator and a vertical gradient operator.

In the example, a sliding window is first determined. For example, as illustrated in FIG. 24, a sliding window of size $3\times3$ is determined. The sliding window is slid within the prediction block. Each time the sliding window is slid, a horizontal gradient of a center point of the sliding window and a vertical gradient of the center point of the sliding window are determined. For example, the center point of the current sliding window is the i-th point, prediction values of points in the current sliding window is first obtained. For example, prediction values of $3\times3=9$ points may be obtained. Then, the horizontal gradient of the i-th point and vertical gradient of the i-th point are determined based on the prediction values of the nine points and a preset horizontal gradient operator and a preset vertical gradient operator.

For example, a product of the prediction values of the points within the sliding window and the horizontal gradient operator is determined as the horizontal gradient of the i-th point $G_x$. A product of the prediction values of the points within the sliding window and the vertical gradient operator is determined as the vertical gradient of the i-th point.

For another example, the prediction values of the points within the sliding window are multiplied by the horizontal gradient operator and then subjected to a preset operation with a preset value, to obtain the horizontal gradient of the i-th point $G_x$. The prediction values of the points within the sliding window are multiplied by the vertical gradient operator and then subjected to a preset operation with a preset value, to obtain the vertical gradient of the i-th point.

The specific values of the horizontal gradient operator and the vertical gradient operator are not limited in the embodiments of the present disclosure.

After determining the horizontal gradient of the i-th point and the vertical gradient of the i-th point based on the above steps, the encoding side determines the angle value of the i-th point based on the horizontal gradient of the i-th point and the vertical gradient of the i-th point.

For example, an arctangent value of a ratio of the vertical gradient of the i-th point to the horizontal gradient of the i-th point is determined as the angle value of the i-th point. For example, the angle value of the i-th point is determined based on the formula (8).

In addition to using the above formula (8), the encoding side may determine the angle value of the i-th point using other manners. For example, the encoding side adjusts the angle value determined through the above formula (8), to obtain the angle value of the i-th point.

The encoding side determines the angle value of each of the M points using the above method, and performs the above S202-A2 to determine the intra prediction mode corresponding to the prediction block based on the angle values of the M points.

The specific manner of determining the intra prediction mode corresponding to the prediction block based on the angle values of the M points is not limited in the embodiments of the present disclosure.

In some embodiments, the encoding side selects angle value 1 with a maximum number of occurrences from the angle values of the M points, matches the angle value 1 with a prediction angle of the traditional intra prediction mode to obtain an intra prediction mode corresponding to the angle value 1, and determines the intra prediction mode corresponding to the angle value 1 as the intra prediction mode corresponding to the prediction block.

In some embodiments, the above S202-A2 includes following steps S202-A21 and S202-A22.

In S202-A21, intra prediction modes corresponding to the M points are determined based on the angle values of the M points.

In S202-A22, the intra prediction mode corresponding to the prediction block is determined based on the intra prediction modes corresponding to the M points.

In this implementation, the encoding side determines the intra prediction mode corresponding to each point based on the angle value of each of the M points. For example, the angle value of each of the M points is matched with a prediction angle of the traditional intra prediction mode, to obtain the intra prediction mode corresponding to the angle value of the point. In this way, the intra prediction mode corresponding to each of the M points may be obtained.

Then, the intra prediction mode corresponding to the prediction block is determined based on the intra prediction mode corresponding to each of the M points.

In a possible implementation, an intra prediction mode with a maximum number of occurrences among the intra prediction modes corresponding to the M points is determined as the intra prediction mode corresponding to the prediction block.

In another possible implementation, the above S202-A22 includes following steps.

In S202-A221, gradient magnitude values corresponding to the M points are determined based on horizontal gradients of the M points and the vertical gradients of the M points.

In S202-A222, the intra prediction mode corresponding to the prediction block is determined based on the intra prediction modes corresponding to the M points and the gradient magnitude values corresponding to the M points.

In this implementation, the encoding side determines a gradient magnitude value corresponding to each of the M points based on the horizontal gradient and the vertical gradient of each of the M points.

In the embodiments of the present disclosure, the specific manner in which the encoding side determines the gradient magnitude value corresponding to each of the M points is the same. For ease of description, an example is given in which the gradient magnitude value corresponding to the i-th point among M points is determined.

The specific manner in which the encoding side determines the gradient magnitude value corresponding to the i-th point based on the horizontal gradient of the i-th point and the vertical gradient of the i-th point is not limited in the embodiments of the present disclosure.

For example, the encoding side multiplies the horizontal gradient of the i-th point and the vertical gradient of the i-th point, to obtain the gradient magnitude value corresponding to the i-th point.

For another example, the encoding side adds an absolute value of the horizontal gradient of the i-th point and an absolute value of the vertical gradient of the i-th point, to obtain the gradient magnitude value corresponding to the i-th point.

Exemplarily, the encoding side determines the gradient magnitude value corresponding to the i-th point based on the formula (9).

The encoding side may determine a gradient magnitude value corresponding to each of the M points based on the above steps. Then, the encoding side performs the above S202-A222, and determines the intra prediction mode corresponding to the prediction block based on the intra prediction modes corresponding to the M points and the gradient magnitude values corresponding to the M points.

In an example, an intra prediction mode corresponding to a point with a maximum gradient magnitude value among the M points is determined as the intra prediction mode corresponding to the prediction block.

In another example, a gradient magnitude value corresponding to any point of the M points is accumulated for an intra prediction mode corresponding to the point, to obtain accumulated gradient magnitude values of the intra prediction modes corresponding to the M points. An intra prediction mode with a maximum accumulated gradient magnitude value among the intra prediction modes corresponding to the M points is determined as the intra prediction mode corresponding to the prediction block.

For example, as illustrated in FIG. 25, the gradient magnitude value corresponding to each of the M points is accumulated for the corresponding intra prediction mode. For example, if the intra prediction modes corresponding to point 1 and point 2 among the M points are both intra prediction mode 1, gradient magnitude values corresponding to point 1 and point 2 are accumulated to a gradient magnitude value corresponding to the intra prediction mode 1. By analogy, the gradient magnitude value histogram illustrated in FIG. 25 may be obtained. In this way, an intra prediction mode with a maximum accumulated gradient magnitude value in the gradient magnitude value histogram may be determined as the intra prediction mode corresponding to the prediction block. For example, an intra prediction mode corresponding to the dark accumulated gradient magnitude value in FIG. 25 is determined as the intra prediction mode corresponding to the prediction block.

In some embodiments, in response to the gradient magnitude values corresponding to the M points all being 0, a first intra prediction mode is determined as the intra prediction mode corresponding to the prediction block. That is, in response to the gradient magnitude values corresponding to all the points of the M points all being 0, it means that the horizontal gradient of each of the M points and the vertical gradient of each of the M points are 0. In this case, a preset first intra prediction mode may be determined as the intra prediction mode corresponding to the prediction block.

A type of the first intra prediction mode is not limited in the embodiments of the present disclosure.

Exemplarily, the first intra prediction mode is the PLANAR mode.

After determining the intra prediction mode corresponding to the prediction block based on the above steps, the encoding side determines the transform kernel corresponding to the current block based on the intra prediction mode corresponding to the prediction block.

The specific manner in which the encoding side determines the transform kernel corresponding to the current block based on the intra prediction mode corresponding to the prediction block is not limited in the embodiments of the present disclosure.

In some embodiments, the encoding side looks up a picture block whose intra prediction mode is the same as the intra prediction mode corresponding to the prediction block among encoded picture blocks around the prediction block based on the intra prediction mode corresponding to the prediction block, and determines a transform kernel corresponding to the picture block as the transform kernel corresponding to the current block.

In some embodiments, determining the transform kernel corresponding to the current block based on the intra prediction mode corresponding to the prediction block in S202 includes following steps.

In S202-B1, correspondences between intra prediction modes and transform kernel groups are obtained, where a transform kernel group includes at least one type of transform kernels.

In S202-B2, a first transform kernel group corresponding to the intra prediction mode of the prediction block is looked up in the correspondences.

In S202-B3, the transform kernel corresponding to the current block is determined from the first transform kernel group.

In the embodiments of the present disclosure, there are correspondences between the intra prediction modes and the transform kernel groups. Based on this, after determining the intra prediction mode corresponding to the prediction block, the encoding side obtains the correspondences between the preset intra prediction modes and the transform kernel groups.

In an example, the correspondences between the intra prediction modes and the transform kernel groups are shown in Table 16.

It should be noted that the Table 16 only shows part of correspondences between the intra prediction modes and the transform kernel groups involved in the embodiments of the present disclosure. The correspondences between the intra prediction modes and the transform kernel groups in the embodiments of the present disclosure include but are not limited to those shown in the Table 16.

Here, each transform kernel group includes at least one type of transform kernels.

After obtaining the correspondences between the intra prediction modes and the transform kernel groups as shown in the Table 16, the encoding side looks up the transform kernel group corresponding to the intra prediction mode corresponding to the prediction block in the correspondences between the intra prediction modes and the transform kernel groups based on the intra prediction mode corresponding to the prediction block, and records the transform kernel group as the first transform kernel group. For example, the intra prediction mode corresponding to the prediction block is an angular prediction mode in the angle direction 64. By looking at the Table 16, it may be obtained that the transform kernel group corresponding to the angular prediction mode in the angle direction 64 is 4. In this way, the encoding side determines the transform kernel corresponding to the current block from the at least one type of transform kernels included in the transform kernel group 4.

For example, in response to the first transform kernel group including one transform kernel, the transform kernel is determined as the transform kernel corresponding to the current block.

For another example, in response to the first transform kernel group including multiple types of transform kernels, the encoding side determines a transform kernel type corresponding to the current block, and determines a transform kernel corresponding to the transform kernel type in the first transform kernel group as the transform kernel corresponding to the current block.

The methods in which the encoding side determines the transform kernel type corresponding to the current block include but are not limited to the following.

In an example, the transform kernel type corresponding to the current block is a default type. In this way, the encoding side determines the default type as the transform kernel type corresponding to the current block.

In another example, the encoding side signals the transform kernel type corresponding to the current block into the bitstream. In this way, the encoding side obtains the transform kernel type corresponding to the current block by encoding the bitstream.

It may be seen from the above that in the embodiments of the present disclosure, the encoding side determines the prediction block of the current block using the interpolation filtering prediction mode, determines the traditional intra prediction mode corresponding to the prediction block, and determines the transform kernel corresponding to the current block based on the traditional intra prediction mode corresponding to the prediction block. That is, in the embodiments of the present disclosure, the traditional intra prediction mode derived based on the interpolation filtering prediction is used for selection of transform kernel groups of non-separable primary transform (NSPT) and low frequency non-separable secondary transform (LFNST). In this way, the determined transform kernel is more in line with characteristics of the current block, which improves accuracy of determining the transform kernel. In a case where the reconstructed values of the current block are determined using the accurately determined transform kernel, accuracy of determining the reconstructed values may be improved, and accuracy of encoding the current block may be further improved. In addition, in the embodiments of the present disclosure, in a case where the transform kernel of the current block is determined using the traditional prediction mode corresponding to the prediction block, there is no need to indicate the transform kernel separately, which saves codewords and further improves the video coding effect.

After determining the transform kernel corresponding to the current block based on the above steps, the encoding side performs the following step S203.

In S203, a residual block of the current block is transformed based on the transform kernel corresponding to the current block to obtain transform coefficients of the current block, and perform encoding based on the deformation coefficients of the current block to obtain a bitstream.

In the embodiments of the present disclosure, the encoding side determines the prediction block of the current block and the transform kernel corresponding to the current block based on the above steps. In this way, the encoding side may obtain the residual block of the current block based on the prediction block of the current block and the current block. For example, the prediction block of the current block is subtracted from the current block to obtain the residual block of the current block. The encoding side may transform the residual block of the current block based on the transform kernel to obtain the transform coefficients of the current block, and encode the transform coefficients directly to obtain the bitstream. Alternatively, the encoding side quantizes the transform coefficients to obtain quantized coefficients, and encodes the quantized coefficients to obtain the bitstream.

In some embodiments, the current block is a luma block or a chroma block. That is, in the embodiments of the present disclosure, the interpolation filtering prediction mode provided in the embodiments of the present disclosure may be used for predicting both the luma block and the chroma block.

In some embodiments, in response to the current block being the luma block, the prediction mode of the current block is the interpolation filtering prediction mode. In a case where the chroma block corresponding to the current block uses a direct mode (DM), the PLANAR mode or the intra prediction mode corresponding to the prediction block is determined as the prediction mode of the chroma block.

The effect of the interpolation filtering prediction mode provided in the embodiments of the present disclosure will be verified through experiments below.

In an example, in a case where different videos are compressed under an all intra main test condition using $3\times5=15$ filter coefficient combinations that are determined through reference region types illustrated in FIGS. 13A to 13C and five shapes of the interpolation filter illustrated in FIG. 15, compression effects are shown in Table 17.

Table 17

| | All Intra Main 10 | | | | |
| | Over anchor | | | | |
| | Y | U | V | EncT | DecT |
|---|---|---|---|---|---|
| Class A1 | -0.15% | -0.10% | -0.14% | 142% | 108% |
| Class A2 | -0.20% | -0.10% | -0.07% | 140% | 109% |
| Class B | -0.23% | -0.13% | -0.07% | 146% | 111% |

(continued)

| | All Intra Main 10 | | | | |
| | Over anchor | | | | |
| | Y | U | V | EncT | DecT |
| Class C | -0.25% | -0.18% | -0.23% | 140% | 113% |
| Class E | -0.52% | -0.56% | -0.38% | 150% | 108% |
| **Overall** | -0.26% | -0.20% | -0.17% | 144% | 110% |
| Class D | -0.10% | -0.06% | 0.00% | 134% | 110% |
| Class F | -0.08% | 0.04% | 0.09% | 129% | 108% |

As shown in Table 17, in a case where different types of test data are compressed under a general test condition using the reference region types illustrated in FIGS. 13A to 13C and five shapes of the interpolation filter illustrated in FIG. 15, objective compression effects of Y/U/V components are improved by 0.26%/0.20%/0.17% respectively.

In an example, in a case where different videos are compressed under the all intra main test condition using $3\times7=21$ filter coefficient combinations that are determined through the reference region types illustrated in FIGS. 13A to 13C and seven shapes of the interpolation filter illustrated in FIGS. 14A to 14G, compression effects are shown in Table 18.

Table 18

| | All Intra Main 10 | | | | |
| | Over anchor | | | | |
| | Y | U | V | EncT | DecT |
| Class A1 | -0.09% | -0.06% | -0.05% | 117% | 101% |
| Class A2 | -0.17% | -0.14% | -0.06% | 116% | 101% |
| Class B | -0.21% | -0.03% | -0.06% | 119% | 102% |
| Class C | -0.25% | -0.23% | -0.22% | 116% | 101% |
| Class E | -0.62% | -0.58% | -0.65% | 120% | 100% |
| **Overall** | -0.26% | -0.19% | -0.19% | 117% | 101% |
| Class D | -0.08% | -0.21% | 0.09% | 114% | 101% |
| Class F | -0.04% | -0.04% | 0.05% | 110% | 99% |

As shown in Table 18, in a case where different types of test data are compressed under the general test conditions using the reference region types illustrated in FIGS. 13A to 13C and the seven shapes of the interpolation filter illustrated in FIGS. 14A to 14G, objective compression effects of the Y/U/V components are improved by 0.26%/0.19%/0.19% respectively.

In an example, in a case where different videos are compressed under the all intra main test condition using $3\times1=3$ filter coefficient combinations that are determined through the reference region types illustrated in FIGS. 13A to 13C and one shape of interpolation filter illustrated in FIG. 14A, compression effects are shown in Table 19.

Table 19

| | All Intra Main 10 | | | | |
| | Over anchor | | | | |
| | Y | U | V | EncT | DecT |
| Class A1 | -0.07% | -0.03% | -0.04% | 103% | 101% |
| Class A2 | -0.11% | -0.07% | -0.08% | 103% | 102% |
| Class B | -0.11% | -0.11% | -0.02% | 105% | 102% |
| Class C | -0.11% | -0.12% | -0.14% | 104% | 103% |
| Class E | -0.25% | -0.22% | -0.17% | 104% | 102% |
| **Overall** | -0.13% | -0.11% | -0.08% | 104% | 102% |
| Class D | -0.02% | -0.03% | -0.02% | 104% | 104% |

(continued)

| | All Intra Main 10 | | | | |
| --- | --- | --- | --- | --- | --- |
| | Over anchor | | | | |
| | Y | U | V | EncT | DecT |
| Class F | -0.04% | -0.20% | 0.02% | 102% | 102% |

As shown in Table 19, in a case where different types of test data are compressed under the general test condition using the reference region types illustrated in FIGS. 13A to 13C and one shape of interpolation filter illustrated in FIG. 14A, objective compression effects of the Y/U/V components are improved by 0.13%/0.11%/0.02% respectively.

In an example, in a case where different videos are compressed under the all intra main test condition using 3×3=9 filter coefficient combinations that are determined through the reference region types illustrated in FIGS. 13A to 13C and three shapes of the interpolation filter illustrated in FIG. 17, compression effects are shown in Table 20.

Table 20

| | All Intra Main 10 | | | | |
| --- | --- | --- | --- | --- | --- |
| | Over anchor | | | | |
| | Y | U | V | EncT | DecT |
| Class A1 | -0.13% | -0.13% | -0.02% | 106% | 102% |
| Class A2 | -0.18% | -0.07% | -0.03% | 106% | 102% |
| Class B | -0.20% | -0.27% | -0.12% | 107% | 102% |
| Class C | -0.22% | -0.20% | -0.21% | 107% | 102% |
| Class E | -0.42% | -0.29% | -0.35% | 108% | 102% |
| **Overall** | -0.23% | -0.20% | -0.15% | 107% | 102% |
| Class D | -0.06% | -0.07% | 0.11% | 105% | 105% |
| Class F | -0.03% | -0.09% | -0.02% | 105% | 100% |

As shown in Table 20, in a case where different types of test data are compressed under the general test condition using the reference region types illustrated in FIGS. 13A to 13C and three shapes of the interpolation filter illustrated in FIG. 17, objective compression effects of the Y/U/V components are improved by 0.23%/0.20%/0.15% respectively.

In an example, in a case where different videos are compressed under the all intra main test condition using 3×3=9 filter coefficient combinations that are determined through the reference region types illustrated in FIGS. 13A to 13C and three shapes of the interpolation filter illustrated in FIG. 18, compression effects are shown in Table 21.

Table 21

| | All Intra Main 10 | | | | |
| --- | --- | --- | --- | --- | --- |
| | Over anchor | | | | |
| | Y | U | V | EncT | DecT |
| Class A1 | -0.13% | -0.11% | -0.07% | 105% | 103% |
| Class A2 | -0.19% | -0.10% | -0.07% | 105% | 102% |
| Class B | -0.21% | -0.10% | -0.08% | 106% | 102% |
| Class C | -0.26% | -0.15% | -0.17% | 105% | 103% |
| Class E | -0.47% | -0.47% | -0.58% | 106% | 102% |
| **Overall** | -0.25% | -0.18% | -0.18% | 105% | 102% |
| Class D | -0.10% | -0.07% | -0.05% | 104% | 100% |
| Class F | -0.07% | 0.11% | -0.05% | 105% | 102% |

As shown in Table 21, in a case where different types of test data are compressed under the general test condition using the reference region types illustrated in FIGS. 13A to 13C and three shapes of the interpolation filter illustrated in FIG. 18, objective compression effects of the Y/U/V components are improved by 0.25%/0.18%/0.18% respectively.

In an example, in a case where different videos are compressed under the all intra main test condition using 3×3=9 filter coefficient combinations that are determined through the reference region types illustrated in FIGS. 13A to 13C and three shapes of the interpolation filter illustrated in FIG. 19, compression effects are shown in Table 22.

Table 22

| | All Intra Main 10 | | | | |
| --- | --- | --- | --- | --- | --- |
| | Over 20230224-ECM8.0 | | | | |
| | Y | U | V | EncT | DecT |
| Class A1 | -0.04% | -0.08% | -0.05% | 100% | 105% |
| Class A2 | -0.11% | -0.05% | -0.07% | 99% | 103% |
| Class B | -0.13% | -0.10% | -0.03% | 100% | 104% |
| Class C | -0.20% | -0.11% | -0.21% | 99% | 103% |
| Class E | -0.48% | -0.45% | -0.40% | 101% | 107% |
| **Overall** | -0.19% | -0.15% | -0.14% | 100% | 104% |
| Class D | -0.03% | -0.12% | 0.04% | 99% | 105% |
| Class F | -0.05% | 0.02% | -0.03% | 99% | 107% |

As shown in Table 22, in a case where different types of test data are compressed under the general test condition using the reference region types illustrated in FIGS. 13A to 13C and three shapes of the interpolation filter illustrated in FIG. 19, objective compression effects of the Y/U/V components are improved by 0.19%/0.15%/0.14% respectively.

In the video encoding method provided in the embodiments of the present disclosure, in a case where the current block is predicted, the reference region of the current block and interpolation filter of the current block are first determined, and the prediction block of the current block is determined based on the reference region and the interpolation filter. Then, the prediction mode corresponding to the prediction block is determined, the residual block of the current block is transformed based on the transform kernel corresponding to the current block to obtain the transform coefficients of the current block, and encoding is performed based on the deformation coefficients of the current block to obtain the bitstream. That is, in the embodiments of the present disclosure, in response to the current block being predicted using the interpolation filtering prediction method, the traditional prediction mode corresponding to the prediction block is determined, and the transform kernel corresponding to the current block is determined. In this way, the determined transform kernel is more in line with the characteristics of the current block, which improves the accuracy of determining the transform kernel. In a case where the reconstructed values of the current block are determined using the accurately determined transform kernel, the accuracy of determining the reconstructed values may be improved, and the accuracy of encoding the current block may be further improved. In addition, in the embodiments of the present disclosure, in a case where the transform kernel of the current block is determined using the traditional prediction mode corresponding to the prediction block, there is no need to indicate the transform kernel separately, which saves codewords and further improves the video coding effect.

It should be understood that FIGS. 10 to 26 are merely examples of the present disclosure and should not be construed as limitations to the present disclosure.

The preferred implementations of the present disclosure are described in detail above with reference to the accompanying drawings. However, the present disclosure is not limited to the specific details of the implementations mentioned above. Within the technical concept of the present disclosure, a variety of simple modifications may be made to the technical solutions of the present disclosure, and these simple modifications all fall within the protection scope of the present disclosure. For example, the various specific technical features described in the specific implementations may be combined in any suitable manner without contradiction. In order to avoid unnecessary repetition, the present disclosure will not provide further explanation of various possible combinations. For another example, the various implementation of the present disclosure may be arbitrarily combined, and as long as they do not violate the concept of the present disclosure, they should also be regarded as the contents disclosed in the present disclosure.

It should further be understood that in the various method embodiments of the present disclosure, the size of the sequence numbers of the above processes does not mean the order of execution. The execution order of each process should be determined by its function and internal logic, and should not constitute any limitation on the implementation process of the embodiments of the present disclosure. In addition, in the embodiments of the present disclosure, the term "and/or" herein is merely a description of the association relationship of associated objects, indicating that there may be three relationships. Specifically, A and/or B may represent three cases: A alone, A and B both, and B alone. In addition, the character "/" in herein generally indicates that association objects before and after it are in an "or" relationship.

With reference to FIGS. 10 to 27, the method embodiments of the present disclosure are described in detail above, and apparatus embodiments of the present disclosure will be described in detail below with reference to FIGS. 28 to 30.

FIG. 28 is a schematic block diagram of a video decoding apparatus provided in the embodiments of the present disclosure. A video decoding apparatus 10 is applied to the above video decoder.

As illustrated in FIG. 28, the video decoding apparatus 10 includes:

a prediction unit 11, configured to determine a reference region of a current block and an interpolation filter of the current block, and determine a prediction block of the current block based on the reference region and the interpolation filter;

a transform unit 12, configured to determine an intra prediction mode corresponding to the prediction block, and determine a transform kernel corresponding to the current block based on the intra prediction mode corresponding to the prediction block; and

a decoding unit 13, configured to perform inverse transform on transform coefficients of the current block based on the transform kernel corresponding to the current block to obtain a residual block of the current block, and obtain a reconstructed block of the current block based on the prediction block of the current block and the residual block of the current block.

In some embodiments, the transform unit 12 is specifically configured to determine angle values of M points in the prediction block, where M is a positive integer; and determine the intra prediction mode corresponding to the prediction block based on the angle values of the M points.

In some embodiments, the transform unit 12 is specifically configured to determine a horizontal gradient of an i-th point among the M points and a vertical gradient of the i-th point, where i is a positive integer less than or equal to M; and determine an angle value of the i-th point based on the horizontal gradient of the i-th point and the vertical gradient of the i-th point.

In some embodiments, the transform unit 12 is specifically configured to determine, in the prediction block, prediction values of points within a sliding window centered at the i-th point; and obtain the horizontal gradient of the i-th point and the vertical gradient of the i-th point based on the prediction values of the points within the sliding window, a horizontal gradient operator, and a vertical gradient operator.

In some embodiments, the transform unit 12 is specifically configured to determine a product of the prediction values of the points within the sliding window and the horizontal gradient operator as the horizontal gradient of the i-th point; and determine a product of the prediction values of the points within the sliding window and the vertical gradient operator as the vertical gradient of the i-th point.

In some embodiments, the transform unit 12 is specifically configured to determine an arctangent value of a ratio of the vertical gradient of the i-th point to the horizontal gradient of the i-th point as the angle value corresponding to the i-th point.

In some embodiments, the transform unit 12 is specifically configured to determine intra prediction modes corresponding to the M points based on the angle values of the M points; and determine the intra prediction mode corresponding to the prediction block based on the intra prediction modes corresponding to the M points.

In some embodiments, the transform unit 12 is specifically configured to determine gradient magnitude values corresponding to the M points based on horizontal gradients of the M points and vertical gradients of the M points; and determine the intra prediction mode corresponding to the prediction block based on the intra prediction modes corresponding to the M points and the gradient magnitude values corresponding to the M points.

In some embodiments, the transform unit 12 is specifically configured to add an absolute value of the horizontal gradient of the i-th point and an absolute value of the vertical gradient of the i-th point, to obtain a gradient magnitude value corresponding to the i-th point.

In some embodiments, the transform unit 12 is specifically configured to accumulate a gradient magnitude value corresponding to any point among the M points onto an intra prediction mode corresponding to the point, to obtain accumulated gradient magnitude values of the intra prediction modes corresponding to the M points; and determine an intra prediction mode with a maximum accumulated gradient magnitude value among the intra prediction modes corresponding to the M points as the intra prediction mode corresponding to the prediction block.

In some embodiments, the transform unit 12 is further configured to, in response to the gradient magnitude values corresponding to the M points all being 0, determine a first intra prediction mode as the intra prediction mode corresponding to the prediction block.

Optionally, the first intra prediction mode is a PLANAR mode.

In some embodiments, the transform unit 12 is specifically configured to obtain correspondences between intra prediction modes and transform kernel groups, where a transform kernel group includes at least one type of transform kernels; look up a first transform kernel group corresponding to the intra prediction mode of the prediction block in the correspondences; and determine the transform kernel corresponding to the current block from the first transform kernel group.

In some embodiments, the transform unit 12 is specifically configured to determine a transform kernel type corresponding to the current block; and determine a transform kernel corresponding to the transform kernel type in the first transform kernel group as the transform kernel corresponding to the current block.

In some embodiments, the transform unit 12 is specifically configured to decode a bitstream to obtain the transform kernel type corresponding to the current block.

In some embodiments, the prediction unit 11 is specifically configured to decode a bitstream to obtain first information, where the first information is used for indicating a type of the reference region of the current block; and determine the reference region of the current block from preset P reference regions based on the type of the reference region, where P is a positive integer greater than 1.

In some embodiments, the prediction unit 11 is specifically configured to determine the reference region of the current block from preset P reference regions based on a shape of the current block, where P is a positive integer greater than 1.

In some embodiments, the P reference regions include at least one of a first reference region, a second reference region or a third reference region, the first reference region includes a top reconstructed region of the current block, a top-right reconstructed region of the current block, a left reconstructed region of the current block, a top-left reconstructed region of the current block and a top-left reconstructed region of the current block, the second reference region includes the top reconstructed region of the current block, the top-right reconstructed region of the current block and the top-left reconstructed region of the current block, and the third reference region includes the left reconstructed region of the current block, the top-left reconstructed region of the current block and the top-left reconstructed region of the current block.

In some embodiments, the prediction unit 11 is specifically configured to decode a bitstream to obtain second information, where the second information is used for indicating a shape of the interpolation filter of the current block; and determine the interpolation filter of the current block from preset Q interpolation filters based on the shape of the interpolation filter, where Q is a positive integer greater than 1.

In some embodiments, the prediction unit 11 is specifically configured to determine the interpolation filter of the current block from preset Q interpolation filters based on a shape of the current block, where Q is a positive integer greater than 1.

In some embodiments, the Q interpolation filters include at least one of a first interpolation filter, a second interpolation filter or a third interpolation filter, the first interpolation filter is a square interpolation filter, the second interpolation filter is a rectangular interpolation filter with a width greater than a height, and the third interpolation filter is a rectangular interpolation filter with a height greater than a width.

In some embodiments, the prediction unit 11 is further configured to obtain first information and/or second information by decoding the bitstream using a decoding manner of a truncated binary code.

In some embodiments, before determining the reference region of the current block and the interpolation filter of the current block, the prediction unit 11 is further configured to decode a bitstream to obtain third information, where the third information is used for indicating whether the current block is predicted using an interpolation filtering prediction mode; in response to determining, based on the third information, that the current block is predicted using the interpolation filtering prediction mode, determine the reference region of the current block and the interpolation filter of the current block.

In some embodiments, before decoding the bitstream to obtain the third information, the prediction unit 11 is further configured to determine whether a position of the current block in a current picture meets a preset position requirement, and determine whether a size of the current block meets a preset block size requirement; in response to determining that the position of the current block in the current picture meets the preset position requirement, and that the size of the current block meets the preset block size requirement, decode the bitstream, to obtain the third information.

In some embodiments, the prediction unit 11 is further configured to, in response to the position of the current block in the current picture failing to meet the preset position requirement, and/or the size of the current block failing to meet the preset block size requirement, determine that the current block is not predicted using the interpolation filtering prediction mode.

In some embodiments, before determining whether the position of the current block in the current picture meets the preset position requirement, and determining whether the size of the current block meets the preset block size, the prediction unit 11 is further configured to decode the bitstream, to obtain fourth information, where the fourth information is used for indicating whether a current sequence is allowed to be predicted using the interpolation filtering prediction mode; in response to the fourth information indicating that the current sequence is allowed to be predicted using the interpolation filtering prediction mode, determine whether the position of the current block in the current picture meets the preset position requirement, and determine whether the size of the current block meets the preset block size.

In some embodiments, the prediction unit 11 is configured to determine filter coefficients of the interpolation filter based on the reference region; and perform interpolation filtering prediction on the current block using the interpolation filter based on the filter coefficients, to obtain the prediction block of the current block.

In some embodiments, the prediction unit 11 is configured to determine a first reconstructed region around the current block; determine a sample average reconstructed value based on reconstructed values of the first reconstructed region; de-average reconstructed values of samples within the reference region based on the sample average reconstructed value; and take de-averaged sample values of the samples within the reference region as inputs of the interpolation filter, and slide the interpolation filter within the reference region, to obtain the filter coefficients of the interpolation filter.

In some embodiments, the prediction unit 11 is configured to determine the first reconstructed region based on a shape of the current block.

In some embodiments, the prediction unit 11 is configured to, in response to the shape of the current block being a square, determine a top row reconstructed sample region of the current block and a left column reconstructed sample region of the current block as the first reconstructed region; or in response to the shape of the current block being a rectangle with a width greater than a height, determine a top row reconstructed sample region of the current block as the first reconstructed region; or in response to the shape of the current block being a rectangle with a height greater than a width, determine a left column reconstructed sample region of the current block as the first reconstructed region.

In some embodiments, the prediction unit 11 is configured to subtract the sample average reconstructed value from each of the reconstructed values of the samples within the reference region, to obtain the de-averaged sample values of the samples within the reference region.

In some embodiments, the prediction unit 11 is configured to determine sample values of N positions corresponding to an r-th point in the current point based on a shape of the interpolation filter, where r is a positive integer; de-average the sample values of the N positions based on the sample average reconstructed value, to obtain de-averaged sample values of the N positions; obtain a prediction value of the r-th point based on the de-averaged sample values of the N positions and the filter coefficients; and obtain the prediction block of the current block based on prediction values of points of the current block.

In some embodiments, the prediction unit 11 is configured to, in response to any position among the N positions being located in a reconstructed region around the current block, determine a reconstructed value of the position as a sample value of the position; or in response to any position among the N positions being located within the current block, determine a prediction value of the position as a sample value of the position.

In some embodiments, the prediction unit 11 is configured to subtract the sample average reconstructed value from each of the sample values of the N positions, to obtain the de-averaged sample values of the N positions.

In some embodiments, the prediction unit 11 is configured to determine a second reconstructed region around the current block, and determine a maximum reconstructed value of the second reconstructed region and a minimum reconstructed value of the second reconstructed region; obtain a first prediction value based on the de-averaged sample values of the N positions, the filter coefficients and the sample average reconstructed value; and determine the prediction value of the r-th point based on the first prediction value, the maximum reconstructed value and the minimum reconstructed value.

In some embodiments, the prediction unit 11 is configured to multiply the de-averaged sample values of the N positions by the filter coefficients respectively, to obtain a second prediction value of the r-th point; and add the second prediction value and the sample average reconstructed value, to obtain the first prediction value.

In some embodiments, the prediction unit 11 is configured to, in response to the first prediction value being greater than the minimum reconstructed value and less than the maximum reconstructed value, determine the first prediction value as the prediction value of the r-th point.

In some embodiments, the prediction unit 11 is configured to in response to the first prediction value being less than or equal to the minimum reconstructed value, determine the minimum reconstructed value as the prediction value of the r-th point.

In some embodiments, the prediction unit 11 is configured to, in response to the first prediction value being greater than or equal to the maximum reconstructed value, determine the maximum reconstructed value as the prediction value of the r-th point.

In some embodiments, the prediction unit 11 is configured to determine a top reconstructed region of the current block, a left reconstructed region of the current block, a top-right reconstructed region of the current block, a top-left reconstructed region of the current block and a bottom-left reconstructed region of the current block as the second reconstructed region.

In some embodiments, in response to the current block being a luma block and a prediction mode of the current block being an interpolation filtering prediction mode, the prediction unit 11 is further is configured to, in response to a chroma block corresponding to the current block using a direct mode (DM), determine a PLANAR mode or the intra prediction mode corresponding to the prediction block as a prediction mode of the chroma block.

It should be understood that the apparatus embodiments and the method embodiments may correspond to each other, and similar descriptions may refer to the method embodiments, which will not be described here for avoiding repetition. Specifically, the apparatus 10 illustrated in FIG. 28 may perform the decoding method of the decoding side in the embodiments of the present disclosure. The aforementioned and other operations and/or functions of various units in the apparatus 10 are for implementing the corresponding processes in various methods such as the decoding method of the decoding side, which will not be repeated here for the sake of brevity.

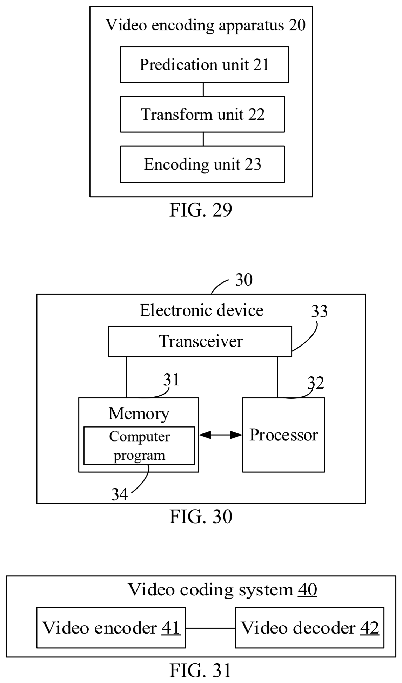

FIG. 29 is a schematic block diagram of a video encoding apparatus provided in an embodiment of the present disclosure, and the video encoding apparatus is applied to the above encoder.

As illustrated in FIG. 29, the video encoding apparatus 20 may include:

a prediction unit 21, configured to determine a reference region of a current block and an interpolation filter of the current block, and determine a prediction block of the current block based on the reference region and the interpolation filter;

a transform unit 22, configured to determine an intra prediction mode corresponding to the prediction block, and determine a transform kernel corresponding to the current block based on the intra prediction mode corresponding to the prediction block; and

an encoding unit 23, configured to transform a residual block of the current block based on the transform kernel corresponding to the current block, to obtain transform coefficients of the current block, and perform encoding based on the deformation coefficients of the current block, to obtain a bitstream.

In some embodiments, the transform unit 22 is specifically configured to determine angle values of M points in the prediction block, where M is a positive integer; and determine the intra prediction mode corresponding to the prediction block based on the angle values of the M points.

In some embodiments, the transform unit 22 is specifically configured to determine a horizontal gradient of an i-th point among the M points and a vertical gradient of the i-th point, where i is a positive integer less than or equal to M; and determine an angle value of the i-th point based on the horizontal gradient of the i-th point and the vertical gradient of the i-th point.

In some embodiments, the transform unit 22 is specifically configured to determine, in the prediction block, prediction values of points within a sliding window centered at the i-th point; and obtain the horizontal gradient of the i-th point and the vertical gradient of the i-th point based on the prediction values of the points within the sliding window, a horizontal gradient operator, and a vertical gradient operator.

In some embodiments, the transform unit 22 is specifically configured to determine a product of the prediction values of the points within the sliding window and the horizontal gradient operator as the horizontal gradient of the i-th point; and determine a product of the prediction values of the points within the sliding window and the vertical gradient operator as the vertical gradient of the i-th point.

In some embodiments, the transform unit 22 is specifically configured to determine an arctangent value of a ratio of the vertical gradient of the i-th point to the horizontal gradient of the i-th point as the angle value corresponding to the i-th point.

In some embodiments, the transform unit 22 is specifically configured to determine intra prediction modes corresponding to the M points based on the angle values of the M points; and determine the intra prediction mode corresponding to the prediction block based on the intra prediction modes corresponding to the M points.

In some embodiments, the transform unit 22 is specifically configured to determine gradient magnitude values corresponding to the M points based on horizontal gradients of the M points and vertical gradients of the M points; and determine the intra prediction mode corresponding to the prediction block based on the intra prediction modes corresponding to the M points and the gradient magnitude values corresponding to the M points.

In some embodiments, the transform unit 22 is specifically configured to add an absolute value of the horizontal gradient of the i-th point and an absolute value of the vertical gradient of the i-th point, to obtain a gradient magnitude value corresponding to the i-th point.

In some embodiments, the transform unit 22 is specifically configured to accumulate a gradient magnitude value corresponding to any point among the M points onto an intra prediction mode corresponding to the point, to obtain accumulated gradient magnitude values of the intra prediction modes corresponding to the M points; and determine an intra prediction mode with a maximum accumulated gradient magnitude value among the intra prediction modes corresponding to the M points as the intra prediction mode corresponding to the prediction block.

In some embodiments, the transform unit 22 is further configured to, in response to the gradient magnitude values corresponding to the M points all being 0, determine a first intra prediction mode as the intra prediction mode corresponding to the prediction block.

Optionally, the first intra prediction mode is a PLANAR mode.

In some embodiments, the transform unit 22 is specifically configured to obtain correspondences between intra prediction modes and the transform kernel groups, where a transform kernel group includes at least one type of transform kernels; look up a first transform kernel group corresponding to the intra prediction mode of the prediction block in the correspondences; and determine the transform kernel corresponding to the current block from the first transform kernel group.

In some embodiments, the transform unit 22 is specifically configured to determine a transform kernel type corresponding to the current block; and determine a transform kernel corresponding to the transform kernel type in the first transform kernel group as the transform kernel corresponding to the current block.

In some embodiments, the encoding unit 23 is further configured to signal the transform kernel type corresponding to the current block into the bitstream.

In some embodiments, the prediction unit 21 is specifically configured to determine the reference region of the current block from preset P reference regions, where P is a positive integer greater than 1.

In some embodiments, the prediction unit 21 is specifically configured to determine first costs in a case where the current block is predicted based on the P reference regions; and determine a reference region with a minimum first cost among the P reference regions as the reference region of the current block.

In some embodiments, the encoding unit 23 is further configured to signal first information into the bitstream, where the first information is used for indicating a type of the reference region of the current block.

In some embodiments, the prediction unit 21 is specifically configured to determine the reference region of the current block from preset P reference regions based on a shape of the current block, where P is a positive integer greater than 1.

In some embodiments, the P reference regions include at least one of a first reference region, a second reference region or a third reference region, the first reference region includes a top reconstructed region of the current block, a top-right reconstructed region of the current block, a left reconstructed region of the current block, a top-left reconstructed region of the current block and a top-left reconstructed region of the current block, the second reference region includes the top reconstructed region of the current block, the top-right reconstructed region of the current block and the top-left reconstructed region of the current block, and the third reference region includes the left reconstructed region of the current block, the top-left reconstructed region of the current block and the top-left reconstructed region of the current block.

In some embodiments, the prediction unit 21 is specifically configured to determine the interpolation filter of the current block from preset Q interpolation filters, where Q is a positive integer greater than 1.

In some embodiments, the prediction unit 21 is specifically used to determine second costs in a case where the current block is predicted using the Q interpolation filters; and determine an interpolation filter with a minimum second cost from the Q interpolation filters as the interpolation filter of the current block.

In some embodiments, the encoding unit 23 is further configured to signal second information into the bitstream, where the second information is used for indicating a shape of the interpolation filter of the current block.

In some embodiments, the prediction unit 21 is specifically configured to determine the interpolation filter of the current block from preset Q interpolation filters based on a shape of the current block, where Q is a positive integer greater than 1.

In some embodiments, the Q interpolation filters include at least one of a first interpolation filter, a second interpolation filter or a third interpolation filter, the first interpolation filter is a square interpolation filter, the second interpolation filter is a rectangular interpolation filter with a width greater than a height, and the third interpolation filter is a rectangular interpolation filter with a height greater than a width.

In some embodiments, the encoding unit 23 is further configured to signal first information and/or second information into the bitstream using an encoding manner of a truncated binary code.

In some embodiments, before determining the reference region of the current block and the interpolation filter of the current block, the prediction unit 21 is further configured to determine a prediction mode of the current block from multiple candidate prediction modes, where the multiple candidate prediction modes includes an interpolation filtering prediction mode; and in response to the prediction mode of the current block being the interpolation filtering prediction mode for prediction, determine the reference region of the current block and the interpolation filter of the current block.

In some embodiments, before determining the prediction mode of the current block from the multiple candidate prediction modes, the prediction unit 21 is further configured to determine whether a position of the current block in a current picture meets a preset position requirement, and determine whether a size of the current block meets a preset block size requirement; in response to the position of the current block in the current picture meeting the preset position requirement, and the size of the current block meeting the preset block size requirement, determine the prediction mode of the current block from the multiple candidate prediction modes.

In some embodiments, the prediction unit 21 is further configured to, in response to the position of the current block in the current picture failing to meet the preset position requirement, and/or the size of the current block meeting the preset block size requirement, determine that the current block is not predicted using the interpolation filtering prediction mode.

In some embodiments, before determining whether the position of the current block in the current picture meets the preset position requirement, and determining whether the size of the current block meets the preset block size requirement, the prediction unit 21 is further configured to determine whether a current sequence is allowed to be predicted using the interpolation filtering prediction mode; and in response to the current sequence being allowed to be predicted using the interpolation filtering prediction mode, determine whether the position of the current block in the current picture meets the preset position requirement, and determine whether the size of the current block meets the preset block size.

In some embodiments, the encoding unit 23 is further configured to signal third information into the bitstream, where the third information is used for indicating whether the current block is predicted using an interpolation filtering prediction mode.

In some embodiments, the encoding unit 23 is further configured to signal fourth information into the bitstream, where the fourth information is used for indicating whether the current sequence is allowed to be predicted using the interpolation filtering prediction mode.

In some embodiments, the prediction unit 21 is specifically configured to determine filter coefficients of the interpolation filter based on the reference region; and perform interpolation filtering prediction on the current block using the interpolation filter based on the filter coefficients, to obtain the prediction block of the current block.

In some embodiments, the prediction unit 21 is specifically configured to determine a first reconstructed region around the current block; determine a sample average reconstructed value based on reconstructed values of the first reconstructed region; de-average reconstructed values of samples within the reference region based on the sample average reconstructed value; and take de-averaged sample values of the samples within the reference region as inputs of the interpolation filter, and slide the interpolation filter within the reference region, to obtain the filter coefficients of the interpolation filter.

In some embodiments, the prediction unit 21 is specifically configured to determine the first reconstructed region based on a shape of the current block.

In some embodiments, the prediction unit 21 is specifically configured to, in response to the shape of the current block being a square, determine a top row reconstructed sample region of the current block and a left column reconstructed sample region of the current block as the first reconstructed region; or in response to the shape of the current block being a rectangle with a width greater than a height, determine a top row reconstructed sample region of the current block as the first reconstructed region; or in response to the shape of the current block being a rectangle with a height greater than a width, determine a left column reconstructed sample region of the current block as the first reconstructed region.

In some embodiments, the prediction unit 21 is specifically configured to subtract the sample average reconstructed value from each of the reconstructed values of the samples within the reference region, to obtain the de-averaged sample values of the samples within the reference region.

In some embodiments, the prediction unit 21 is specifically configured to determine sample values of N positions corresponding to an r-th point in the current point based on a shape of the interpolation filter, where r is a positive integer; de-average the sample values of the N positions based on the sample average reconstructed value, to obtain de-averaged sample values of the N positions; obtain a prediction value of the r-th point based on the de-averaged sample values of the N positions and the filter coefficients; and obtain the prediction block of the current block based on prediction values of points of the current block.

In some embodiments, the prediction unit 21 is specifically configured to, in response to any position among the N positions being located in a reconstructed region around the current block, determine a reconstructed value of the position as a sample value of the position; or in response to any position among the N positions being located within the current block, determine a prediction value of the position as a sample value of the position.

In some embodiments, the prediction unit 21 is specifically configured to subtract the sample average reconstructed value from each of the sample values of the N positions, to obtain the de-averaged sample values of the N positions.

In some embodiments, the prediction unit 21 is specifically configured to determine a second reconstructed region around the current block, and determine a maximum reconstructed value of the second reconstructed region and a minimum reconstructed value of the second reconstructed region; obtain a first prediction value based on the de-averaged sample values of the N positions, the filter coefficients and the sample average reconstructed value; and determine the prediction value of the r-th point based on the first prediction value, the maximum reconstructed value and the minimum reconstructed value.

In some embodiments, the prediction unit 21 is specifically configured to multiply the de-averaged sample values of the N positions by the filter coefficients respectively, to obtain a second prediction value of the r-th point; and add the second prediction value and the sample average reconstructed value, to obtain the first prediction value.

In some embodiments, the prediction unit 21 is specifically configured to, in response to the first prediction value being greater than the minimum reconstructed value and less than the maximum reconstructed value, determine the first prediction value as the prediction value of the r-th point.

In some embodiments, the prediction unit 21 is specifically configured to, in response to the first prediction value being less than or equal to the minimum reconstructed value, determine the minimum reconstructed value as the prediction value of the r-th point.

In some embodiments, the prediction unit 21 is specifically configured to, in response to the first prediction value being greater than or equal to the maximum reconstructed value, determine the maximum reconstructed value as the prediction value of the r-th point.

In some embodiments, the prediction unit 21 is specifically configured to determine a top reconstructed region of the current block, a left reconstructed region of the current block, a top-right reconstructed region of the current block, a top-left reconstructed region of the current block and a bottom-left reconstructed region of the current block as the second reconstructed region.

In some embodiments, in response to the current block being a luma block and a prediction mode of the current block being an interpolation filtering prediction mode, the prediction unit 21 is further configured to, in response to a chroma block corresponding to the current block using a direct mode (DM), determine a PLANAR mode or the intra prediction mode corresponding to the prediction block as a prediction mode of the chroma block.

It should be understood that the apparatus embodiments and the method embodiments may correspond to each other, and similar descriptions may refer to the method embodiments, which will not be repeated here for avoiding repetition. Specifically, the apparatus 20 illustrated in FIG. 29 may correspond to the corresponding subject that performs the encoding method of the encoding side in the embodiments of the present disclosure, and the above and other operations and/or functions of each unit in the apparatus 20 are used for implementing the corresponding processes in the methods such as the encoding method of the encoding side, which will not be repeated here for the sake of brevity.

The apparatus and the system according to the embodiments of the present disclosure are described above from a perspective of functional units with reference to the accompanying drawings. It should be understood that the functional units may be implemented in the form of hardware, may be implemented by instructions in the form of software, or may be implemented by a combination of hardware and software modules. Specifically, various steps of the method embodiments in the embodiments of the present disclosure may be completed by the hardware integrated logic circuit and/or software instructions in the processor. The steps of the methods disclosed in combination with the embodiments of the present disclosure may be directly embodied by execution of a hardware decoding processor, or by execution of a combination of hardware and software units in a decoding processor. Optionally, the software unit may be located in the mature storage medium in the art, such as a random access memory, a flash memory, a read-only memory, a programmable read-only memory, an electrically erasable programmable memory, or a register. The storage medium is located in the memory, and the processor reads the information in the memory and completes the steps in the method embodiments mentioned above in combination with hardware of the processor.

FIG. 30 is a schematic block diagram of an electronic device provided in the embodiments of the present disclosure.

As illustrated in FIG. 30, the electronic device 30 may be a video encoder or a video decoder according to the embodiments of the present disclosure, and the electronic device 30 may include:

a memory 33 and a processor 32, where the memory 33 is used to store a computer program 34 and transmit the program code 34 to the processor 32. In other words, the processor 32 may call and run the computer program 34 from the memory 33 to implement the methods in the embodiments of the present disclosure.

For example, the processor 32 may be configured to perform the steps in the method 200 according to instructions in the computer program 34.

In some embodiments of the present disclosure, the processor 32 may include but is not limited to:

a general-purpose processor, a digital signal processor (DSP), an application specific integrated circuit (ASIC), a field programmable gate array (FPGA) or other programmable logic devices, discrete gate or transistor logic devices, discrete hardware components or the like.

In some embodiments of the present disclosure, the memory 33 includes but is not limited to:

a volatile memory and/or non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. As an example but not a limitation, a variety of forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

In some embodiments of the present disclosure, the computer program 34 may be divided into one or more units, which are stored in the memory 33 and executed by the processor 32 to complete the method provided in the present disclosure. The one or more units may be a series of computer program instruction segments capable of completing specific functions, and the instruction segments are used to describe the execution process of the computer program 34 in the electronic device 30.

As illustrated in FIG. 30, the electronic device 30 may further include:

a transceiver 33, which may be connected to the processor 32 or the memory 33.

The processor 32 may control the transceiver 33 to communicate with other devices, and specifically, to transmit information or data to other devices, or to receive information or data transmitted by other devices. The transceiver 33 may include a transmitter and a receiver. The transceiver 33 may further include antenna(s), and the number of the antennas may be one or more.

It should be understood that the various components in the electronic device 30 are connected through a bus system, where the bus system includes a power bus, a control bus and a status signal bus in addition to a data bus.

FIG. 31 is a schematic block diagram of a video coding system provided in the embodiments of the present disclosure.

As illustrated in FIG. 31, the video coding system 40 may include a video encoder 41 and a video decoder 42. The video encoder 41 is configured to perform the video encoding method involved in the embodiments of the present disclosure, and the video decoder 42 is configured to perform the video decoding method involved in the embodiments of the present disclosure.

The present disclosure further provides a computer storage medium on which a computer program is stored. The computer program, when run on a computer, causes the computer to perform the method in the above method embodiments. In other words, the embodiments of the present disclosure further provide a computer program product including instructions. The instructions, when run on a computer, cause the computer to perform the method in the above method embodiments.

The present disclosure further provides a bitstream, which is generated according to the above encoding method.

When the embodiments of the present disclosure are implemented using software, all or part of the implementation may be in the form of the computer program product. The computer program product includes one or more computer instructions. When the computer program instructions are loaded and run on a computer, the process or function according to the embodiments of the present disclosure is generated in whole or in part. The computer may be a general purpose computer, a special purpose computer, a computer network, or other programmable apparatus. The computer instructions may be stored in a computer-readable storage medium, or may be transmitted from one computer-readable storage medium to another computer-readable storage medium. For example, the computer instructions may be transmitted from one website, a computer, a server, or a data center to another website, computer, server, or data center through wired (e.g., coaxial cable, optical fiber, digital subscriber line (DSL)) or wireless (e.g., infrared, wireless, microwave) means. The computer-readable storage medium may be any available medium that may be accessed by the computer or a data storage device such as a server or a data center that includes one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)).

Those of ordinary skill in the art will appreciate that units and algorithm steps of all examples described with reference to the embodiments disclosed herein may be implemented by electronic hardware, or by a combination of computer software and electronic hardware. Whether these functions are performed in hardware or software depends on the specific application and design constraints of the technical solutions. A professional may use different methods to implement the described functions for each specific application, but such implementation should not be considered beyond the scope of the present disclosure.

In several embodiments provided by the present disclosure, it should be understood that the disclosed system, devices and methods may be implemented in other ways. For example, the device embodiments described above are only schematic. For example, the division of the units is only division of logical functions. There may be other division ways in the actual implementation. For example, a plurality of units or components may be combined or integrated into another system, or some features may be ignored or not implemented. In addition, the mutual coupling or direct coupling or communication connection illustrated or discussed may be indirect coupling or communication connection through some interfaces, devices or units, and may be in electrical, mechanical or other forms.

The units described as separation components may or may not be physically separated, and the components shown as units may or may not be physical units. That is, they may be located at one place, or may be distributed onto a plurality of network units. Some or all of the units may be selected according to actual requirements to implement the purpose of the schemes of the embodiments. For example, various functional units in the various embodiments of the present disclosure may be integrated into one processing unit, or various units may exist physically alone, or two or more units may be integrated into one unit.

The foregoing descriptions are merely specific implementations of the present disclosure, but the protection scope of the present disclosure is not limited thereto. Variations or replacements that any person skilled in the art could readily conceive of within the technical scope disclosed in the present disclosure shall be included in the protection scope of the present disclosure. Therefore, the protection scope of the present disclosure shall be subject to the protection scope of claims.

**Claims**

1. A video decoding method, comprising:

   determining a reference region of a current block and an interpolation filter of the current block, and determining a prediction block of the current block based on the reference region and the interpolation filter;

determining an intra prediction mode corresponding to the prediction block, and determining a transform kernel corresponding to the current block based on the intra prediction mode corresponding to the prediction block; and performing inverse transform on transform coefficients of the current block based on the transform kernel corresponding to the current block to obtain a residual block of the current block, and obtaining a reconstructed block of the current block based on the prediction block of the current block and the residual block of the current block.

2. The method according to claim 1, wherein determining the intra prediction mode corresponding to the prediction block comprises:

determining angle values of M points in the prediction block, wherein M is a positive integer; and determining the intra prediction mode corresponding to the prediction block based on the angle values of the M points.

3. The method according to claim 2, wherein determining the angle values of the M points in the prediction block comprises:

for an i-th point among the M points, determining a horizontal gradient of the i-th point and a vertical gradient of the i-th point, wherein i is a positive integer less than or equal to M; and determining an angle value of the i-th point based on the horizontal gradient of the i-th point and the vertical gradient of the i-th point.

4. The method according to claim 3, wherein determining the horizontal gradient of the i-th point and the vertical gradient of the i-th point comprises:

determining, in the prediction block, prediction values of points within a sliding window centered at the i-th point; and obtaining the horizontal gradient of the i-th point and the vertical gradient of the i-th point based on the prediction values of the points within the sliding window, a horizontal gradient operator, and a vertical gradient operator.

5. The method according to claim 4, wherein obtaining the horizontal gradient of the i-th point and the vertical gradient of the i-th point based on the prediction values of the points within the sliding window, the horizontal gradient operator, and the vertical gradient operator comprises:

determining a product of the prediction values of the points within the sliding window and the horizontal gradient operator as the horizontal gradient of the i-th point; and determining a product of the prediction values of the points within the sliding window and the vertical gradient operator as the vertical gradient of the i-th point.

6. The method according to claim 3, wherein determining the angle value corresponding to the i-th point based on the horizontal gradient of the i-th point and the vertical gradient of the i-th point comprises:

determining an arctangent value of a ratio of the vertical gradient of the i-th point to the horizontal gradient of the i-th point as the angle value corresponding to the i-th point.

7. The method according to claim 3, wherein determining the intra prediction mode corresponding to the prediction block based on the angle values of the M points comprises:

determining intra prediction modes corresponding to the M points based on the angle values of the M points; and determining the intra prediction mode corresponding to the prediction block based on the intra prediction modes corresponding to the M points.

8. The method according to claim 7, wherein determining the intra prediction mode corresponding to the prediction block based on the intra prediction modes corresponding to the M points comprises:

determining gradient magnitude values corresponding to the M points based on horizontal gradients of the M points and vertical gradients of the M points; and determining the intra prediction mode corresponding to the prediction block based on the intra prediction modes corresponding to the M points and the gradient magnitude values corresponding to the M points.

9. The method according to claim 8, wherein determining the gradient magnitude values corresponding to the M points based on the horizontal gradients of the M points and the vertical gradients of the M points comprises:
adding an absolute value of the horizontal gradient of the i-th point and an absolute value of the vertical gradient of the i-th point, to obtain a gradient magnitude value corresponding to the i-th point.

10. The method according to claim 8, wherein determining the intra prediction mode corresponding to the prediction block based on the intra prediction modes corresponding to the M points and the gradient magnitude values corresponding to the M points comprises:

   accumulating a gradient magnitude value corresponding to any point among the M points onto an intra prediction mode corresponding to the point, to obtain accumulated gradient magnitude values of the intra prediction modes corresponding to the M points; and
   determining an intra prediction mode with a maximum accumulated gradient magnitude value among the intra prediction modes corresponding to the M points as the intra prediction mode corresponding to the prediction block.

11. The method according to claim 8, further comprising:
in response to the gradient magnitude values corresponding to the M points all being 0, determining a first intra prediction mode as the intra prediction mode corresponding to the prediction block.

12. The method according to claim 11, wherein the first intra prediction mode is a PLANAR mode.

13. The method according to any one of claims 1 to 12, wherein determining the transform kernel corresponding to the current block based on the intra prediction mode corresponding to the prediction block comprises:

   obtaining correspondences between intra prediction modes and transform kernel groups, wherein a transform kernel group comprises at least one type of transform kernels;
   looking up a first transform kernel group corresponding to the intra prediction mode of the prediction block in the correspondences; and
   determining the transform kernel corresponding to the current block from the first transform kernel group.

14. The method according to claim 13, wherein determining the transform kernel corresponding to the current block from the first transform kernel group comprises:

   determining a transform kernel type corresponding to the current block; and
   determining a transform kernel corresponding to the transform kernel type in the first transform kernel group as the transform kernel corresponding to the current block.

15. The method according to claim 14, wherein determining the transform kernel type corresponding to the current block comprises:
decoding a bitstream to obtain the transform kernel type corresponding to the current block.

16. The method according to claim 1, wherein determining the reference region of the current block comprises:

   decoding a bitstream to obtain first information, wherein the first information is used for indicating a type of the reference region of the current block; and
   determining the reference region of the current block from preset P reference regions based on the type of the reference region, wherein P is a positive integer greater than 1.

17. The method according to claim 1, wherein determining the reference region of the current block comprises:
determining the reference region of the current block from preset P reference regions based on a shape of the current block, wherein P is a positive integer greater than 1.

18. The method according to claim 16 or 17, wherein the P reference regions comprise at least one of a first reference region, a second reference region or a third reference region, the first reference region comprises a top reconstructed region of the current block, a top-right reconstructed region of the current block, a left reconstructed region of the current block, a top-left reconstructed region of the current block and a top-left reconstructed region of the current block, the second reference region comprises the top reconstructed region of the current block, the top-right reconstructed region of the current block and the top-left reconstructed region of the current block, and the third reference region comprises the left reconstructed region of the current block, the top-left reconstructed region of the current block and the top-left reconstructed region of the current block.

19. The method according to claim 1, wherein determining the interpolation filter of the current block comprises:

   decoding a bitstream to obtain second information, wherein the second information is used for indicating a shape of the interpolation filter of the current block; and
   determining the interpolation filter of the current block from preset Q interpolation filters based on the shape of the interpolation filter, wherein Q is a positive integer greater than 1.

20. The method according to claim 1, wherein determining the interpolation filter of the current block comprises:
   determining the interpolation filter of the current block from preset Q interpolation filters based on a shape of the current block, wherein Q is a positive integer greater than 1.

21. The method according to claim 19 or 20, wherein the Q interpolation filters comprise at least one of a first interpolation filter, a second interpolation filter or a third interpolation filter; and the first interpolation filter is a square interpolation filter, the second interpolation filter is a rectangular interpolation filter with a width greater than a height, and the third interpolation filter is a rectangular interpolation filter with a height greater than a width.

22. The method according to claim 16 or 19, further comprising:
   obtaining first information and/or second information by decoding the bitstream using a decoding manner of a truncated binary code.

23. The method according to claim 1, wherein before determining the reference region of the current block and the interpolation filter of the current block, the method further comprises:

   decoding a bitstream to obtain third information, wherein the third information is used for indicating whether the current block is predicted using an interpolation filtering prediction mode; and
   determining the reference region of the current block and the interpolation filter of the current block comprises:
   in response to determining, based on the third information, that the current block is predicted using the interpolation filtering prediction mode, determining the reference region of the current block and the interpolation filter of the current block.

24. The method according to claim 23, wherein before decoding the bitstream to obtain the third information, the method further comprises:

   determining whether a position of the current block in a current picture meets a preset position requirement, and determining whether a size of the current block meets a preset block size requirement; and
   decoding the bitstream to obtain the third information comprises:
   in response to determining that the position of the current block in the current picture meets the preset position requirement, and that the size of the current block meets the preset block size requirement, decoding the bitstream to obtain the third information.

25. The method according to claim 24, further comprising:
   in response to the position of the current block in the current picture failing to meet the preset position requirement, and/or the size of the current block failing to meet the preset block size requirement, determining that the current block is not predicted using the interpolation filtering prediction mode.

26. The method according to claim 24, wherein before determining whether the position of the current block in the current picture meets the preset position requirement, and determining whether the size of the current block meets the preset block size, the method further comprises:

   decoding the bitstream to obtain fourth information, wherein the fourth information is used for indicating whether a current sequence is allowed to be predicted using the interpolation filtering prediction mode; and
   determining whether the position of the current block in the current picture meets the preset position requirement,

and determining whether the size of the current block meets the preset block size comprises:
in response to the fourth information indicating that the current sequence is allowed to be predicted using the interpolation filtering prediction mode, determining whether the position of the current block in the current picture meets the preset position requirement, and determining whether the size of the current block meets the preset block size.

27. The method according to claim 1, wherein determining the prediction block of the current block based on the reference region and the interpolation filter comprises:

determining filter coefficients of the interpolation filter based on the reference region; and
performing interpolation filtering prediction on the current block using the interpolation filter based on the filter coefficients, to obtain the prediction block of the current block.

28. The method according to claim 27, wherein determining the filter coefficients of the interpolation filter based on the reference region comprises:

determining a first reconstructed region around the current block;
determining a sample average reconstructed value based on reconstructed values of the first reconstructed region;
de-averaging reconstructed values of samples within the reference region based on the sample average reconstructed value; and
taking de-averaged sample values of the samples within the reference region as inputs of the interpolation filter, and sliding the interpolation filter within the reference region, to obtain the filter coefficients of the interpolation filter.

29. The method according to claim 28, wherein determining the first reconstructed region around the current block comprises:

determining the first reconstructed region based on a shape of the current block.

30. The method according to claim 29, wherein determining the first reconstructed region based on the shape of the current block comprises:

in response to the shape of the current block being a square, determining a top row reconstructed sample region of the current block and a left column reconstructed sample region of the current block as the first reconstructed region; or
in response to the shape of the current block being a rectangle with a width greater than a height, determining a top row reconstructed sample region of the current block as the first reconstructed region; or
in response to the shape of the current block being a rectangle with a height greater than a width, determining a left column reconstructed sample region of the current block as the first reconstructed region.

31. The method according to claim 28, wherein de-averaging the reconstructed values of the samples within the reference region based on the sample average reconstructed value comprises:
subtracting the sample average reconstructed value from each of the reconstructed values of the samples within the reference region, to obtain the de-averaged sample values of the samples within the reference region.

32. The method according to claim 28, wherein performing the interpolation filtering prediction on the current block using the interpolation filter based on the filter coefficients, to obtain the prediction block of the current block comprises:

determining sample values of N positions corresponding to an r-th point in the current point based on a shape of the interpolation filter, wherein r is a positive integer;
de-averaging the sample values of the N positions based on the sample average reconstructed value, to obtain de-averaged sample values of the N positions;
obtaining a prediction value of the r-th point based on the de-averaged sample values of the N positions and the filter coefficients; and
obtaining the prediction block of the current block based on prediction values of points of the current block.

33. The method according to claim 32, wherein determining the sample values of the N positions corresponding to the r-th point comprises:

in response to any position among the N positions being located in a reconstructed region around the current block, determining a reconstructed value of the position as a sample value of the position; or in response to any position among the N positions being located within the current block, determining a prediction value of the position as a sample value of the position.

34. The method according to claim 32, wherein de-averaging the sample values of the N positions based on the sample average reconstructed value, to obtain the de-averaged sample values of the N positions comprises:
subtracting the sample average reconstructed value from each of the sample values of the N positions, to obtain the de-averaged sample values of the N positions.

35. The method according to claim 32, wherein obtaining the prediction value of the r-th point based on the de-averaged sample values of the N positions and the filter coefficients comprises:

determining a second reconstructed region around the current block, and determining a maximum reconstructed value of the second reconstructed region and a minimum reconstructed value of the second reconstructed region;
obtaining a first prediction value based on the de-averaged sample values of the N positions, the filter coefficients and the sample average reconstructed value; and
determining the prediction value of the r-th point based on the first prediction value, the maximum reconstructed value and the minimum reconstructed value.

36. The method according to claim 35, wherein obtaining the first prediction value based on the de-averaged sample values of the N positions, the filter coefficients and the sample average reconstructed value comprises:

multiplying the de-averaged sample values of the N positions by the filter coefficients respectively, to obtain a second prediction value of the r-th point; and
adding the second prediction value and the sample average reconstructed value, to obtain the first prediction value.

37. The method according to claim 35, wherein determining the prediction value of the r-th point based on the first prediction value, the maximum reconstructed value and the minimum reconstructed value comprises:
in response to the first prediction value being greater than the minimum reconstructed value and less than the maximum reconstructed value, determining the first prediction value as the prediction value of the r-th point.

38. The method according to claim 35, wherein determining the prediction value of the r-th point based on the first prediction value, the maximum reconstructed value and the minimum reconstructed value comprises:
in response to the first prediction value being less than or equal to the minimum reconstructed value, determining the minimum reconstructed value as the prediction value of the r-th point.

39. The method according to claim 35, wherein determining the prediction value of the r-th point based on the first prediction value, the maximum reconstructed value and the minimum reconstructed value comprises:
in response to the first prediction value being greater than or equal to the maximum reconstructed value, determining the maximum reconstructed value as the prediction value of the r-th point.

40. The method according to claim 35, wherein determining the second reconstructed region around the current block comprises:
determining a top reconstructed region of the current block, a left reconstructed region of the current block, a top-right reconstructed region of the current block, a top-left reconstructed region of the current block and a bottom-left reconstructed region of the current block as the second reconstructed region.

41. The method according to claim 1, wherein in response to the current block being a luma block and a prediction mode of the current block being an interpolation filtering prediction mode, the method further comprises:
in response to a chroma block corresponding to the current block using a direct mode (DM), determining a PLANAR mode or the intra prediction mode corresponding to the prediction block as a prediction mode of the chroma block.

42. A video encoding method, comprising:

determining a reference region of a current block and an interpolation filter of the current block, and determining a prediction block of the current block based on the reference region and the interpolation filter;

determining an intra prediction mode corresponding to the prediction block, and determining a transform kernel corresponding to the current block based on the intra prediction mode corresponding to the prediction block; and

transforming a residual block of the current block based on the transform kernel corresponding to the current block to obtain transform coefficients of the current block, and performing encoding based on the deformation coefficients of the current block to obtain a bitstream.

43. The method according to claim 42, wherein determining the intra prediction mode corresponding to the prediction block comprises:

determining angle values of M points in the prediction block, wherein M is a positive integer; and

determining the intra prediction mode corresponding to the prediction block based on the angle values of the M points.

44. The method according to claim 43, wherein determining the angle values of the M points in the prediction block comprises:

for an i-th point among the M points, determining a horizontal gradient of the i-th point and a vertical gradient of the i-th point, wherein i is a positive integer less than or equal to M; and

determining an angle value of the i-th point based on the horizontal gradient of the i-th point and the vertical gradient of the i-th point.

45. The method according to claim 44, wherein determining the horizontal gradient of the i-th point and the vertical gradient of the i-th point comprises:

determining, in the prediction block, prediction values of points within a sliding window centered at the i-th point; and

obtaining the horizontal gradient of the i-th point and the vertical gradient of the i-th point based on the prediction values of the points within the sliding window, a horizontal gradient operator, and a vertical gradient operator.

46. The method according to claim 45, wherein obtaining the horizontal gradient of the i-th point and the vertical gradient of the i-th point based on the prediction values of the points within the sliding window, the horizontal gradient operator, and the vertical gradient operator comprises:

determining a product of the prediction values of the points within the sliding window and the horizontal gradient operator as the horizontal gradient of the i-th point; and

determining a product of the prediction values of the points within the sliding window and the vertical gradient operator as the vertical gradient of the i-th point.

47. The method according to claim 44, wherein determining the angle value corresponding to the i-th point based on the horizontal gradient of the i-th point and the vertical gradient of the i-th point comprises:

determining an arctangent value of a ratio of the vertical gradient of the i-th point to the horizontal gradient of the i-th point as the angle value corresponding to the i-th point.

48. The method according to claim 44, wherein determining the intra prediction mode corresponding to the prediction block based on the angle values of the M points comprises:

determining intra prediction modes corresponding to the M points based on the angle values of the M points; and

determining the intra prediction mode corresponding to the prediction block based on the intra prediction modes corresponding to the M points.

49. The method according to claim 48, wherein determining the intra prediction mode corresponding to the prediction block based on the intra prediction modes corresponding to the M points comprises:

determining gradient magnitude values corresponding to the M points based on horizontal gradients of the M points and vertical gradients of the M points; and

determining the intra prediction mode corresponding to the prediction block based on the intra prediction modes corresponding to the M points and the gradient magnitude values corresponding to the M points.

50. The method according to claim 49, wherein determining the gradient magnitude values corresponding to the M points based on the horizontal gradients of the M points and the vertical gradients of the M points comprises:
adding an absolute value of the horizontal gradient of the i-th point and an absolute value of the vertical gradient of the i-th point, to obtain a gradient magnitude value corresponding to the i-th point.

51. The method according to claim 49, wherein determining the intra prediction mode corresponding to the prediction block based on the intra prediction modes corresponding to the M points and the gradient magnitude values corresponding to the M points comprises:

accumulating a gradient magnitude value corresponding to any point among the M points onto an intra prediction mode corresponding to the point, to obtain accumulated gradient magnitude values of the intra prediction modes corresponding to the M points; and
determining an intra prediction mode with a maximum accumulated gradient magnitude value among the intra prediction modes corresponding to the M points as the intra prediction mode corresponding to the prediction block.

52. The method according to claim 49, further comprising:
in response to the gradient magnitude values corresponding to the M points all being 0, determining a first intra prediction mode as the intra prediction mode corresponding to the prediction block.

53. The method according to claim 52, wherein the first intra prediction mode is a PLANAR mode.

54. The method according to any one of claims 42 to 53, wherein determining the transform kernel corresponding to the current block based on the intra prediction mode corresponding to the prediction block comprises:

obtaining correspondences between intra prediction modes and transform kernel groups, wherein a transform kernel group comprises at least one type of transform kernels;
looking up a first transform kernel group corresponding to the intra prediction mode of the prediction block in the correspondences; and
determining the transform kernel corresponding to the current block from the first transform kernel group.

55. The method according to claim 54, wherein determining the transform kernel corresponding to the current block from the first transform kernel group comprises:

determining a transform kernel type corresponding to the current block; and
determining a transform kernel corresponding to the transform kernel type in the first transform kernel group as the transform kernel corresponding to the current block.

56. The method according to claim 55, further comprising:
signalling the transform kernel type corresponding to the current block into the bitstream.

57. The method according to claim 42, wherein determining the reference region of the current block comprises:
determining the reference region of the current block from preset P reference regions, wherein P is a positive integer greater than 1.

58. The method according to claim 57, wherein determining the reference region of the current block from the preset P reference regions comprises:

determining first costs in a case where the current block is predicted based on the P reference regions; and
determining a reference region with a minimum first cost among the P reference regions as the reference region of the current block.

59. The method according to claim 58, further comprising:
signalling first information into the bitstream, wherein the first information is used for indicating a type of the reference region of the current block.

60. The method according to claim 42, wherein determining the reference region of the current block comprises:
determining the reference region of the current block from preset P reference regions based on a shape of the current block, wherein P is a positive integer greater than 1.

61. The method according to claim 57 or 60, wherein the P reference regions comprise at least one of a first reference region, a second reference region or a third reference region, the first reference region comprises a top reconstructed region of the current block, a top-right reconstructed region of the current block, a left reconstructed region of the current block, a top-left reconstructed region of the current block and a top-left reconstructed region of the current block, the second reference region comprises the top reconstructed region of the current block, the top-right reconstructed region of the current block and the top-left reconstructed region of the current block, and the third reference region comprises the left reconstructed region of the current block, the top-left reconstructed region of the current block and the top-left reconstructed region of the current block.

62. The method according to claim 42, wherein determining the interpolation filter of the current block comprises:
determining the interpolation filter of the current block from preset Q interpolation filters, wherein Q is a positive integer greater than 1.

63. The method according to claim 62, wherein determining the interpolation filter of the current block from the preset Q interpolation filters comprises:

determining second costs in a case where the current block is predicted using the Q interpolation filters; and
determining an interpolation filter with a minimum second cost in the Q interpolation filters as the interpolation filter of the current block.

64. The method according to claim 62, further comprising:
signalling second information into the bitstream, wherein the second information is used for indicating a shape of the interpolation filter of the current block.

65. The method according to claim 42, wherein determining the interpolation filter of the current block comprises:
determining the interpolation filter of the current block from preset Q interpolation filters based on a shape of the current block, wherein Q is a positive integer greater than 1.

66. The method according to claim 62 or 65, wherein the Q interpolation filters comprise at least one of a first interpolation filter, a second interpolation filter or a third interpolation filter; and the first interpolation filter is a square interpolation filter, the second interpolation filter is a rectangular interpolation filter with a width greater than a height, and the third interpolation filter is a rectangular interpolation filter with a height greater than a width.

67. The method according to claim 59 or 64, further comprising:
signalling first information and/or second information into the bitstream using an encoding manner of a truncated binary code.

68. The method according to claim 42, wherein before determining the reference region of the current block and the interpolation filter of the current block, the method further comprises:

determining a prediction mode of the current block from multiple candidate prediction modes, wherein the multiple candidate prediction modes comprise an interpolation filtering prediction mode; and
determining the reference region of the current block and the interpolation filter of the current block comprises:
in response to the prediction mode of the current block being the interpolation filtering prediction mode for prediction, determining the reference region of the current block and the interpolation filter of the current block.

69. The method according to claim 68, wherein before determining the prediction mode of the current block from the multiple candidate prediction modes, the method further comprises:

determining whether a position of the current block in a current picture meets a preset position requirement, and determining whether a size of the current block meets a preset block size requirement; and
determining the prediction mode of the current block from the multiple candidate prediction modes comprises:
in response to the position of the current block in the current picture meeting the preset position requirement, and the size of the current block meeting the preset block size requirement, determining the prediction mode of the current block from the multiple candidate prediction modes.

70. The method according to claim 69, further comprising:
in response to the position of the current block in the current picture failing to meet the preset position requirement, and/or the size of the current block meeting the preset block size requirement, determining that the current block is not predicted using the interpolation filtering prediction mode.

71. The method according to claim 69, wherein before determining whether the position of the current block in the current picture meets the preset position requirement, and determining whether the size of the current block meets the preset block size requirement, the method further comprises:

determining whether a current sequence is allowed to be predicted using the interpolation filtering prediction mode; and
determining whether the position of the current block in the current picture meets the preset position requirement, and determining whether the size of the current block meets the preset block size comprises:
in response to the current sequence being allowed to be predicted using the interpolation filtering prediction mode, determining whether the position of the current block in the current picture meets the preset position requirement, and determining whether the size of the current block meets the preset block size.

72. The method according to claim 68, further comprising:
signalling third information into the bitstream, wherein the third information is used for indicating whether the current block is predicted using an interpolation filtering prediction mode.

73. The method according to claim 71, further comprising:
signalling fourth information into the bitstream, wherein the fourth information is used for indicating whether the current sequence is allowed to be predicted using the interpolation filtering prediction mode.

74. The method according to claim 42, wherein determining the prediction block of the current block based on the reference region and the interpolation filter comprises:

determining filter coefficients of the interpolation filter based on the reference region; and
performing interpolation filtering prediction on the current block using the interpolation filter based on the filter coefficients, to obtain the prediction block of the current block.

75. The method according to claim 74, wherein determining the filter coefficients of the interpolation filter based on the reference region comprises:

determining a first reconstructed region around the current block;
determining a sample average reconstructed value based on reconstructed values of the first reconstructed region;
de-averaging reconstructed values of samples within the reference region based on the sample average reconstructed value; and
taking de-averaged sample values of the samples within the reference region as inputs of the interpolation filter, and sliding the interpolation filter within the reference region, to obtain the filter coefficients of the interpolation filter.

76. The method according to claim 75, wherein determining the first reconstructed region around the current block comprises:
determining the first reconstructed region based on a shape of the current block.

77. The method according to claim 76, wherein determining the first reconstructed region based on the shape of the current block comprises:

in response to the shape of the current block being a square, determining a top row reconstructed sample region of the current block and a left column reconstructed sample region of the current block as the first reconstructed region; or
in response to the shape of the current block being a rectangle with a width greater than a height, determining a top row reconstructed sample region of the current block as the first reconstructed region; or
in response to the shape of the current block being a rectangle with a height greater than a width, determining a left column reconstructed sample region of the current block as the first reconstructed region.

**78.** The method according to claim 75, wherein de-averaging the reconstructed values of the samples within the reference region based on the sample average reconstructed value comprises:
subtracting the sample average reconstructed value from each of the reconstructed values of the samples within the reference region, to obtain the de-averaged sample values of the samples within the reference region.

**79.** The method according to claim 75, wherein performing the interpolation filtering prediction on the current block using the interpolation filter based on the filter coefficients, to obtain the prediction block of the current block comprises:

determining sample values of N positions corresponding to an r-th point in the current point based on a shape of the interpolation filter, wherein r is a positive integer;
de-averaging the sample values of the N positions based on the sample average reconstructed value, to obtain de-averaged sample values of the N positions;
obtaining a prediction value of the r-th point based on the de-averaged sample values of the N positions and the filter coefficients; and
obtaining the prediction block of the current block based on prediction values of points of the current block.

**80.** The method according to claim 79, wherein determining the sample values of the N positions corresponding to the r-th point comprises:
in response to any position among the N positions being located in a reconstructed region around the current block, determining a reconstructed value of the position as a sample value of the position; or in response to any position among the N positions being located within the current block, determining a prediction value of the position as a sample value of the position.

**81.** The method according to claim 79, wherein de-averaging the sample values of the N positions based on the sample average reconstructed value, to obtain the de-averaged sample values of the N positions comprises:
subtracting the sample average reconstructed value from each of the sample values of the N positions, to obtain the de-averaged sample values of the N positions.

**82.** The method according to claim 79, wherein obtaining the prediction value of the r-th point based on the de-averaged sample values of the N positions and the filter coefficients comprises:

determining a second reconstructed region around the current block, and determining a maximum reconstructed value of the second reconstructed region and a minimum reconstructed value of the second reconstructed region;
obtaining a first prediction value based on the de-averaged sample values of the N positions, the filter coefficients and the sample average reconstructed value; and
determining the prediction value of the r-th point based on the first prediction value, the maximum reconstructed value and the minimum reconstructed value.

**83.** The method according to claim 82, wherein obtaining the first prediction value based on the de-averaged sample values of the N positions, the filter coefficients and the sample average reconstructed value comprises:

multiplying the de-averaged sample values of the N positions by the filter coefficients respectively, to obtain a second prediction value of the r-th point; and
adding the second prediction value and the sample average reconstructed value, to obtain the first prediction value.

**84.** The method according to claim 82, wherein determining the prediction value of the r-th point based on the first prediction value, the maximum reconstructed value and the minimum reconstructed value comprises:
in response to the first prediction value being greater than the minimum reconstructed value and less than the maximum reconstructed value, determining the first prediction value as the prediction value of the r-th point.

**85.** The method according to claim 82, wherein determining the prediction value of the r-th point based on the first prediction value, the maximum reconstructed value and the minimum reconstructed value comprises:
in response to the first prediction value being less than or equal to the minimum reconstructed value, determining the minimum reconstructed value as the prediction value of the r-th point.

**86.** The method according to claim 82, wherein determining the prediction value of the r-th point based on the first prediction value, the maximum reconstructed value and the minimum reconstructed value comprises:

in response to the first prediction value being greater than or equal to the maximum reconstructed value, determining the maximum reconstructed value as the prediction value of the r-th point.

87. The method according to claim 82, wherein determining the second reconstructed region around the current block comprises:
determining a top reconstructed region of the current block, a left reconstructed region of the current block, a top-right reconstructed region of the current block, a top-left reconstructed region of the current block and a bottom-left reconstructed region of the current block as the second reconstructed region.

88. The method according to claim 42, wherein in response to the current block being a luma block and a prediction mode of the current block being an interpolation filtering prediction mode, the method further comprises:
in response to a chroma block corresponding to the current block using a direct mode (DM), determining a PLANAR mode or the intra prediction mode corresponding to the prediction block as a prediction mode of the chroma block.

89. A video decoding apparatus, comprising:

a prediction unit, configured to determine a reference region of a current block and an interpolation filter of the current block, and determine a prediction block of the current block based on the reference region and the interpolation filter;
a transform unit, configured to determine an intra prediction mode corresponding to the prediction block, and determine a transform kernel corresponding to the current block based on the intra prediction mode corresponding to the prediction block; and
a decoding unit, configured to perform inverse transform on transform coefficients of the current block based on the transform kernel corresponding to the current block to obtain a residual block of the current block, and obtain a reconstructed block of the current block based on the prediction block of the current block and the residual block of the current block.

90. A video encoding apparatus, comprising:

a prediction unit, configured to determine a reference region of a current block and an interpolation filter of the current block, and determine a prediction block of the current block based on the reference region and the interpolation filter;
a transform unit, configured to determine an intra prediction mode corresponding to the prediction block, and determine a transform kernel corresponding to the current block based on the intra prediction mode corresponding to the prediction block; and
an encoding unit, configured to transform a residual block of the current block based on the transform kernel corresponding to the current block to obtain transform coefficients of the current block, and perform encoding based on the deformation coefficients of the current block to obtain a bitstream.

91. An electronic device, comprising a processor and a memory, wherein

the memory is configured to store a computer program; and
the processor is configured to call and run the computer program stored in the memory, to implement the method according to any one of claims 1 to 41, or 42 to 88.

92. A video coding system, comprising: a video encoder and a video decoder, wherein

the video decoder is configured to implement the method according to any one of claims 1 to 41; and
the video encoder is configured to implement the method according to any one of claims 42 to 88.

93. A computer-readable storage medium, configured to store a computer program, wherein
the computer program causes a computer to perform the method according to any one of claims 1 to 41, or 42 to 88.

Encoding device 110

| Video source 111 | Video encoder 112 | Output interface 113 |

130

Decoding device 120

| Display apparatus 123 | Video decoder 122 | Input interface 121 |

FIG. 1

FIG. 2

EP 4 686 199 A1

FIG. 3

FIG. 4A

FIG. 4B

0 (Vertical)

FIG. 5A

1 (Horizontal)

FIG. 5B

2 (DC)

Mean(A..D,I..L)

FIG. 5C

3

FIG. 5D

4

FIG. 5E

5

FIG. 5F

FIG. 5G

FIG. 5H

FIG. 5I

0: Planar mode
1: DC

FIG. 6

0: Planar mode
1: DC

FIG. 7

FIG. 8

DC: 0
Planar mode: 1
Bilinear mode: 2

FIG. 9

Determine a reference region of a current block and an interpolation filter of the current block, and determine a prediction block of the current block based on the reference region and the interpolation filter ⌇ S101

Determine an intra prediction mode corresponding to the prediction block, and determine a transform kernel corresponding to the current block based on the intra prediction mode corresponding to the prediction block ⌇ S102

Perform inverse transform on transform coefficients of the current block based on the transform kernel corresponding to the current block, to obtain a residual block of the current block, and obtain a reconstructed block of the current block based on the prediction block of the current block and the residual block of the current block ⌇ S103

FIG. 10

Current block H

W

Current picture

FIG. 11

| Top reconstructed region | | Top-right reconstructed region | | Top-left reconstructed region |
| Block to be predicted | Left recons-tructed region | Block to be predicted | Block to be predicted | Block to be predicted |

Bottom-left reconstructed region

FIG. 12

Block to
be
predicted

FIG. 13A

Block to
be
predicted

FIG. 13B

Block to
be
predicted

FIG. 13C

FIG. 14A

FIG. 14B

FIG. 14C

FIG. 14D

FIG. 14E

FIG. 14F

FIG. 14G

FIG. 15

FIG. 16

FIG. 17

FIG. 18A

FIG. 18B

FIG. 19

FIG. 20

FIG. 21

EP 4 686 199 A1

FIG. 22

WAIP mode range(n)-mapping mode

Integer slope mode

Fractal slope mode

FIG. 23

FIG. 24

Gradient magnitude value

Angle direction

FIG. 25

| Determine a reference region of a current block and an interpolation filter of the current block, and determine a prediction block of the current block based on the reference region and the interpolation filter | S201 |

| Determine an intra prediction mode corresponding to the prediction block, and determine a transform kernel corresponding to the current block based on the intra prediction mode corresponding to the prediction block | S202 |

| Transform a residual block of the current block based on the transform kernel corresponding to the current block, to obtain transform coefficients of the current block, and obtain a bitstream by encoding based on the deformation coefficients of the current block | S203 |

FIG. 26

Determine whether a
current block can be
predicted using
interpolation filtering

Yes — No

Obtain filter
coefficients and
predict the current
block

Skip screening of
interpolation filtering
prediction technology

Rough screening of
prediction modes
together with other
intra prediction tools

Select several modes
with small costs for
refined screening, and
determine a final intra
coding mode

FIG. 27

Video decoding apparatus 10

Predication unit 11

Transform unit 12

Decoding unit 13

FIG. 28

Video encoding apparatus 20

Predication unit 21

Transform unit 22

Encoding unit 23

FIG. 29

30

Electronic device

Transceiver 33

31

Memory

Computer program

Processor 32

34

FIG. 30

Video coding system 40

Video encoder 41 ——— Video decoder 42

FIG. 31

## INTERNATIONAL SEARCH REPORT

| International application No. |
| --- |
| **PCT/CN2023/083171** |

**A. CLASSIFICATION OF SUBJECT MATTER**

H04N19/12(2014.01)i; H04N19/117(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, ENTXT, VCN, VEN, IEEE, JVET, CNKI: 插值, 滤波, 梯度, 方向, 帧内预测, 预测模式, 变换核, DCT, DST, 变换, interpolation, filtering, gradient, direction, intra prediction, prediction mode, transform kernel, DCT, DST, transform

**C. DOCUMENTS CONSIDERED TO BE RELEVANT**

| Category* | Citation of document, with indication, where appropriate, of the relevant passages | Relevant to claim No. |
| --- | --- | --- |
| Y | CN 112422991 A (HANGZHOU HIKVISION DIGITAL TECHNOLOGY CO., LTD.) 26 February 2021 (2021-02-26) description, paragraphs 0613-1090 | 1-27, 42-74, 89-93 |
| Y | WO 2022214028 A1 (BEIJING BYTEDANCE NETWORK TECHNOLOGY CO., LTD.; BYTEDANCE INC.) 13 October 2022 (2022-10-13) description, paragraphs 177-366 | 1-27, 42-74, 89-93 |
| Y | KR 20170125155 A (INTELLECTUAL DISCOVERY CO., LTD.) 14 November 2017 (2017-11-14) description, paragraphs 0020-0067, and figure 4 | 19-21, 23-26, 62-66, 68-73 |
| A | WO 2021137445 A1 (HUMAX CO., LTD.; CHOSUN UNIVERSITY) 08 July 2021 (2021-07-08) entire document | 1-93 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 December 2023** | **07 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/083171**

| Patent document cited in search report | | | Publication date (day/month/year) | Patent family member(s) | | | Publication date (day/month/year) |
|---|---|---|---|---|---|---|---|
| CN | 112422991 | A | 26 February 2021 | None | | | |
| WO | 2022214028 | A1 | 13 October 2022 | None | | | |
| KR | 20170125155 | A | 14 November 2017 | KR | 20230126694 | A | 30 August 2023 |
| WO | 2021137445 | A1 | 08 July 2021 | None | | | |

Form PCT/ISA/210 (patent family annex) (July 2022)